(19) Europäisches Patentamt
European Patent Office
Office européen des brevets

(11) EP 3 514 040 A1

(12) EUROPEAN PATENT APPLICATION
published in accordance with Art. 153(4) EPC

(43) Date of publication:
**24.07.2019 Bulletin 2019/30**

(21) Application number: **17905901.9**

(22) Date of filing: **22.11.2017**

(51) Int Cl.:
***B62D 6/00** (2006.01)* ***B62D 5/04** (2006.01)*
***B62D 101/00** (2006.01)* ***B62D 113/00** (2006.01)*
***B62D 117/00** (2006.01)*

(86) International application number:
**PCT/JP2017/042014**

(87) International publication number:
**WO 2019/102543 (31.05.2019 Gazette 2019/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **NSK Ltd.**
**Tokyo 141-8560 (JP)**

(72) Inventors:
- **SAKAGUCHI, Toru**
**Maebashi-Shi**
**Gunma 371-8527 (JP)**
- **KITAZUME, Tetsuya**
**Maebashi-Shi**
**Gunma 371-8527 (JP)**

(74) Representative: **Luten, Martin Haaije et al**
**Arnold & Siedsma**
**Bezuidenhoutseweg 57**
**2594 AC The Hague (NL)**

# (54) CONTROL DEVICE FOR ELECTRIC POWER STEERING DEVICE

(57) [Problem]

An object of the present invention is to provide a control unit for an electric power steering apparatus that constitutes a model following control that an output of a controlled object follows-up to an output of a reference model, eliminates or reduces the occurrences of a noisy sound and a shock force at an end hitting without giving any uncomfortable steering feeling, takes a safety countermeasure against the model following control and suppresses the variation of the control output in a case that the safety countermeasure is excessively operated.

[Means for solving the problem]

A control unit for an electric apparatus that calculates a current command value based on at least a steering torque and performs an assist-control of a steering system by driving a motor based on the current command value, comprising: a configuration of a model following control including a viscoelastic model as a reference model within a predetermined angle at front of a rack end, wherein shift correction is performed against displacement information which is used in the model following control; and wherein rack end hitting is suppressed by limiting a range of a control amount in the model following control by using a limit value which is set based on at least steering velocity.

FIG.27

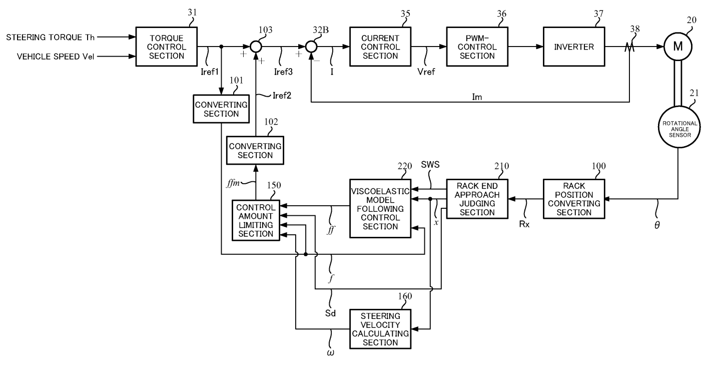




Printed by Jouve, 75001 PARIS (FR)

## Description

Technical Field

The present invention relates to a control unit for an electric power steering apparatus that calculates a current command value based on at least a steering torque, drives a motor by using the current command value, and provides a steering system of a vehicle with an assist torque, and in particular to the control unit for the electric power steering apparatus that sets a viscoelastic model as a reference (normative) model, decreases the assist torque by reducing the current command value near a rack end, decreases a striking energy by attenuating a force at an end hitting time, suppresses a hitting sound (a noisy sound) that a driver feels uncomfortable, and improves a steering feeling.

Background Art

An electric power steering apparatus (EPS) which provides a steering system of a vehicle with an assist torque by means of a rotational torque of a motor, applies a driving force of the motor as the assist torque to a steering shaft or a rack shaft by means of a transmission mechanism such as gears or a belt through a reduction mechanism. In order to accurately generate the assist torque, such a conventional electric power steering apparatus performs a feed-back control of a motor current. The feed-back control adjusts a voltage supplied to the motor so that a difference between a current command value and a detected motor current value becomes small, and the adjustment of the voltage supplied to the motor is generally performed by an adjustment of duty command values of a pulse width modulation (PWM) control.
A general configuration of the conventional electric power steering apparatus will be described with reference to FIG.1. As shown in FIG.1, a column shaft (a steering shaft or a handle shaft) 2 connected to a steering wheel (handle) 1 is connected to steered wheels 8L and 8R through reduction gears 3, universal joints 4a and 4b, a rack-and-pinion mechanism 5, and tie rods 6a and 6b, further via hub units 7a and 7b. In addition, the column shaft 2 is provided with a torque sensor 10 for detecting a steering torque Th of the steering wheel 1, and a motor 20 for assisting a steering force of the steering wheel 1 is connected to the column shaft 2 through the reduction gears 3. The electric power is supplied to a control unit (ECU) 30 for controlling the electric power steering apparatus from a battery 13, and an ignition key signal is inputted into the control unit 30 through an ignition key 11. The control unit 30 calculates a current command value of an assist command on the basis of a steering torque Th detected by the torque sensor 10 and a vehicle speed Vel detected by a vehicle speed sensor 12, and controls a current supplied to the motor 20 by means of a voltage control value Vref obtained by performing compensation or the like to the calculated current command value.
A controller area network (CAN) 40 to send/receive various information and signals on the vehicle is connected to the control unit 30, and it is also possible to receive the vehicle speed Vel from the CAN. Further, a Non-CAN 41 is also possible to connect to the control unit 30, and the Non-CAN 41 sends and receives a communication, analogue/digital signals, electric wave or the like except for the CAN 40.
In such an electric power steering apparatus, the control unit 30 mainly comprises a CPU (Central Processing Unit) (including an MPU (Micro Processing Unit) and an MCU (Micro Controller Unit)), and general functions performed by programs within the CPU are, for example, shown in FIG.2.
Functions and operations of the control unit 30 will be described with reference to FIG.2. The steering torque Th from the torque sensor 10 and the vehicle speed Vel from the vehicle speed sensor 12 are inputted into a torque control section 31 to calculate a current command value Iref1, and the calculated current command value Iref1 is inputted into a subtracting section 32B, where a detected motor current value Im is subtracted from the current command value Iref1. A deviation I (=Iref1-Im) which is the subtracted result in the subtracting section 32B is controlled in the current control section 35 such as a proportional-integral (PI) control and so on. The voltage control value Vref obtained by the current control is inputted into a PWM-control section 36 which calculates duty command values, and PWM-drives the motor 20 through an inverter circuit 37 by means of a PWM signal. The motor current value Im of the motor 20 is detected by a motor current detector 38, and is inputted and fed back to the subtracting section 32B. Further, a rotational angle sensor 21 such as a resolver is connected to the motor 20 and a rotational angle $\theta$ is detected and outputted.
In such the electric power steering apparatus, when a large assist torque from the motor is applied to the steering system near the maximum steering angle (the rack end) thereof, a strong impact (a shock) occurs at a time when the steering system reaches the maximum steering angle, and the driver may feel uncomfortable because of generating the hitting noise (noisy sound) due to the shock.
Accordingly, the electric power steering apparatus that includes a steering angle judging means for judging whether the steering angle of the steering system reaches a front by a predetermined value from the maximum steering angle and a correcting means for correcting which decreases the assist torque by reducing the power supplied to the motor when the steering angle reaches a front by a predetermined value from the maximum steering angle, is disclosed in Japanese Examined Patent Publication No.H6-4417 B2 (Patent Document 1).
Further, the electric power steering apparatus disclosed in Japanese Patent No.4115156 B2 (Patent Document 2) is that: the electric power steering apparatus that judges whether an adjustment mechanism becomes near an end position or not, controls a driving means so as to decrease a steering assist when the adjustment mechanism reaches near the end position, and evaluates an adjustment speed determined by a position sensor in order to determine the speed when the adjustment mechanism approaches to the end position.

The List of Prior Art Documents

Patent Documents

Patent Document 1: Japanese Examined Patent Publication No.H6-4417 B2

Patent Document 2: Japanese Patent No.4115156 B2

Summary of the Invention

Problems to be Solved by the Invention

However, since the electric power steering apparatus disclosed in Patent Document 1 decreases the power when the steering angle reaches a front by a predetermined value from the maximum steering angle and the steering speed or the like is not entirely considered, it is impossible to perform a fine current-decreasing control. In addition, Patent Document 1 does not disclose the characteristics to decrease the assist torque of the motor and a concrete configuration is not shown.

Further, although the electric power steering apparatus disclosed in Patent Document 2 decreases an assist amount toward the end position, it adjusts the decreasing speed of the assist amount in response to a velocity approaching to the end position and sufficiently falls down the speed at the end position. However, Patent Document 2 shows only to vary the characteristic changing in response to the speed and is not subjected based on a physical model. Furthermore, since Patent Document 2 does not perform the feed-back control, there is a fear that the characteristic or the result vary depending on a road surface condition (a load state) .

The present invention has been developed in view of the above-described circumstances, and it is an object of the present invention is to provide a high-performance control unit for an electric power steering apparatus that constitutes a control system based on a physical model, constitutes a model following control that an output (a distance to a rack end) of a controlled object follows-up to an output of a reference model, eliminates or reduces the occurrences of a noisy sound and a shock force at an end hitting without giving any uncomfortable steering feeling to a driver. To provide a control unit for an electric power steering apparatus that takes a safety countermeasure against the model following control and suppresses the variation of the control output in a case that the safety countermeasure is excessively operated by abrupt steering of the driver or the like, is also another object of the present invention.

Means for Solving the Problems

The present invention relates to a control unit for an electric apparatus that calculates a current command value based on at least a steering torque and performs an assist-control of a steering system by driving a motor based on the current command value, the above-described object of the present invention is achieved by that: comprising a configuration of a model following control including a viscoelastic model as a reference model within a predetermined angle at front of a rack end, wherein a shift correction is performed against displacement information which is used in the model following control; and wherein a rack end hitting is suppressed by limiting a range of a control amount in the model following control by using a limit value which is set based on at least steering velocity.

The above-described object of the present invention is efficiently achieved by that: wherein a configuration of the model following control is a feed-back section; or wherein a configuration of the model following control is a feed-forward section; or wherein a configuration of the model following control is a feed-back section and a feed-forward section.

Further, the present invention relates to a control unit for an electric power steering apparatus that calculates a first current command value based on at least a steering torque and performs an assist-control of a steering system by driving a motor based on the first current command value, the above-described object of the present invention is achieved by that: comprising a first converting section that converts the first current command value to a first rack axial force or a first column shaft torque; a rack position converting section that converts a rotational angle of the motor to a judgment rack position; a rack end approach judging section that judges approaching to a rack end based on the judgment rack position, and outputs a rack displacement and a switching signal; a viscoelastic model following control section that includes a shift correcting section which, in a case that the rack displacement is beyond a predetermined first target value and approaches the rack end, corrects the rack displacement based on a change amount which is a difference between the rack displacement and the first target value and outputs a corrected rack displacement, and generates a second rack axial force or a second column shaft torque including a viscoelastic model as a reference model based on the corrected rack displacement and the switching signal; a control amount limiting section that limits the second rack axial force or the second column torque by using an upper-limit value and a lower-limit value which are set to the second rack axial force or the second column shaft torque based on at least steering velocity; and a second converting section that converts the limited second rack axial force or the limited second column shaft torque to a second current command value, wherein rack end hitting is suppressed by adding the second current command value to the first current command value, and performing the assist-control.

The above-described object of the present invention is efficiently achieved by that: wherein a parameter of the reference model is changed by the corrected rack displacement; or wherein the viscoelastic model following control section comprises a feed-forward control section that outputs a third rack axial force or a third column shaft torque by performing a feed-forward control based on the corrected rack displacement, a feed-back control section that outputs a fourth rack axial force or a fourth column shaft torque by performing a feed-back control based on the corrected rack displacement and the first rack axial force or the first column shaft torque, a first switching section that turns-on or turns-off an output of the third rack axial force or the third column shaft torque by the switching signal, a second switching section that turns-on or turns-off an output of the fourth rack axial force or the fourth column shaft torque by the switching signal, and an adding section that adds an output of the second switching section to an output of the first switching section and outputs the second rack axial force or the second column shaft torque; or wherein the feed-forward control section comprises a first differential section that differentiates the corrected rack displacement and outputs a first differential data, and a first dead band processing section that sets a dead band around a zero point to the first differential data or a viscos term data calculated from the first differential data, and wherein the feed-back control section comprises a second differential section that differentiates an error data, which is a difference between a target rack displacement and the corrected rack displacement, and outputs a second differential data, and a second dead band processing section that sets a dead band around a zero point to the second differential data or a differential term data calculated from the second differential data; or wherein the viscoelastic model following control section comprises a feed-forward control section that outputs a third rack axial force or a third column shaft torque by performing a feed-forward control based on the first rack axial force or the first column shaft torque, a feed-back control section that outputs a fourth rack axial force or a fourth column shaft torque by performing a feed-back control based on the corrected rack displacement and the first rack axial force or the first column shaft torque, a first switching section that turns-on or turns-off an output of the third rack axial force or the third column shaft torque by the switching signal, a second switching section that turns-on or turns-off an output of the fourth rack axial force or the fourth column shaft torque by the switching signal, and an adding section that adds an output of the second switching section to an output of the first switching section and outputs the second rack axial force or the second column shaft torque; or wherein the feed-back control section comprises a differential section that differentiates the corrected rack displacement and outputs a differential data, and a dead band processing section that sets a dead band around a zero point to the differential data or a differential term data calculated from the differential data; or wherein a control parameter of the feed-back control section is changed by the corrected rack displacement.

Furthermore, the present invention relates to a control unit for an electric power steering apparatus that calculates a first current command value based on at least a steering torque and performs an assist-control of a steering system by driving a motor based on the first current command value, the above-described object of the present invention is achieved by that : comprising a first converting section that converts the first current command value to a first rack axial force or a first column shaft torque, a rack position converting section that converts a rotational angle of the motor to a judgment rack position, a rack end approach judging section that judges approaching to a rack end based on the judgment rack position, and outputs a rack displacement and a switching signal, a viscoelastic model following control section that comprises a shift correcting section which, in a case that the rack displacement is beyond a predetermined first target value and approaches the rack end, corrects the rack displacement based on a change amount which is a difference between the rack displacement and the first target value and outputs a corrected rack displacement, and generates a second rack axial force or a second column shaft torque including a viscoelastic model as a reference model based on the first rack axial force or the first column shaft torque, the rack displacement, the corrected rack displacement and the switching signal, a control amount limiting section that limits the second rack axial force or the second column torque by using an upper-limit value and a lower-limit value which are set to the second rack axial force or the second column shaft torque based on at least steering velocity, and a second converting section that converts the limited second rack axial force or the limited second column shaft torque to a second current command value, wherein a parameter of the reference model is changed by the rack displacement in a case that the rack displacement is equal to or less than a predetermined second target value, and is constant in a case that the rack displacement is more than the second target value, and wherein rack end hitting is suppressed by adding the second current command value to the first current command value, and performing the assist-control.

The above-described object of the present invention is efficiently achieved by that: wherein the viscoelastic model following control section comprises a feed-forward control section that outputs a third rack axial force or a third column shaft torque by performing a feed-forward control based on the rack displacement, a feed-back control section that outputs a fourth rack axial force or a fourth column shaft torque by performing a feed-back control based on the corrected rack displacement and the first rack axial force or the first column shaft torque, a first switching section that turns-on or turns-off an output of the third rack axial force or the third column shaft torque by the switching signal, a second switching section that turns-on or turns-off an output of the fourth rack axial force or the fourth column shaft torque by the switching signal, and an adding section that adds an output of the second switching section to an output of the first switching section and outputs the second rack axial force or the second column shaft torque; or wherein the viscoelastic model following control section comprises a feed-forward control section that outputs a third rack axial force or a third column shaft torque by performing a feed-forward control based on the first rack axial force or the first column shaft torque, a feed-back control section that outputs a fourth rack axial force or a fourth column shaft torque by performing a feed-back control based on the corrected rack displacement and the first rack axial force or the first column shaft torque, a first switching section that turns-on or turns-off an output of the third rack axial force or the third column shaft torque by the switching signal, a second switching section that turns-on or turns-off an output of the fourth rack axial force or the fourth column shaft torque by the switching signal, and an adding section that adds an output of the second switching section to an output of the first switching section and outputs the second rack axial force or the second column shaft torque; or wherein a control parameter of the feed-back control section is changed by the rack displacement in a case that the rack displacement is equal to or less than a predetermined third target value, and is constant in a case that the rack displacement is more than the third target value; or wherein, in a case that the change amount is equal to or more than a predetermined critical value, the shift correcting section calculates a modification amount, which is a difference between the change amount and the critical value, and wherein the rack end approach judging section modifies the rack displacement by using the modification amount; or wherein the control amount limiting section gradually changes the upper-limit value and the lower-limit value in conjunction with change of the steering velocity; or wherein the upper-limit value and the lower-limit value are set depending on a steering direction; or wherein the upper-limit value and the lower-limit value are set based on the first rack axial force or the first column shaft torque .

Effects of the Invention

Because the control unit for the electric power steering apparatus according to the present invention constitutes a control system based on the physical model, it is possible to easily perform for a constant design. Since the present control unit for the electric power steering apparatus constitutes the model following control so that the output (the distance to the rack end) of the controlled object follows-up to output of the reference model, the present invention has an advantage effect that a robust (tough) end-hitting suppressing-control becomes possible against variations of the load state (external disturbance) and the controlled object.

Further, since a range of the control amount in the model following control is limited based on the steering velocity, uncomfortable feeling due to the excessive control amount can be suppressed. In addition, since the shift correction in the model following control is performed, the excessive response in the control for limiting the control amount against the variation of the steering velocity can be suppressed, and difficulty of the steering can be also reduced.

Brief Description of the Drawings

In the accompanying drawings:

FIG.1 is a configuration diagram illustrating a general outline of an electric power steering apparatus;
FIG.2 is a block diagram showing a general configuration example of a control system of the electric power steering apparatus;
FIG.3 is a block diagram showing a configuration example of an embodiment of a model following control;
FIG.4 is a diagram showing a characteristic example of a rack position converting section;
FIG.5 is a block diagram showing a configuration example (the embodiment of the model following control) of a viscoelastic model following control section;
FIG.6 is a block diagram showing another configuration example (the embodiment of the model following control) of the viscoelastic model following control section;
FIG. 7 is a flowchart showing an operation example (overall) of the embodiment of the model following control;
FIG.8 is a flowchart showing an operation example (the embodiment of the model following control) of the viscoelastic model following control;
FIG. 9 is a schematic diagram of the viscoelastic model;

FIG.10 is a block diagram showing detailed principle of the viscoelastic model following control section;

FIGs.11A, 11B and 11C are block diagrams showing detailed principle of the viscoelastic model following control section;

FIG.12 is a block diagram showing detailed principle of the viscoelastic model following control section;

FIG.13 is a block diagram showing detailed principle of the viscoelastic model following control section;

FIG. 14 is a block diagram showing a detailed configuration example (the embodiment of the model following control) of the viscoelastic model following control section;

FIG.15 is a block diagram showing another detailed configuration example (the embodiment of the model following control) of the viscoelastic model following control section;

FIG. 16 is a graph showing an example for changing parameters of a reference model depending on a rack displacement;

FIG.17 is a flowchart showing an operation example (the embodiment of the model following control) of the viscoelastic model following control;

FIG.18 is a block diagram showing a configuration example of an embodiment of an assist limit control;

FIG.19 is a graph showing a change example of limit values in a high steering maneuver limit setting;

FIG.20 is a graph showing a change example of the limit values in a low steering maneuver-limit setting;

FIG.21 is a block diagram showing a configuration example of a control amount limiting section;

FIG.22 is a graph showing a characteristic example of a high steering maneuver-gain to the steering velocity;

FIG.23 is a graph showing a characteristic example of a low steering maneuver-gain to the steering velocity;

FIG.24 is a flowchart showing an operation example (overall) of the embodiment of the assist limit control;

FIG.25 is a flowchart showing an operation example (the embodiment of the assist limit control) of the viscoelastic model following control;

FIG.26 is a flowchart showing an operation example of a control amount limiting section;

FIG.27 is a block diagram showing a configuration example (the first embodiment) of the present invention;

FIG.28 is a block diagram showing a configuration example (the first embodiment) of the viscoelastic model following control section;

FIG.29 is a block diagram showing a detailed configuration example (the first embodiment) of the viscoelastic model following control section;

FIG.30 is a diagram for explaining a target setting in a shift correcting section;

FIG.31 is a flowchart showing an operation example (the first embodiment) of the viscoelastic model following control;

FIG.32 is a flowchart showing an operation example (the first embodiment) of the shift correction;

FIG.33 is a diagram for explaining effects of the present invention (the first embodiment);

FIG.34 is a diagram for explaining effects of the present invention (the first embodiment);

FIG.35 is a graph showing an example for changing control parameters depending on the rack displacement;

FIG. 36 is a block diagram showing a detailed configuration example (a case of changing the control parameters) of the viscoelastic model following control section;

FIG.37 is a block diagram showing a configuration example (the second embodiment) of the present invention;

FIG. 38 is a block diagram showing a detailed configuration example (the second embodiment) of the viscoelastic model following control section;

FIG.39 is a diagram for explaining start position change of the rack displacement;

FIG.40 is a flowchart showing an operation example (overall) of the present invention (the second embodiment);

FIG.41 is a flowchart showing an operation example (the second embodiment) of the viscoelastic model following control;

FIG.42 is a flowchart showing an operation example (the second embodiment) of the shift correction;

FIG.43 is a block diagram showing a configuration example (the third embodiment) of the present invention;

FIG. 44 is a block diagram showing a detailed configuration example (the third embodiment) of the viscoelastic model following control section;

FIG.45 is a block diagram showing a configuration example (the third embodiment) of a viscos friction coefficient term;

FIG.46 is a characteristic diagram showing an example of a dead band characteristic;

FIG. 47 is a block diagram showing a configuration example (the third embodiment) of a control element section;

FIG.48 is a flowchart showing an operation example (the third embodiment) of the viscoelastic model following control;

FIG.49 is a flowchart showing an operation example (the third embodiment) of a "Cd" calculation and a "$(\mu-\eta) \cdot s$" calculation;

FIG. 50 is a diagram for explaining an effect of the present invention (the third embodiment);

FIG.51 is a block diagram showing a configuration example (the fourth embodiment) of the present invention;

FIG. 52 is a block diagram showing a detailed configuration example (the fourth embodiment) of the viscoelastic model following control section;

FIG. 53 is a graph showing an example (the fourth embodiment) for changing the parameters of the reference model depending on the rack displacement; and
FIG. 54 is a graph showing an example (the fourth embodiment) for changing the control parameters depending on the rack displacement.

Mode for Carrying Out the Invention

A control unit for an electric power steering apparatus according to the present invention constitutes a control system based on a physical model near a rack end, sets a viscoelastic model (a spring constant and a viscous friction coefficient) as a reference (normative) model, constitutes a model following control so that an output (a distance to the rack end) of a controlled object follows-up to output of the reference model, prevents from an occurrence of a noisy sound at an end hitting time without giving a steering uncomfortable feeling to a driver, and attenuates a shock force.
The model following control comprises a viscoelastic model following control section, and the viscoelastic model following control section comprises a feed-forward section or a feed-back control section, or a feed-forward control section and a feed-back control section. The viscoelasticmodel following control section performs a normal assist-control out of a predetermined angle at front of the rack end, and performs the model following control within the predetermined angle at the front of the rack end so as to suppress the rack end hitting.
Further, an assist force is outputted to balance a sum of a hand input of the driver and a counter force from tires so that a virtual rack end exists. Namely, in order not to progress the handle even if the steering arrives at the rack end when the driver turns the handle, the assist force is outputted so as to balance the sum of the hand input and the counter force from the tires (In a case that the friction between the tires and a road surface is extremely small, the sum is only the hand input of the driver). However, in this case, since the assist is performed to the reverse direction against the steering direction of the driver, the maximum value of the assist force due to a maximum limiting process is limited, considering a safety. Similarly, even in a case that the assist is performed to the same direction as the steering direction of the driver, the maximum value of the assist force is also limited.
In limiting the maximum value of the assist force, a limit process is performed depending on a steering velocity so as to perform a flexible response. For example, when the steering velocity is high, the control is to be a virtual rack end, strongly. When the steering velocity is low, the limit of the control amounts is enhanced so as to improve the safety. Concretely, the limit setting in a case that the steering velocity is high (hereinafter referred to as "a high steering maneuver-limit setting") and the limit setting in a case that the steering velocity is low (hereinafter referred to as "a low steering maneuver-limit setting") are prepared, and the limit that the high steering maneuver-limit setting and the low steering maneuver-limit setting are gradually switched depending on the steering velocity is performed. When the steering velocity is low and the limit of the control amount is enhanced, the driver who has an intension steers the handle, and the steering can move to a rack end direction . Moreover, there is a possibility that the setting is switched to the high steering maneuver-limit setting or the like, that is, there is a possibility that the limit of the control amount to the variation of the steering velocity is badly affected, and a shift correction is performed to displacement information used in the model following control in order to avoid the above circumstances.
Hereinafter, embodiments of the present invention will be described with reference to the accompanying drawings.
As described above, the preset invention performs the model following control, the control for the limit of the maximum value of the assist force depending on the steering velocity (hereinafter referred to as "assist limit control") and the control of the shift correction to the displacement information (hereinafter referred to as "shift correction control") . In order to easily understand the explanation, at first, the embodiment that performs only the model following control (hereinafter referred to as "the embodiment of the model following control") will be explained. Next, the embodiment that the assist limit control is combined with the embodiment of the model following control (hereinafter referred to as "the embodiment of the assist limit control") will be explained. Considering the above explanations, the embodiment of the present invention with which the shift correction control is combined will be explained.
At first, the embodiment of the model following control will be described. FIG.3 shows a configuration example of the embodiment of the model following control corresponding to FIG. 2, a current command value Iref1 is converted to a rack axial force f in a converting section 101, and the rack axial force f is inputted into a viscoelastic model following control section 120. Although the rack axial force f is equivalent to a column shaft torque, the column shaft torque is conveniently considered as the rack axial force in the following explanation. The same configurations as those of FIG. 2 are designated with the same numerals of FIG. 2, and an explanation is omitted.
A conversion from the current command value Iref1 to the rack axial force f is performed based on the following Expression 1.

$$f = G1 \times Iref1$$

where, "Kt" is a torque constant [Nm/A], "Gr" is a reduction ratio, "Cf" is a stroke ratio [m/rev.], and "G1=Kt×Gr×(2π/Cf)".

A rotational angle θ from a rotational angle sensor 21 is inputted into a rack position converting section 100 and is converted to a judgement rack position Rx. The judgement rack position Rx is inputted into a rack end approach judging section 110. As shown in FIG.4, the rack end approach judging section 110 activates an end-hitting suppressing control function and outputs the rack displacement x, which is the displacement information, and a switching signal SWS when the judgement rack position Rx is judged within a predetermined position $x_0$. The switching signal SWS and the rack displacement x are inputted into the viscoelastic model following control section 120 together with the rack axial force f. A rack axial force ff, which is control-calculated in the viscoelastic model following control section 120, is converted to a current command value Iref2 in a converting section 102. The current command value Iref2 is added to the current command value Iref1 in an adding section 103, and the added value is obtained as a current command value Iref3. The above described assist-control is performed based on the current command value Iref3.

As well, the predetermined position $x_0$ which sets a rack end approach region as shown in FIG. 4 enables to set an appropriate position. Although the rotational angle θ is obtained from the rotational angle sensor 21 that is coupled to the motor 20, it may be obtained from a steering angle sensor.

The conversion from the rack axial force ff to the current command value Iref2 in the converting section 102 is performed based on the below Expression 2.

[Expression 2]

$$Iref2 = ff/G1$$

The detail of the viscoelastic model following control section 120 is shown in FIG.5 or FIG.6.

In FIG.5, the rack axial force f is inputted into a feed-forward control section 130 and a feed-back control section 140, and the rack displacement x is inputted into the feed-back control section 140. A rack axial force FF from the feed-forward control section 130 is inputted into a switching section 121, and a rack axial force FB from the feed-back control section 140 is inputted into a switching section 122. The switching sections 121 and 122 are turned-on or turned-off with the switching signal SWS. When the switching sections 121 and 122 are turned-off with the switching signal SWS, each of outputs $u_1$ and $u_2$ is zero. When the switching sections 121 and 122 are turned-on with the switching signal SWS, the rack axial force FF from the switching section 121 is outputted as a rack axial force $u_1$ and the rack axial force FB from the switching section 122 is outputted as a rack axial force $u_2$. The rack axial forces $u_1$ and $u_2$ from the switching section 121 and 122 are added in the adding section 123, and a rack axial force of the added value ff is outputted from the viscoelastic model following control section 120. The rack axial force ff is converted to the current command value Iref2 in the converting section 102.

Further, in FIG.6, the rack displacement x is inputted into a feed-forward control section 130 and a feed-back control section 140, and the rack axial force f is inputted into the feed-back control section 140. The following process is the same as that of a case of FIG. 5, the rack axial force FF from the feed-forward control section 130 is inputted into the switching section 121, and the rack axial force FB from the feed-back control section 140 is inputted into the switching section 122. The switching sections 121 and 122 are turned-on or turned-off with the switching signal SWS. When the switching sections 121 and 122 are turned-off with the switching signal SWS, each of outputs $u_1$ and $u_2$ is zero. When the switching sections 121 and 122 are turned-on with the switching signal SWS, the rack axial force FF from the switching section 121 is outputted as the rack axial force $u_1$ and the rack axial force FB from the switching section 122 is outputted as the rack axial force $u_2$. The rack axial forces $u_1$ and $u_2$ from the switching section 121 and 122 are added in the adding section 123, and a rack axial force of the added value ff is outputted from the viscoelastic model following control section 120. The rack axial force ff is converted to the current command value Iref2 in the converting section 102.

In the above structures, an overall operation example of the embodiment of the model following control is described with reference to a flowchart of FIG.7, and then an operation example of the viscoelastic model following control is described with reference to a flowchart of FIG.8.

In a start stage, the switching sections 121 and 122 are turned-off with the switching signal SWS. When the operation is started, the torque control section 31 calculates the current command value Iref1 based on the steering torque Th and the vehicle speed Vel (Step S10), and the rack position converting section 100 converts the rotational angle θ from the rotational angle sensor 21 to the judgement rack position Rx (Step S11). The rack end approach judging section 110 judges whether the rack position approaches near the rack end based on the judgement rack position Rx or not (Step S12). In a case that the rack position is not near the rack end, the rack axial force ff from the viscoelastic model following control section 120 is not outputted and normal steering control based on the current command value Iref1 is performed (Step S13). This control is continued to the end (Step S14).

On the other hand, in a case that the rack position is near the rack end, the viscoelastic model following control is performed in the viscoelastic model following control section 120 (Step S20). That is, as shown in FIG.8, the rack end approach judging section 110 outputs the switching signal SWS (Step S201) and the rack displacement x (Step S202). The converting section 101 converts the current command value Iref1 to the rack axial force f by using the Expression 1 (Step S203) . In the embodiment shown in FIG. 5, the feed-forward control section 130 performs the feed-forward control based on the rack axial force f (Step S204), and the feed-back control section 140 performs the feed-back control based on the rack displacement x and the rack axial force f (Step S205) . Further, in the embodiment shown in FIG. 6, the feed-forward control section 130 performs the feed-forward control based on the rack displacement x (Step S204), and the feed-back control section 140 performs the feed-back control based on the rack displacement x and the rack axial force f (Step S205). In both cases, the order of the feed-forward control and the feed-back control may be alternated.

The switching signal SWS from the rack end approach judging section 110 is inputted into the switching sections 121 and 122, and the switching sections 121 and 122 are turned-on (Step S206) . When the switching sections 121 and 122 are turned-on, the rack axial force FF from the feed-forward control section 130 is outputted as the rack axial force $u_1$ and the rack axial force FB from the feed-back control 140 is outputted as the rack axial force $u_2$. The rack axial forces $u_1$ and $u_2$ are added in the adding section 123 (Step S207), and then the rack axial force ff which is the added result is converted to the current converting value Iref2 in the converting section 102 by using the above Expression 2 (Step S208).

The viscoelastic model following control section 120 is a control system based on the physical model near the rack end, constitutes the model following control which sets the viscoelastic model (a spring constant $k_0$ [N/m] and a viscous friction coefficient $\mu$ [N/(m/s)]) as the reference model (input: a force and output: the physical model which is described in the displacement), and prevents from hitting to the rack end.

FIG.9 is a schematic diagram near the rack end, and a relationship between mass m and forces $F_0$ and $F_1$ is represented by the Expression 3. The derivation of the expressions of the viscoelastic model is described in, for example, "Elementary Mechanics for Elastic Membrane and Viscoelasticity" (Kenkichi OHBA) of "Engineering Sciences & Technology", Kansai University, official journal of a scientific society, Vol.17 (2010).

[Expression 3]

$$F = m\ddot{x} + F_0 + F_1$$

Assuming that spring constants $k_0$ and $k_1$ are defined for the rack displacements $x_1$ and $x_2$, respectively, and then the following Expressions 4 to 6 are established.

[Expression 4]

$$x = x_1 + x_2$$

[Expression 5]

$$F_0 = k_0 x$$

[Expression 6]

$$F_1 = \mu_1 \frac{dx_1}{dt} = k_1 x_2$$

Therefore, the Expression 7 is obtained by substituting the Expressions 4 to 6 into the Expression 3.

[Expression 7]

$$\begin{aligned} F &= m\ddot{x} + k_0 x + k_1 x_2 \\ &= m\ddot{x} + k_0 x + k_1 (x - x_1) = m\ddot{x} + (k_0 + k_1) x - k_1 x_1 \end{aligned}$$

The Expression 8 is a result that the Expression 7 is differentiated, and then the Expression 9 is obtained by multiplying the Expression 8 with "$\mu_1/k_1$".

[Expression 8]

$$\dot{F} = m\dddot{x} + (k_0 + k_1)\dot{x} - k_1\dot{x}_1$$

[Expression 9]

$$\frac{\mu_1}{k_1}\dot{F} = \frac{\mu_1}{k_1}m\dddot{x} + \frac{\mu_1}{k_1}(k_0 + k_1)\dot{x} - \mu_1\dot{x}_1$$

Then, the below Expression 10 is obtained by adding the above Expressions 7 and 9.

$$F + \frac{\mu_1}{k_1}\dot{F} = m\ddot{x} + \frac{\mu_1}{k_1}m\dddot{x} + (k_0 + k_1)x - k_1x_1 + \frac{\mu_1}{k_1}(k_0 + k_1)\dot{x} - \mu_1\dot{x}_1$$

The expression 11 is obtained by substituting the Expressions 4 and 6 to the Expression 10.

[Expression 11]

$$F + \frac{\mu_1}{k_1}\dot{F} = m\ddot{x} + \frac{\mu_1}{k_1}m\dddot{x} + k_0x + \mu_1(1 + k_0/k_1)\dot{x}$$

Here, "$\mu_1/k_1=\tau_e$", "$k_0=E_r$" and "$\mu_1(1/k_0+1/k_1)=\tau_\delta$" are assumed, the above Expression 11 can be expressed by the Expression 12. The Expression 13 is obtained by performing Laplace transform to the Expression 12.

[Expression 12]

$$F + \tau_e\dot{F} = \tau_e m\dddot{x} + m\ddot{x} + E_r(x + \tau_\delta\dot{x})$$

[Expression 13]

$$(1+\tau_e s)F(s) = \{\tau_e m s^3 + m s^2 + E_r(1+\tau_\delta s)\}X(s)$$

The Expression 14 is obtained by summarizing the Expression 13 with "X(s)/F(s)".

[Expression 14]

$$\frac{X(s)}{F(s)} = \frac{1+\tau_e s}{\tau_e m s^3 + m s^2 + E_r(1+\tau_\delta s)}$$

The Expression 14 represents a third order physical model (transfer function) which indicates the characteristic from the input force f to the output displacement x. When the spring with the spring constant "$k_1=\infty$" is used, "$\tau_e \to 0$" is satisfied. Because of "$\tau_\delta=\mu_1\cdot 1/k_0$", the Expression 15 which is a quadratic function is derived.

[Expression 15]

$$\frac{X(s)}{F(s)} = \frac{1}{m\cdot s^2 + \mu_1\cdot s + k_0}$$

The quadratic function represented by the Expression 15 as the reference model Gm is described in the present invention. That is, a function represented by the Expression 16 is the reference model Gm. Here, "$\mu_1$" is equal to "$\mu$" ($\mu_1=\mu$).

[Expression 16]

$$Gm = \frac{1}{m \cdot s^2 + \mu \cdot s + k_0}$$

Next, an actual plant 146 of the electric power steering apparatus is represented by "P" which is denoted by the below Expression 17. Then, when the reference model following control according to the present invention is designed by a two-degree-of-freedom control system, the system is a configuration of FIG.10 expressed as actual models Pn and Pd. A block 143 (Cd) shows a control element section. (refer to, for example, Hajime MAEDA and Toshiharu SUGIE, "System Control Theory for Advanced Control", published by Asakura Shoten in Japan)

[Expression 17]

$$P = \frac{Pn}{Pd} = \frac{N}{D} = \frac{1}{m \cdot s^2 + \eta \cdot s}$$

In order to express the actual plant P with a ratio of a stable rational function, N and D are represented by the following Expression 18. A numerator of "N" is that of "P", and a numerator of "D" is a denominator of "P". However, "$\alpha$" is determined such that a pole of "(s+$\alpha$)=0" can be selected arbitrary.

[Expression 18]

$$N = \frac{1}{(s+\alpha)^2}, \qquad D = \frac{m \cdot s^2 + \eta \cdot s}{(s+\alpha)^2}$$

When the reference model Gm is applied to the configuration of FIG. 10, it is necessary to set "1/F" as the following Expression 19 in order to satisfy "x/f=Gm". As well, the Expression 19 is derived from the Expressions 16 and 18.

[Expression 19]

$$\frac{1}{F} = GmN^{-1} = \frac{(s+\alpha)^2}{m \cdot s^2 + \mu \cdot s + k_0}$$

A block N/F of the feed-back control section is represented by the following Expression 20.

[Expression 20]

$$\frac{N}{F} = \frac{1}{m \cdot s^2 + \mu \cdot s + k_0}$$

A block D/F of the feed-forward control section is represented by the following Expression 21.

[Expression 21]

$$\frac{D}{F} = \frac{m \cdot s^2 + \eta \cdot s}{m \cdot s^2 + \mu \cdot s + k_0}$$

In an example of the two-degree-of-freedom control system shown in FIG. 10, an input (the current command value corresponding to the rack axial force or the column axial torque) u to the actual plant P is represented by the following Expression 22.

[Expression 22]

$$u = u_1 + u_2 = \frac{D}{F} f + C_d e = \frac{D}{F} f + \left( \frac{N}{F} f - x \right) C_d$$

Further, an output (the rack displacement) x of the actual plant P is represented by the following Expression 23.

[Expression 23]

$$x = uP = P \frac{D}{F} f + P \left( \frac{N}{F} f - x \right) C_d = P \frac{D}{F} f + P \frac{N}{F} C_d f - PC_d x$$

When the Expression 23 is summarized and arranged the term of the output x to the left-hand side and the term of "f" to the right-hand side, the following Expression 24 is derived.

[Expression 24]

$$\left(1 + PC_d\right) x = P \left( \frac{D}{F} + \frac{N}{F} C_d \right) f$$

The following Expression 25 is obtained by expressing the Expression 24 as the transfer function of the output x against the input f. Here, the actual plant P is expressed as "P=Pn/Pd" after the third term.

[Expression 25]

$$\frac{x}{f} = \frac{P \left( \frac{D}{F} + \frac{N}{F} C_d \right)}{1 + PC_d} = \frac{\frac{Pn}{Pd} \left( \frac{D}{F} + \frac{N}{F} C_d \right)}{1 + \frac{Pn}{Pd} C_d} = \frac{\frac{D}{F} + \frac{N}{F} C_d}{\frac{Pd}{Pn} + C_d} = \frac{Pn}{F} \frac{NC_d + D}{PnC_d + Pd}$$

If the actual plant P is correctly expressed, it is possible to obtain the relations "Pn=N" and "Pd=D". The following Expression 26 is obtained from the Expression 25 since the characteristics of the output x against the input f is represented as "Pn/F (=N/F)".

[Expression 26]

$$\frac{x}{f} = \frac{Pn}{F} \frac{PnC_d + Pd}{PnC_d + Pd} = \frac{Pn}{F}$$

The characteristic of the output x against the input f (the reference model (the transfer function)) is considered as the below Expression 27.

[Expression 27]

$$\frac{x}{f} = \frac{\omega_n^{\ 2}}{s + 2\zeta \omega_n s + \omega_n^{\ 2}}$$

Then, it is possible to achieve the Expression 26 by putting "1/F" to the below expression 28.

[Expression 28]

$$\frac{1}{F} = \frac{\omega_n^{\ 2}}{s + 2\zeta\omega_n s + \omega_n^{\ 2}} Pn^{-1}$$

In FIG.10, when the feed-forward control system is considered as a path of "a block 144 → the actual plant P", this system is expressed as FIGs.11A, 11B and 11C. Here, considering P as N/D (P=N/D), FIG.11A can be expressed as FIG.11B, and then FIG. 11C is obtained by using the Expression 20. Since an expression "f=(m·s$^2$+μ·s+k$_0$)x" is satisfied from FIG.11C, the following Expression 29 is obtained by performing an inverse Laplace transform to the expression "f=(m·s$^2$+μ·s+k$_0$)x".

[Expression 29]

$$f = m\ddot{x} + \mu\dot{x} + k_0 x$$

On the other hand, considering a transfer function block of the feed-forward control system as shown in FIG. 12, the following Expression 30 is satisfied in the input f and the output x.

[Expression 30]

$$\left\{f - (\mu - \eta)\cdot s \cdot x - k_0 x\right\}\frac{1}{m\cdot s^2 + \eta\cdot s} = x$$

The following Expression 31 is obtained by summarizing the Expression 30, and the following Expression 32 is derived by summarizing the Expression 31 with respect to the input f.

[Expression 31]

$$f - \left\{(\mu - \eta)\cdot s + k_0\right\}\cdot x = \left(m\cdot s^2 + \eta\cdot s\right)x$$

[Expression 32]

$$f = \left\{m\cdot s^2 + (\mu - \eta + \eta)\cdot s + k_0\right\}\cdot x$$

The above Expression 29 is obtained by performing the inverse Laplace transform on the Expression 32. Consequently, the feed-forward control sections A and B are equivalent each other as shown in FIG.13.

Considering the above-described premise, concrete configuration examples of the viscoelastic model following control section will be described with reference to FIG.14 and FIG.15. FIG. 14 is corresponding to the embodiment shown in FIG. 5, the rack axial force f is inputted into the feed-forward element 144 ("D/F" shown in the Expression 21) in the feed-forward control section 130 and the feed-back control section 140, and the rack displacement x is inputted into the feed-back control section 140. Further, FIG. 15 is corresponding to the embodiment shown in FIG. 6, the rack displacement x is inputted into the spring constant term 131 and the viscous friction coefficient term 132 in the feed-forward control section 130, and the rack axial force f is inputted into the feed-back control section 140.

In FIG. 14, the rack axial force FF is inputted into a contact point b1 of the switching section 121. Further, in FIG.15, an output of the spring constant term 131 and an output of the viscous friction coefficient term 132 are subtracted at a subtracting section 133, the rack axial force FF of the subtracted result is inputted into a contact point b1 of the switching section 121. A fixed value "0" from the fixing section 125 is inputted into a contact point a1 of the switching section 121.

The feed-back control section 140 comprises the feed-back element (N/F) 141, the subtracting section 142 and the control element section 143 in any of the embodiment of FIG.14 and the embodiment of FIG.15, the rack axial force FB from the feed-back control section 140, that is, the output of the control element section 143 is inputted into the contact point b2 of the switching section 122. The fixed value "0" from the fixing section 126 is inputted into the contact point a2 of the switching section 122.

In the embodiment of FIG.14, the rack axial force f is inputted into the feed-forward element 144 in the feed-forward control section 130 as well as the feed-back element (N/F) 141 in the feed-back control section 140. The rack displacement x is subtracting-inputted into the subtracting section 142 in the feed-back control section 140 and the parameter setting section 124. The parameter setting section 124 outputs the spring constant $k_0$ and the viscous friction coefficient $\mu$ of characteristics as shown in FIG. 16 corresponding to the rack displacement x, and the spring constant $k_0$ and the viscous friction coefficient $\mu$ are respectively inputted into the feed-forward element 144 in the feed-forward control section 130 as well as the feed-back element (N/F) 141 in the feed-back control section 140.

In the embodiment of FIG.15, the rack displacement x is inputted into the spring constant term 131 and the viscous friction coefficient term 132 and the subtracting section 142 in the feed-back control section 140 as well as the parameter setting section 124. The rack axial force f is inputted into the feed-back element (N/F) 141 in the feed-back control section 140. The parameter setting section 124 outputs the spring constant $k_0$ and the viscous friction coefficient $\mu$ described-above corresponding to the rack displacement x, and the spring constant $k_0$ is inputted into the spring constant term 131 and the feed-back element (N/F) 141 and the viscous friction coefficient $\mu$ is inputted into the viscous friction coefficient term 132 and the feed-back element (N/F) 141.

Further, the switching signal SWS is inputted into the switching sections 121 and 122 in any of the embodiments, the contact points of the switching sections 121 and 122 are normally connected to the contact points a1 and a2 respectively and are switched to the contact points b1 and b2.

In such the configuration, the operation example of the embodiment of FIG. 15 will be described with reference to a flowchart of FIG.17.

The switching signal SWS is outputted from the rack end approach judging section 110 (Step S21), and the rack displacement x is outputted (Step S22). The rack displacement x is inputted into the spring constant term 131, the viscous friction coefficient term 132, the parameter setting section 124 and the subtracting section 142. The parameter setting section 124 sets the spring constant $k_0$ and the viscous friction coefficient $\mu$ obtained in accordance with the characteristics shown in FIG.16 in the spring constant term 131, the viscous friction coefficient term 132 and the feed-back element (N/F) 141 (Step S23). Further, the converting section 101 converts the current command value Iref1 to the rack axial force f (Step S23A), and the rack axial force f is inputted into the feed-back element (N/F) 141 and then is N/F-calculated (Step S24). The N/F-calculated value is adding-inputted into the subtracting section142 and then the rack displacement x is subtracted (Step S24A), and the subtracted result is Cd-calculated at the control element section 143 (Step S24B) . The calculated rack axial force FB is outputted from the control element section 143 and then is inputted into the contact point b2 of the switching section 122.

The viscous friction coefficient term 132 in the feed-forward control section 130 performs a calculation "$(\mu-\eta) \cdot s$" based on the viscous friction coefficient $\mu$ (Step S25), and sets the spring constant $k_0$ in the spring constant term 131 (Step S25A) . The subtracting section 133 performs a subtraction of the output of the spring constant $k_0$ and the output "$(\mu-\eta) \cdot s$" (Step S25B) and outputs the rack axial force FF as the subtracted result. The rack axial force FF is inputted into the contact point b1 of the switching section 121. Besides, the calculation order of the feed-forward control section 130 and the feed-back control section 140 may be alternated.

The switching signal SWS from the rack end approach judging section 110 is inputted into the switching sections 121 and 122, and the contact points a1 and a2 of the switching sections 121 and 122 are respectively switched to the contact points b1 and b2. The rack axial forces $u_1$ and $u_2$ from the switching sections 121 and 122 are added at the adding section 123 (Step S26), and the rack axial force ff being the added result is converted to the current command value Iref2 at the converting section 102 (Step S26A). The current command value Iref2 is inputted into the adding section 103 and then is added to the current command value Iref1 (Step S27) so that the steering control is performed and returns to the Step S14.

As well, the control element section 143 (Cd) may be any of a PID (Proportional-Integral-Differential)-control, a PI-control, or a PD control. Further, only portions (elements) that the rack axial force f and a rack displacement x input are different, and operations of the embodiment shown in FIG.14 are the same as that of the embodiment shown in FIG.15. In the embodiment of FIG.14 and the embodiment of FIG.15, although the both control calculations of the feed-forward control section 130 and the feed-back control section 140 are performed, the configuration of only the feed-forward control section 130 or the configuration of only the feed-back control section 140 may be adopted.

Next, the embodiment of the assist limit control will be described. Hereinafter, the rack axial force (and the column axial torque) is considered as being set to a positive value when the handle is turned to the right (hereinafter referred to as "right turning steering"), and being set to a negative value when the handle is turned to the left (hereinafter referred to as "left turning steering").

FIG.18 shows a configuration example of the embodiment of the assist limit control corresponding to FIG. 3. In comparison with the embodiment of the model following control as shown in FIG. 3, a control amount limiting section 150 and a steering velocity calculating section 160 are added, and the rack end approach judging section 110 is replaced by a rack end approach judging section 210.

The rack end approach judging section 210 outputs a direction signal Sd that indicates a steering direction of the handle other than the rack displacement x and the switching signal SWS. The steering direction is judged based on the judgment rack position Rx that is inputted into the rack end approach judging section 210, and the direction signal Sd that is set to "right turning" in a case of right turning steering and is set to "left turning" in a case of left turning steering, is outputted.

The steering velocity calculating section 160 calculates the steering velocity ω by differentiating the rack displacement x outputted from the rack end approach judging section 210.

The control amount limiting section 150 limits the maximum value and the minimum value of the rack axial force ff (control amount) which is outputted from the viscoelastic model following control section 120, based on the direction signal Sd, the rack axial force f converted from the current command value Iref1, and the steering velocity ω. Limit values that indicate an upper-limit value and a lower-limit value to the rack axial force ff, are set for limiting. The limit values in a case of the right turning steering and the limit values in a case of the left turning steering are individually set. Further, in order to set more appropriate limit values, the limit values are set based on the rack axial force. Moreover, the high steering maneuver-limit setting when the steering velocity is high and the low steering maneuver-limit setting when the steering velocity is low are prepared, and the both settings are gradually switched depending on the steering velocity ω. Concretely, in order to enhance the control so as to be the virtual rack end in the high steering maneuver-limit setting, for example, in a case of the right turning steering, the upper-limit value (hereinafter referred to as "right turning upper-limit value") RU1 is set to a value which adds a predetermined value Fx1 (for example, 2 [Nm] (Newton meter)) to the rack axial force f as the following expression 33, and the lower-limit value (hereinafter referred to as "right turning lower-limit value") RL1 is set to a value which subtracts a predetermined value Fx2 (for example, 10 [Nm]) from a sign-inverted value of the rack axial force f as the following expression 34.

[Expression 33]

$$RU1 = f + Fx1$$

[Expression 34]

$$RL1 = -f - Fx2$$

In a case of left turning steering, the upper-limit value (hereinafter referred to as "left turning upper-limit value") LU1 and the lower-limit value (hereinafter referred to as "left turning lower-limit value") LL1 are set to values which exchange the upper-limit value and the lower-limit value in a case of the right turning steering. Thus, the following expressions 35 and 36 are established.

[Expression 35]

$$LU1 = -f + Fx2$$

[Expression 36]

$$LL1 = f - Fx1$$

For example, in a case that the rack axial force f varies to the steering angle as indicated by dotted lines in FIG.19, and the limit values vary as indicated by solid lines in FIG.19.

In order to improve the safety by strongly limiting the control amount in the low steering maneuver-limit setting, for example, in calculating the right turning lower-limit value and the left turning upper-limit value, the addition and the subtraction of the predetermined value are alternated in a case of the high steering maneuver-limit setting. However, in order not to add the assist force of the reverse direction, the right turning lower-limit value is not more than zero and the left turning upper-limit value is not below zero. Thus, the right turning upper-limit value RU2 is set to a value which adds a predetermined value Fx3 (for example, 2 [Nm]) to the rack axial force f as the following Expression 37, and the right turning lower-limit value RL2 is set to a value which subtracts a predetermined value Fx4 (for example, 5 [Nm]) from the sign-reversed value of the rack axial force f as the following Expression 38. When the right turning lower-limit value RL2 is more than zero, the right turning lower-limit value RL2 is set to zero.

[Expression 37]

$$RU2 = f + Fx3$$

[Expression 38]

$$RL2 = - f + fx4$$

The left turning upper-limit value LU2 and the left turning lower-limit value LL2 are set to values which exchange the right turning upper-limit value RU2 for the right turning lower-limit value RL2 as following Expressions 39 and 40. When the left turning upper-limit value LU2 is below zero, the left turning upper-limit value LU2 is set to zero.

[Expression 39]

$$LU2 = - f - Fx4$$

[Expression 40]

$$LL2 = f - Fx3$$

For example, in a case that the rack axial force f varies to the steering angle as indicated by dotted lines in FIG. 20, and the limit-values vary as indicated by solid lines in FIG.20.

In order to gradually perform the switching of the high steering maneuver-limit setting and the low steering maneuver-limit setting depending on the steering velocity ω, the respective limit values, which are set in the high steering maneuver-limit setting, are multiplied with a high steering maneuver gain and the respective limit values, which are set in the low steering maneuver-limit setting, are multiplied with a low steering maneuver gain. The respective multiplied values in the high steering maneuver-limit setting is added to the respective multiplied value in the low steering maneuver-limit setting. The respective added values are set as the respective limit values.

FIG. 21 shows a configuration example shows a configuration example of the control amount limiting section 150. The control amount limiting section 150 comprises a high steering maneuver limit-value calculating section 151, a low steering maneuver limit-value calculating section 152, a high steering maneuver-gain section 153, a low steering maneuver-gain section 154, a limiting section 155 and adding sections 156 and 157.

The high steering maneuver limit-value calculating section 151 calculates the upper-limit value UPH and the lower-limit value LWH in the high steering maneuver-limit setting by using the direction signal Sd and the rack axial force f. That is, in a case that the direction signal Sd is "right turning", the right turning upper-limit value RU1 calculated from the Expression 33 is set as the upper-limit value UPH, and the right turning lower-limit value RL1 calculated from the Expression 34 is set as the lower-limit value LWH. In a case that the direction signal Sd is "left turning", the left turning upper-limit value LU1 calculated from the expression 35 is set as the upper-limit value UPH, and the left turning lower-limit value LL1 calculated from the Expression 36 is set as the lower-limit value LWH.

The low steering maneuver limit-value calculating section 152 calculates the upper-limit value UPL and the lower-limit value LWL in the low steering maneuver-limit setting by using the direction signal Sd and the rack axial force f. That is, in a case that the direction signal Sd is "right turning", the right turning upper-limit value RU2 calculated from the Expression 37 is set as the upper-limit value UPL, and the right turning lower-limit value RL2 calculated from the Expression 38 is set as the lower-limit value LWL. When the lower-limit value LWL is more than zero, the lower-limit value LWL is set to zero. In a case that the direction signal Sd is "left turning", the left turning upper-limit value LU2 calculated from the Expression 39 is set as the upper-limit value UPL, and the left turning lower-limit value LL2 calculated from the expression 40 is set as the lower-limit value LWL. When the upper-limit value UPL is below zero, the upper-limit value UPL is set to zero.

The high steering maneuver-gain section 153 calculates the upper-limit value UPHg and the lower-limit value LWHg by multiplying the upper-limit value UPH and the lower-limit value LWH with the high steering maneuver gain GH having a characteristic to the steering velocity ω, for example, shown in FIG.22, respectively. The characteristic of the high steering maneuver gain GH shown in FIG. 22 is 0% in a case that the steering velocity ω is less than a predetermined steering velocity ω1, linearly increases to the steering velocity ω in a case that the steering velocity ω is equal to or more than the predetermined steering velocity ω1 and is equal to or less than a predetermined steering velocity ω2 (ω2 > ω1), and is 100% in a case that the steering velocity ω is more than the predetermined steering velocity ω2.

The low steering maneuver-gain section 154 calculates the upper-limit value UPLg and the lower-limit value LWLg by multiplying the upper-limit value UPL and the lower-limit value LWL with the low steering maneuver gain GL having a characteristic to the steering velocity ω, for example, shown in FIG. 23, respectively. The characteristic of the low steering maneuver gain GL shown in FIG. 23 has a reverse characteristic of the high steering maneuver gain GH shown in FIG.22.

The adding section 156 adds the upper-limit value UPLg to the upper-limit value UPHg, and calculates the upper-limit value UP. The adding section 157 adds the lower-limit value LWLg to the upper-limit value LWHg, and calculates the lower-limit value LW.

The limiting section 155 limits the rack axial force ff by using the upper-limit value UP and the lower-limit value LW.

In such a configuration, the operation example of the embodiment of the assist limit control will be described with reference to the flowcharts of FIGs.24 to 26.

FIG. 24 shows the flowchart of the overall operation example. Compared with the flowchart of FIG. 7, the output of the direction signal Sd (Step S11A) is added, the processes in the control amount limiting section 150 and the steering velocity calculating section 160 are added in the process of the normal steering (Step S13) and the process of the viscoelastic model following control (Step S20), and the processes (Steps S13A and S20A) are modified.

In the Step S11A, the rack end approach judging section 210 judges the steering direction of the handle based on the inputted judgment rack position Rx, and outputs the judgment result (right turning or left turning) as the direction signal Sd to the control amount limiting section 150.

The operation example of the viscoelastic model following control (Step S20A) is shown in the flowchart of FIG. 25. Compared with the flowchart of FIG.8, Steps S207A and S207B are added.

In the Step S207A, the rack displacement x, which is outputted from the rack end approach judging section 210 in the Step S2 02, is inputted into the viscoelastic model following control section 120 and the steering velocity calculating section 160. The steering velocity calculating section 160 calculates the steering velocity ω from the rack displacement x, and outputs the steering velocity ω to the control amount limiting section 150.

In the Step S207B, the control amount limiting section 150 limits the rack axial force ff, which is outputted from the viscoelastic model following control section 120, based on the direction signal Sd, the rack axial force f and the steering velocity ω. The detailed operation example of the Step S207B in the control amount limiting section 150 is shown in FIG.26.

The direction signal Sd outputted from the rack end approach judging section 210 and the rack axial force f outputted from the converting section 101 are inputted into the high steering maneuver limit-value calculating section 151 and the low steering maneuver limit-value calculating section 152 (Step S301).

In a case that the direction signal Sd is "right turning" (Step S302), the high steering maneuver limit-value calculating section 151 outputs the right turning upper-limit value RU1 and the right turning lower-limit value RL1 as the upper-limit value UPH and the lower-limit value LWH, respectively (Step S303). In a case that the direction signal Sd is "left turning" (Step S302), the high steering maneuver limit-value calculating section 151 outputs the left turning upper-limit value LU1 and the left turning lower-limit value LL1 as the upper-limit value UPH and the lower-limit value LWH, respectively (Step S304).

In a case that the direction signal Sd is "right turning" (Step S305), the low steering maneuver limit-value calculating section 152 outputs the right turning upper-limit value RU2 and the right turning lower-limit value RL2 as the upper-limit value UPL and the lower-limit value LWL, respectively (Step S306). In a case that the direction signal Sd is "left turning" (Step S305), the low steering maneuver limit-value calculating section 152 outputs the left turning upper-limit value LU2 and the left turning lower-limit value LL2 as the upper-limit value UPL and the lower-limit value LWL, respectively (Step S307). The order of the operation of the high steering maneuver limit-value calculating section 151 and the operation of the low steering maneuver limit-value calculating section 152 may be alternated, or the both operations may be performed in parallel.

The high steering maneuver-gain section 153 inputs the upper-limit value UPH, the lower-limit value LWH and the steering velocity ω, obtains the high steering maneuver gain GH to the steering velocity ω by using the characteristic shown in FIG. 22, multiplies the upper-limit value UPH and the lower-limit value LWH with the high steering maneuver gain GH, and outputs the upper-limit value UPHg (=UPH x GH) and the lower-limit value LWHg (=LWH x GH) (Step S308).

The low steering maneuver-gain section 154 inputs the upper-limit value UPL, the lower-limit value LWL and the steering velocity ω, obtains the low steering maneuver gain GL to the steering velocity ω by using the characteristic shown in FIG. 23, multiplies the upper-limit value UPL and the lower-limit value LWL with the low steering maneuver gain GL, and outputs the upper-limit value UPLg (=UPL x GL) and the lower-limit value LWLg (= LWL x GL) (Step S309). The order of the operation of the high steering maneuver-gain section 153 and the operation of the low steering maneuver-gain section 154 may be alternated, or the both operations may be performed in parallel.

The upper-limit values UPHg and UPLg are inputted into the adding section 156, and the added result is outputted as the upper-limit value UP (Step S310). The lower-limit values LWHg and LWLg are inputted into the adding section 157, and the added result is outputted as the lower-limit value LW (Step S311).

The upper-limit value UP, the lower-limit value LW and the rack axial force ff outputted from the viscoelastic model following control section 120 are inputted into the limiting section 155. When the rack axial force ff is equal to or more than the upper-limit value UP (Step S312), the limiting section 155 sets the rack axial force ff to the upper-limit value UP (Step S313) . When the rack axial force ff is equal to or less than the lower-limit value LW (Step S314), the limiting section 155 sets the rack axial force ff to the lower-limit value LW (Step S315) . In a case other than the both cases, the limiting section does not change the value of the rack axial force ff. The limited rack axial force ff is outputted as the rack axial force ffm (Step S316).

The rack axial force ffm is converted to the current command value Iref2 at the converting section 102 (Step S208A), and the current command value Iref2 is added to the current command value Iref1 at the adding section 103.

Even in the normal steering (Step S13A), as well as the case of the viscoelastic model following control, the rack axial force ff outputted from the viscoelastic model following control section 120 is limited. However, in the above case, because the value of the rack axial force ff is zero, the rack axial force ff is not limited and is outputted as the rack axial force ffm.

As well, the predetermined values Fx1 and Fx2, which are used in the high steering maneuver-limit setting, may be used to the predetermined values Fx3 and Fx4, which are used in the low steering maneuver-limit setting. In the above cases, the left turning upper-limit value and the left turning lower-limit value are set to the values which exchange the right turning upper-limit value for the right turning lower-limit value. However, the left turning upper-limit value and the left turning lower-limit value may not be used the above exchanged values by using different predetermined values or the like. Further, the same limit values may be used in cases of the right turning steering and the left turning steering. In this case, since the direction signal Sd is not needed, the judgment of the steering direction of the handle in the rack end approach judging section 210 and the switching operation in the control amount limiting section 150 by using the direction signal Sd are not required. In the above cases, the limit values are set based on the rack axial force f. The limit values that do not vary to the rack axial force f may be used. In this case, when the steering velocity is high, the control is to be the virtual rack end, strongly. When the steering velocity is low, the limit of the control amounts is enhanced so as to improve the safety. The upper-limit value and the lower-limit value are adjusted so that the above control is achieved. The characteristics of the high steering maneuver gain GH and the low steering maneuver gain GL between the steering velocities $\omega 1$ and $\omega 2$ are not limited to linear characteristics as shown in FIGs.22 and 23, and may be curved characteristics if a sum of the high steering maneuver gain GH and the low steering maneuver gain GL is 100%.

The embodiment of the present invention that the shift correction control is added to "the embodiment of the assist limit control" that performs the above model following control and the above assist limit control will be described.

In the embodiment of the assist limit control, when the steering velocity is low, the setting gradually switches from the high steering maneuver-limit setting to the low steering maneuver-limit setting, and the limit is enhanced. Accordingly, since the assist force having some extent strength is occurred, the steering can move to the rack end direction when the driver who has the intention steers the handle. At this time, when the steering velocity is higher, the limit values are switched to those of the high steering maneuver-limit setting. When the steering moves to the rack end direction, the control amount (the rack axial force ff) before performing the limit becomes larger since the parameters are set so that the control amount becomes larger when the movement amount to the rack end direction is larger, in order to prevent from the end hitting. In this way, the final output is largely changed by the combined operation of the variation of the limit values and the variation of the control amount, the assist force to the steering direction becomes smaller, and the steering velocity becomes slower. When the above phenomenon is repeatedly occurred, it is difficult for the driver to smoothly steer the handle. In order to suppress the difficulty, the shift correction is performed to the rack displacement in the present embodiment.

FIG.27 shows a configuration example of the embodiment (the first embodiment) of the present invention corresponding to FIG.18. The same configurations as those of FIG.18 are designated with the same numerals of FIG.18, and an explanation is omitted.

In the first embodiment, compared with the embodiment of the assist limit control shown in FIG.18, the viscoelastic model following control section 120 is replaced by a viscoelastic model following control section 220.

As the configuration example of the viscoelastic model following control section 220, for example, in a case that the basic configuration is shown in FIG.6, the configuration shown in FIG.28 is used. That is, in the first embodiment, a shift correcting section 250 is added, the rack displacement x is inputted into the shift correcting section 250, and a corrected rack displacement $x_s$ outputted from the shift correcting section 250 is inputted into the feed-forward control section 130 and the feed-back control section 140. A more detailed configuration example of the viscoelastic model following control section 220 is shown in FIG.29. The corrected rack displacement $x_s$ outputted from the shift correcting section 250 is also inputted into the parameter setting section 124.

The shift correcting section 250 performs the shift correction to the rack displacement x. Concretely, as shown in FIG.30, a position $x_{endv}$ (hereinafter referred to as "a virtual rack end") which is deviated a predetermined interval (a critical value) $\Delta x_1$ from a set rack end $x_{end}$ (hereinafter referred to as "a set rack end") in an origin direction is set as a target (a first target value). In a case that the rack displacement x is beyond the virtual rack end $x_{endv}$ and approaches the rack end, a change amount $\Delta x_2$ where the rack displacement x is deviated from the virtual rack end $x_{endv}$ ($\Delta x_2 = x - x_{endv}$) is calculated. A value that the change amount $\Delta x_2$ is subtracted from the rack displacement x is outputted as the

corrected rack displacement $x_s$. In a case that the rack displacement x is not beyond the virtual rack end $x_{endv}$, the rack displacement x is outputted as the corrected rack displacement $x_s$. That is, in a case that the rack displacement x is beyond the virtual rack end $x_{endv}$, the corrected rack displacement $x_s$ is fixed to the virtual rack end $x_{endv}$. In FIG.30, a position $x_{endr}$ is an actual rack end, and is normally a longer value than the set rack end $x_{end}$ that is the minimum value in design, considering manufacturing variation and an adjustment error.

In such a configuration, an operation example of the first embodiment will be described with reference to the flowcharts of FIGs.31 and 32.

In the operation of the first embodiment, compared with the operation of the embodiment of the assist limit control, the operation of the shift correcting section 250 is added to that of the viscoelastic model following control. FIG.31 is a flowchart showing the operation example of the viscoelastic model following control corresponding to FIG.17. In the operation example of the first embodiment, compared with the operation example shown in FIG. 17, the Steps S22A, S26a and S26b are added, and the Step S26A is replaced by the Step S2 6B. However, the operation example shown in FIG.17 is the operation example to the embodiment of the model following control. The Steps S26a, S26b and S26B are added and modified operations by adding the assist limit control. The operation that is added by an addition of the shift correction control is only the Step S22A. In the Steps S26a, S26b and S26B, the same operations as those of the Steps S207A, S207B and S208A in the operation example of the embodiment of the assist limit control shown in FIG.25 are performed.

FIG.32 shows a particular operation example of the shift correction in the Step S22A. The shift correcting section 250 that inputs the rack displacement x outputted from the rack end approach judging section 210 verifies whether the rack displacement x is beyond the virtual rack end $x_{endv}$ or not (whether the rack end displacement x is beyond the first target value or not) (Step S221) . In a case that the rack displacement x is beyond the virtual rack end $x_{endv}$, the shift correcting section 250 calculates the change amount $\Delta x_2$ from the virtual rack end $x_{endv}$ (Step S222), corrects the rack displacement x by using the change amount $\Delta x_2$, and calculates the corrected rack displacement $x_s$ (= x - $\Delta x_2$) (Step S223) . In a case that the rack displacement x is not beyond the virtual rack end $x_{endv}$, the rack displacement x is set as the corrected rack displacement $x_s$ (Step S224). The shift correcting section 250 outputs the corrected rack displacement $x_s$ (Step S225), and the corrected rack displacement $x_s$ is inputted into the spring constant term 131 and the viscous friction coefficient term 132 in the feed-forward control section 130, the parameter setting section 124 and the subtracting section 142 in the feed-back control section 140.

Effects of the first embodiment will be described by using FIGs.33 and 34.

In FIG.33, a horizontal axis indicates the judgment rack position Rx, and a vertical axis indicates the assist force. FIG.33 is a diagram showing change behaviors of the assist force (the rack axial force) and the limit values in a case of the right turning steering.

In a case that the assist force based on the current command value Iref1, that is, the rack axial force f linearly increases to the judgment rack position Rx until the judgment rack position Rx arrives at the virtual rack end $x_{endv}$, and is constant when the judgment rack position Rx is larger than the virtual rack end $x_{endv}$, as shown by (a) in FIG.33, the lower-limit value LW when the steering velocity "$\omega$=dx/dt" is zero, changes as shown by (g) in FIG.33, and the lower-limit value LW when the steering velocity $\omega$ is large, changes as shown by (i) in FIG.33. That is, when the steering velocity $\omega$ is zero, the low steering maneuver-limit setting is applied to 100%, and the lower-limit value LW, which is calculated from the expression 38, is the right turning lower-limit value RL2, and changes as shown by (g) which is Fx4 more than (h) which is the reverse characteristic of the rack axial force f. When the steering velocity $\omega$ is large, the high steering maneuver-limit setting is applied to 100%, and the lower-limit value LW, which is calculated from the expression 34, is the right turning lower-limit value RL1, and changes as shown by (i) which is Fx2 less than (h) which is the reverse characteristic of the rack axial force f. The rack axial force ff, which is the rack axial force before performing the limit, starts to operate when the judgment rack position Rx is beyond a predetermined position $x_0$ at front of the rack end, and largely operates (the absolute value of the rack axial force ff becomes large) when the judgment rack position Rx is near the rack end. In this time, when the steering velocity "$\omega$=dx/dt=0", the force derived from only the elastic term is operated. When the steering velocity $\omega$ becomes larger, the force derived from the viscos term is operated. Accordingly, the rack axial force ff changes as shown by (e) when the steering velocity $\omega$ is zero, and as shown by (f) when the steering velocity $\omega$ becomes larger. Therefore, in a case that the steering velocity $\omega$ is extremely small (dx/dt $\simeq$ 0), the assist force based on the current command value Iref3 (hereinafter referred to as "the total assist force") decreases since the rack axial force ff shown by (e) is added to the rack axial force f when the judgment rack position Rx is beyond $x_0$. Because the rack axial force f is constant when the judgment rack position Rx is beyond $x_{endv}$, the total assist force steeply decreases as shown by (c). Since the limit characteristic of (g) is largely limited, even when the rack axial force ff is limited after the judgment rack position Rx is beyond $x_s$ where the rack axial force ff is the lower-limit value or less, the constant total assist force continues to operate.

In such a situation, when the driver who has an intention steers the handle, the steering can move to the rack end direction. When the steering velocity $\omega$ becomes larger, the limit values are switched to those of the high steering maneuver-limit setting. FIG.34 shows a change behavior of the lower-limit value when the reversed rack axial force is set as reference (in a case of "right turning steering"). That is, FIG.34 shows a change behavior of a difference between the reversed rack axial force f and the lower-limit value LW, to the steering velocity ω, in a case that ω1 in FIGs.22 and 23 is set as zero. As can be seen from FIG.34, when the steering velocity ω becomes larger from zero, the lower-limit value decreases from a positive value to a negative value. When the steering velocity ω is equal to or more than ω2, the lower-limit value becomes constant (-Fx2). That is, when the steering velocity ω becomes larger, the limit is diminished. On the other hand, when the steering velocity ω becomes larger, the change of the rack axial force ff switches from (e) in FIG.33 to (f) in FIG.33. That is, the rack axial force ff becomes larger when the steering approaches to the rack end, and also becomes larger when the steering velocity ω becomes larger. When the steering velocity ω becomes larger in a case that the steering moves in a rack end direction, the rack axial force ff becomes larger and the limit is diminished. Accordingly, since the total assist force to the steering direction becomes smaller, it is difficult for the driver to smoothly steer the handle.

Whereas, when the shift correction is performed to the rack displacement x as well as the present embodiment, the corrected rack displacement $x_s$ is fixed to the virtual rack end $x_{endv}$ after the rack displacement x is beyond the virtual rack end $x_{endv}$. Therefore, even when the steering velocity "ω=dx/dt" becomes larger, the corrected rack displacement $x_s$ does not change in time, and the rack axial force ff calculated based on the corrected rack displacement $x_s$ does not change, neither. Since the total assist force is constant as shown by (d) in FIG.33, the difficulty of the steering can be suppressed.

As described above, the difficulty of the steering, which has a possibility of the occurrence in a case that the driver who has an intention steers the handle in moving to the rack end direction, can be suppressed by performing the shift correction to the rack displacement. Further, in a case that the driver weakens the grip force after steering the handle to the rack end direction and the shift correction is not performed, the driver often feels the difficulty of the steering due to the strong return force. This difficulty of the steering can be reduced by performing the shift correction and suppressing an increase in the control amount.

As well, although the shift correcting section 250 calculates the corrected rack displacement $x_s$ by subtracting the change amount $\Delta x_2$ from the rack displacement x, the corrected rack displacement $x_s$ may be calculated by multiplying the change amount $\Delta x_2$ with any proportion and subtracting the mult iplied change amount from the rack displacement x. In the above case, the configuration shown in FIG.6 forms the main parts as the configuration example of the viscoelastic model following control section 220. However, the configuration shown in FIG.5 may form the main parts. In this case, the corrected rack displacement outputted from the shift correcting section is inputted into only the feed-back control section.

Further, in the first embodiment, although only the spring constant $k_0$ and the viscos friction coefficient μ, which are the parameters of the reference model, are variable to the rack displacement, the control parameters of the feed-back control section 140 may also be variable to the rack displacement. For example, in a case that the control element section 143 in the feed-back control section 140 has a configuration of a proportional differential control (PD-control), the transfer function is represented by the below Expression 41, and the proportional gain kp and the differential gain kd are the control parameters.

[Expression 41]

$$C_d = kp + kd \cdot s$$

The proportional gain kp and the differential gain kd, for example, have the characteristics shown in FIG.35, for the rack displacement. The configuration example of the viscoelastic model following control section in this case is shown in FIG.36. Compared with the configuration example shown in FIG.29, the control parameter setting section 260 is added in the viscoelastic model following control section shown in FIG.36. The control parameter setting section 260 inputs the corrected rack displacement $x_s$ outputted from the shift correcting section 250, and calculates the proportional gain kp and the differential gain kd based on the characteristics shown in FIG.35. The proportional gain kp and the differential gain kd are inputted into the control element section 243 in the feed-back control section 240. Since the control parameters are variable, the uncomfortable feeling due to the reaction force by changing the assist force cannot be given to the driver, and the arrival to the rack end can be suppressed. The effect of the shift correction can be obtained by inputting the corrected rack displacement.

The second embodiment of the present invention will be described.

In the first embodiment, although the parameters are set so that the position where the set rack end $x_{end}$ is deviated to the predetermined interval (the critical value) $\Delta x_1$ in the origin direction is the virtual rack end $x_{endv}$, the difference between the virtual rack end $x_{endv}$ and the set rack end $x_{end}$ can be the predetermined interval $\Delta x_1$ or more due to a zero point misalignment of the position sensor, a position variation of the rack end, or the like. Further, when the driver who has an intention steers the handle, the steering can move to the rack end direction, and has the possibility of exceeding the set rack end $x_{end}$. Consequently, in a case that the change amount $\Delta x_2$ from the virtual rack end $x_{endv}$ is the predetermined interval $\Delta x_1$ or more, the difference (the modification amount) is stored, and the position that is used in the approach judgment is modified by using the stored difference before calculating the rack displacement in the subsequent rack end approach judgment. Thereby, the determination of the optimal virtual rack end can be achieved, a range that the difficulty of the steering can be remained due to the variation of the final output in the assist limit control can be narrow, and further the difficulty of the steering can be suppressed.

FIG.37 shows a configuration example of the second embodiment corresponding to FIG.27. The same configurations as those of FIG.27 are designated with the same numerals of FIG.27, and an explanation is omitted. In the second embodiment, compared with the first embodiment shown in FIG.27, the rack end approach judging section 210 and the viscoelastic model following control section 220 are replaced by a rack end approach judging section 310 and a viscoelastic model following control section 320, respectively.

FIG.38 shows a configuration example of the viscoelastic model following control section 320. Compared with the configuration example of the viscoelastic model following control section 220, the shift correcting section 250 is replaced by a shift correcting section 350. The shift correcting section 350 performs the shift correction to the rack displacement x as well as the shift correcting section 250. At the same time, in a case that the change amount $\Delta x_2$ is equal to or more than the critical value $\Delta x_1$, the shift correcting section 350 outputs the difference. That is, in a case that the change amount $\Delta x_2$ (= x - $x_{endv}$) of the rack displacement x from the virtual rack end $x_{endv}$ calculated in the shift correction is equal to or more than the critical value $\Delta x_1$, the difference ($\Delta x_2$ - $\Delta x_1$) is outputted to the rack end approach judging section 310 as a modification signal Mx. In a case that the change amount $\Delta x_2$ is less than the critical value $\Delta x_1$, the modification signal Mx is set to zero and is outputted.

When the modification signal Mx is inputted into the rack end approach judging section 310, the rack end approach judging section 310 stores the modification signal Mx, and uses it in the subsequent calculation of the rack displacement x. That is, before the modification signal Mx is inputted, as shown in FIG.4, the predetermined position $x_0$ at front of the rack end is set as the start position, and the rack displacement x is set as the displacement of the judgment rack position Rx from the predetermined position $x_0$. When the modification signal Mx is inputted, the new start position is set to a position where the predetermined position $x_0$ is deviated to the modification signal Mx in the rack end direction, and the rack displacement x is set as the displacement of the judgment rack position Rx from the new start position. For example, in FIG.39, the horizontal axis indicates the judgment rack position Rx and the rack displacement x, and the vertical axis indicates the rack axial force ff. Normally, as shown by (x) in FIG.39, the rack axial force generates at the start point where the judgment rack position Rx is the predetermined position $x_0$ (the rack displacement x=0). When the rack displacement x is approximate to the rack end, the rack axial force becomes larger (the absolute value becomes larger) . However, a deviation is occurred because of the variation of the rack end. In a case that a position where the rack axial force ff at the virtual rack end $x_{endv}$ in normal operation is generated is deviated to the change amount $\Delta x_2$ in the rack end direction, the deviated position is beyond the set rack end $x_{end}$. In this case, the new start position is set to $x_0$' where the predetermined position $x_0$ is deviated to the difference (= Mx) between the change amount $\Delta x_2$ and the critical value $\Delta x_1$ in the rack end direction, the rack displacement x is obtained by using the new start position $x_0$', and the rack axial force ff is generated at the new start position $x_0$' as shown by (z) in FIG.39. Thereby, the virtual rack end can achieved in the optimal range, and the normal operation range can be wider.

In such a configuration, the operation example of the second embodiment will be described with reference to the flowcharts of FIG.40 to FIG.42.

FIG.40 shows an overall operation example. Compared with the operation example shown in FIG.24, the operation of the start position modification (Step S11a) is added, and the viscoelastic model following control is modified (Step S20B). The modification signal Mx that is stored in the rack end approach judging section 310 is preliminarily set to zero as an initial value when starting the operation.

In the Step S11a, the rack end approach judging section 310 into which the judgment rack position Rx is inputted modifies the start position $x_0$ by using the modification signal Mx, and obtains the rack displacement x by using the new start position $x_0$' (= $x_0$ + Mx) as a reference.

FIG.41 shows an operation example of the viscoelastic model following control (Step S20B). In comparison with the operation example of the viscoelastic model following control of the first embodiment shown in FIG.31, the shift correction is modified (Step S22B), and the Steps S28 and S29 are added.

FIG.42 shows an operation example of the shift correction (Step S22B). Compared with the operation example of the shift correction of the first embodiment shown in FIG.32, the Steps S222A, S222B and S222C are added. That is, the shift correcting section 350 calculates the change amount $\Delta x_2$ (Step S222), and investigates whether the change amount $\Delta x_2$ is equal to or more than the critical value $\Delta x_1$ or not (Step S222A). In a case that the change amount $\Delta x_2$ is equal to or more than the critical value $\Delta x_1$, the difference (= $\Delta x_2$ - $\Delta x_1$) is outputted to the rack end approach judging section 310 as the modification signal Mx (Step S222B). In a case that the change amount $\Delta x_2$ is less than the critical value $\Delta x_1$, the modification signal Mx that is set to zero (Mx=0) is outputted (Step S222C).

At the Steps S28 and S29, the rack end approach judging section 310 verifies whether the modification signal Mx is inputted or not (Step S28). In a case that the modification signal Mx is inputted, the rack end approach judging section 310 updates the stored modification signal to the inputted modification signal (Step S29). In a case that the modification signal Mx is not inputted, the rack end approach judging section 310 does not update the modification signal Mx.

The third embodiment of the present invention will be described.

In the first embodiment, by performing the shift correction to the rack displacement, the variation of the assist force to the steering velocity is not occurred when the steering is beyond the virtual rack end $x_{endv}$ where the shift correction starts to be performed to the rack displacement. However, since the shift correction just after being performed, the velocity variation is detected, the variation of the assist force can be occurred. In the feed-forward control section and the feed-back control section, a dead band process is performed to the steering velocity, that is, to the elements that is related to the differential of the rack displacement, and the variation of the assist force in the slow steering velocity is suppressed.

FIG.43 shows a configuration example of the third embodiment corresponding to FIG.27. The same configurations as those of FIG.27 are designated with the same numerals of FIG.27, and an explanation is omitted. In the third embodiment, compared with the first embodiment shown in FIG.27, the viscoelastic model following control section 220 is replaced by a viscoelastic model following control section 420.

FIG.44 shows a configuration example of the viscoelastic model following control section 420. Compared with the configuration example of the viscoelastic model following control section 220 shown in FIG.29, the viscos friction coefficient term 132 in the feed-forward control section 130 is replaced by a viscos friction coefficient term 432, and the control element section 143 in the feed-back control section 140 is replaced by a control element section 443.

FIG.45 shows a configuration example of the viscos friction coefficient term 432. The viscos friction coefficient term 432 comprises a differential section 434, a dead band processing section 435 and a gain section 436. The differential section 434 differentiates the corrected rack displacement $x_s$ and calculates a differential data $dx_s$. The dead band processing section 435 performs the dead band process to the differential data $dx_s$, and outputs a dead band differential data $ddx_s$. Specifically, as shown in FIG.46, in comparison with the characteristic that the output data is the same as the input data, shown by the dotted line, the characteristic that has the dead band which the output is set to zero when the input is near zero, shown by the solid line (hereinafter referred to as "a dead band characteristic") is prepared. The differential data $dx_s$ is inputted into the dead band processing section 435, and the dead band processing section 435 obtains the dead band differential data $ddx_s$ by using the dead band characteristic that outputs the dead band differential data $ddx_s$. The gain section 436 uses the viscos friction coefficient $\mu$ outputted from the parameter setting section 124, multiplies the dead band differential data $ddx_s$ with $(\mu-\eta)$, and calculates the viscos term data Vi.

FIG. 47 shows a configuration example of the control element section 443 that comprises a configuration of the PD-control which has a transfer function represented by the Expression 41. The control element section 443 comprises a proportional control section 444, a differential control section 445 and an adding section 446, and further the differential control section 445 comprises a differential section 447, a dead band processing section 448 and a gain section 449. An error data Er is calculated by subtracting the corrected rack displacement $x_s$ from an N/F-calculation value that is the target rack displacement and is outputted from a feed-back element (N/F) 141. The proportional control section 444 calculates a proportional term data Pi by multiplying the error data Er with the proportional gain kp. The differential section 447 calculates a differential data dEr by differentiating the error data Er. The dead band processing section 448 performs the dead band process to the differential data dEr as well as the process of the dead band processing section 435, and outputs a dead band differential data ddEr. In the dead band processing section 435 and the dead band processing section 448, widths of the dead band in the dead band characteristic may be same or may be different. The gain section 449 calculates a differential term data Di by multiplying the dead band differential data ddEr with the differential gain kd. The adding section 446 calculates a rack axial force FB by adding the differential term data Di to the proportional term data Pi. The control element section 443 may has a configuration of proportional integration differential control (PID-control). In this case, the dead band processing section is disposed in the configuration element corresponding to the differential control section.

In such a configuration, the operation example of the third embodiment will be described with reference to the flowcharts of FIGs.48 and 49.

Compared the operation example of the third embodiment with that of the first embodiment, the operation in the viscoelastic model following control is different and other operations are the same. FIG.48 is a flowchart showing the operation example of the viscoelastic model following control in the third embodiment. In comparison with the operation example of the viscoelastic model following control in the first embodiment shown in FIG.31, a "Cd" calculation and a " $(\mu-\eta) \cdot s$" calculation are different (Steps S24b and S25a).

FIG.49 shows the operation examples the "Cd" calculation and the "$(\mu-\eta) \cdot s$" calculation.

The error data Er, which is calculated by subtracting the corrected rack displacement $x_s$ from the N/F-calculation value at the subtracting section 142 in the feed-back control section 440, is inputted into the proportional control section 444 and the differential section 447 in the control element section 443. The proportional control section 444 multiplies the error data Er with the proportional gain kp (StepS241) and calculates the proportional term data Pi, and the proportional term data Pi is inputted into the adding section 446. The differential section 447 differentiates the error data Er and calculates the differential data dEr (Step S242), and the differential data dEr is inputted into the dead band processing section 448. The dead band processing section 448 performs the dead band process to the differential data dEr by using the dead band characteristic shown in FIG.46 (Step S243) and outputs the processed data as the dead band differential data ddEr. The dead band differential data ddEr is inputted into the gain section 449. The gain section 449 multiplies the dead band differential data ddEr with the differential gain kd and calculates the differential term data Di (Step S244), and the differential term data Di is inputted into the adding section 446. The adding section 446 adds the differential term data Di to the proportional term data Pi (Step S245) and calculates the rack axial force FB. The rack axial force FB is inputted into a contact point b2 of the switching section 122.

The corrected rack displacement $x_s$ and the viscos friction coefficient $\mu$ are inputted into the viscos friction coefficient term 432 in the feed-forward control section 430. The corrected rack displacement $x_s$ is also inputted into the differential section 434, and the differential section 434 differentiates the corrected rack displacement $x_s$ and calculates the differential data $dx_s$ (Step S246) . The differential data $dx_s$ is inputted into the dead band processing section 435. The dead band processing section 435 performs the dead band process to the differential data $dx_s$ by using the dead band characteristic shown in FIG.46 (Step S247) and outputs the processed data as the dead band differential data $ddx_s$. The dead band differential data $ddx_s$ and the viscos friction coefficient $\mu$ are inputted into the gain section 436. The gain section 436 multiplies the dead band differential data $ddx_s$ with "($\mu$-$\eta$)" and calculates the viscos term data Vi (Step S248). The viscos term data Vi is inputted into the subtracting section 133.

Here, the effects of the third embodiment will be described with reference to FIG.50.

FIG.50 is an enlarged view of a portion surrounded by a circle in a bottom part of FIG.33, and the change behavior of the rack axial force and the like in a case that the steering velocity "$\omega$=dx/dt" is small, is appended in FIG.50. The lower-limit value LW shown by (k) when "dx/dt" is small changes slightly smaller than the lower-limit value LW shown by (g) when "dx/dt=0". The rack axial force ff shown by (j) when "dx/dt" is small also changes smaller than the rack axial force ff shown by (e) when "dx/dt=0".

In a case that neither the shift correction nor the dead band process is performed, under a situation that the handle is steered very slowly, when the steering velocity $\omega$ is slightly faster at the virtual rack end $x_{endv}$, the rack axial force ff transits from (e) in FIG.50 to (j) in FIG.50. Since the limit is not performed to the rack axial force ffm, the rack axial force ffm steeply decreases shown by (1) in FIG.50. After that, when the handle is steered in a range of the very slow steering velocity and the slightly faster steering velocity, the rack axial force ffm changes with vibration in a range of (e) in FIG.50 and (j) in FIG.50, as shown by (1) in FIG.50. When the limit starts to be performed, the rack axial force ffm changes with vibration in a range of (g) in FIG.50 and (k) in FIG.50.

In such a situation, when the shift correction is performed, the rack axial force ffm is almost constant in a case that the rack displacement x is beyond the virtual rack end $x_{endv}$. Since the shift correction is detected as the velocity variation when the shift correction starts to be performed, the vibration as shown by (1) in FIG.50 can be remained. When the dead band process is performed to the differential data so that the rack axial force ff is not changed in a region that "dx/dt" is small, the vibration can be suppressed and the rack axial force ffm becomes constant as shown by (m) in FIG.50.

As well, in the third embodiment, although the dead band processing section is disposed at the subsequent stage of the differential sections 434 and 447 and performs the dead band process to the differential data, the dead band processing section may be disposed at the subsequent stage of the gain sections 436 and 449 and may perform the dead band process to the viscos term data Vi and the differential term data Di. Further, although the configuration shown in FIG.6 forms the main parts as the configuration example of the viscoelastic model following control section 420, the configuration shown in FIG.5 may form the main parts . In this case, the dead band processing section is disposed in only the feed-back control section.

The fourth embodiment of the present invention will be described.

In the first embodiment, the difficulty of the steering due to the variation of the assist force is suppressed by performing the shift correction to the rack displacement. However, a part of the functions achieved by the shift correction is replaced by adjustment of the parameter characteristics, and then an equivalent effect can be obtained.

FIG.51 shows a configuration example of the fourth embodiment corresponding to FIG.27. The same configurations as those of FIG.27 are designated with the same numerals of FIG.27, and an explanation is omitted. In the fourth embodiment, compared with the first embodiment shown in FIG.27, the viscoelastic model following control section 220 is replaced by a viscoelastic model following control section 520.

FIG.52 shows a configuration example of the viscoelastic model following section 520. In comparison with the configuration example of the viscoelastic model following section 220 shown in FIG.29, the parameter setting section 124 is replaced by a parameter setting section 524, and further an arrangement of the shift correcting section 250 is different. The corrected rack displacement $x_s$ outputted from the shift correcting section 250 is inputted into only the subtracting section 142 in the feed-back section 140, and the rack displacement x is inputted into the feed-forward control section 130 and the parameter setting section 524.

The parameter setting section 524 outputs the spring constant $k_0$ and the viscous friction coefficient $\mu$ according to the rack displacement x. The characteristics of the spring constant $k_0$ and the viscous friction coefficient $\mu$ do not have the characteristics shown in FIG.16 and, for example, have the characteristics shown in FIG.53. That is, the spring constant $k_0$ and the viscous friction coefficient $\mu$ increase in conjunction with an increase of the rack displacement x until the rack displacement x arrives at a predetermined value (the second target value) $x_a$, as well as the characteristics shown in FIG.16. After the rack displacement x is beyond $x_a$, the spring constant $k_0$ and the viscous friction coefficient $\mu$ become constant. Thereby, for example, if the second target value $x_a$ is coincident with the virtual rack end $x_{endv}$, in the calculation of the feed-forward control section 130, the obtained effects are the same as those which are obtained in a case that the corrected rack displacement $x_s$, which becomes constant after the rack displacement x is beyond the virtual rack end $x_{endv}$, is used.

In comparison with the operation example of the fourth embodiment with that of the first embodiment, the operation in the viscoelastic model following control is different and other operations are the same. Compared the operation example of the viscoelastic model following control in the fourth embodiment with that in the first embodiment shown in FIG.31, the use of the characteristics shown in FIG.53 in the parameter setting (Step S23), the useof the rack displacement x in the "$(\mu-\eta) \cdot s$" calculation (Step S25) and the use of the rack displacement x in the calculation of the spring constant term 131 after the setting of the spring constant $k_0$ (Step S25A) are only different.

Even in the fourth embodiment, the control parameters of the feed-back control section 140 may be variable to the rack displacement, as well as the case of the first embodiment. In this case, in a case that the control element section 143 in the feed-back control section 140 has a configuration of the proportional differential control (PD-control), the proportional gain kp and the differential gain kd, which are the control parameters, are not set to have the characteristics to the rack displacement shown in FIG.35, but are set to have the characteristics to the rack displacement, for example, shown in FIG.54. That is, the proportional gain kp and the differential gain kd increase in conjunction with an increase in the rack displacement x until the rack displacement x arrives at a predetermined value (the third target value) $x_b$, as well as the characteristics shown in FIG.35. However, after the rack displacement x is beyond the predetermined value $x_b$, the proportional gain kp and the differential gain kd become constant values. Not the corrected rack displacement $x_s$ but the rack displacement x is inputted into the control parameter section that sets the control parameters. Thereby, for example, if the third target value $x_b$ is coincident with the virtual rack end $x_{endv}$, in the calculation of the control element section 143, the obtained effects are the same as those which are obtained in a case that the corrected rack displacement $x_s$ is used.

Explanation of Reference Numerals

1 handle (steering wheel)

2 column shaft (steering shaft, handle shaft)

10 torque sensor

12 vehicle speed sensor

13 battery

14 steering angle sensor

20 motor

21 rotational angle sensor

30 control unit (ECU)

31 torque control section

35 current control section

36 PWM-control section

100 rack position converting section

101, 102 converting section

110, 210, 310 rack end approach judging section

120, 220, 320, 420, 520 viscoelastic model following control section

121, 122 switching section

124, 524 parameter setting section

130, 430 feed-forward control section

140, 240, 440 feed-back control section

150 control amount limiting section

151 high steering maneuver limit-value calculating section

152 low steering maneuver limit-value calculating section

153 high steering maneuver-gain section

154 low steering maneuver-gain section

155 limiting section

160 steering velocity calculating section

250, 350 shift correcting section

260 control parameter setting section

434, 447 differential section

435, 448 dead band processing section

444 proportional control section

445 differential control section

## Claims

1. A control unit for an electric power steering apparatus that calculates a current command value based on at least a steering torque and performs an assist-control of a steering system by driving a motor based on said current command value, comprising:

   a configuration of a model following control including a viscoelastic model as a reference model within a predetermined angle at front of a rack end,
   wherein a shift correction is performed against displacement information which is used in said model following control; and
   wherein a rack end hitting is suppressed by limiting a range of a control amount in said model following control by using a limit value which is set based on at least steering velocity.

2. The control unit for the electric power steering apparatus according to Claim 1,
   wherein a configuration of said model following control is a feed-back section.

3. The control unit for the electric power steering apparatus according to Claim 1, wherein a configuration of said model following control is a feed-forward section.

4. The control unit for the electric power steering apparatus according to Claim 1, wherein a configuration of said model following control is a feed-back section and a feed-forward section.

5. A control unit for an electric power steering apparatus that calculates a first current command value based on at least a steering torque and performs an assist-control of a steering system by driving a motor based on said first current command value, comprising:

a first converting section that converts said first current command value to a first rack axial force or a first column shaft torque;
a rack position converting section that converts a rotational angle of said motor to a judgment rack position;
a rack end approach judging section that judges approaching to a rack end based on said judgment rack position, and outputs a rack displacement and a switching signal;
a viscoelastic model following control section that includes a shift correcting section which, in a case that said rack displacement is beyond a predetermined first target value and approaches said rack end, corrects said rack displacement based on a change amount which is a difference between said rack displacement and said first target value and outputs a corrected rack displacement, and generates a second rack axial force or a second column shaft torque including a viscoelastic model as a reference model based on said corrected rack displacement and said switching signal;
a control amount limiting section that limits said second rack axial force or said second column torque by using an upper-limit value and a lower-limit value which are set to said second rack axial force or said second column shaft torque based on at least steering velocity; and
a second converting section that converts said limited second rack axial force or said limited second column shaft torque to a second current command value,
wherein a rack end hitting is suppressed by adding said second current command value to said first current command value, and performing said assist-control.

6. The control unit for the electric power steering apparatus according to Claim 5, wherein a parameter of said reference model is changed by said corrected rack displacement.

7. The control unit for the electric power steering apparatus according to Claim 5 or 6, wherein said viscoelastic model following control section comprises:

a feed-forward control section that outputs a third rack axial force or a third column shaft torque by performing a feed-forward control based on said corrected rack displacement;
a feed-back control section that outputs a fourth rack axial force or a fourth column shaft torque by performing a feed-back control based on said corrected rack displacement and said first rack axial force or said first column shaft torque;
a first switching section that turns-on or turns-off an output of said third rack axial force or said third column shaft torque by said switching signal;
a second switching section that turns-on or turns-off an output of said fourth rack axial force or said fourth column shaft torque by said switching signal; and
an adding section that adds an output of said second switching section to an output of said first switching section and outputs said second rack axial force or said second column shaft torque.

8. The control unit for the electric power steering apparatus according to Claim 7, wherein said feed-forward control section comprises:

a first differential section that differentiates said corrected rack displacement and outputs a first differential data; and
a first dead band processing section that sets a dead band around a zero point to said first differential data or a viscosity term data calculated from said first differential data; and
wherein said feed-back control section comprises:

a second differential section that differentiates an error data, which is a difference between a target rack displacement and said corrected rack displacement, and outputs a second differential data; and

a second dead band processing section that sets a dead band around a zero point to said second differential data or a differential term data calculated from said second differential data.

**9.** The control unit for the electric power steering apparatus according to Claim 5 or 6, wherein said viscoelastic model following control section comprises:

a feed-forward control section that outputs a third rack axial force or a third column shaft torque by performing a feed-forward control based on said first rack axial force or said first column shaft torque;
a feed-back control section that outputs a fourth rack axial force or a fourth column shaft torque by performing a feed-back control based on said corrected rack displacement and said first rack axial force or said first column shaft torque;
a first switching section that turns-on or turns-off an output of said third rack axial force or said third column shaft torque by said switching signal;
a second switching section that turns-on or turns-off an output of said fourth rack axial force or said fourth column shaft torque by said switching signal; and
an adding section that adds an output of said second switching section to an output of said first switching section and outputs said second rack axial force or said second column shaft torque.

**10.** The control unit for the electric power steering apparatus according to Claim 9, wherein said feed-back control section comprises:

a differential section that differentiates said corrected rack displacement and outputs a differential data; and
a dead band processing section that sets a dead band around a zero point to said differential data or a differential term data calculated from said differential data.

**11.** The control unit for the electric power steering apparatus according to any one of Claims 7 to 10, wherein a control parameter of said feed-back control section is changed by said corrected rack displacement.

**12.** A control unit for an electric power steering apparatus that calculates a first current command value based on at least a steering torque and performs an assist-control of a steering system by driving a motor based on said first current command value, comprising:

a first converting section that converts said first current command value to a first rack axial force or a first column shaft torque;
a rack position converting section that converts a rotational angle of said motor to a judgment rack position;
a rack end approach judging section that judges approaching to a rack end based on said judgment rack position, and outputs a rack displacement and a switching signal;
a viscoelastic model following control section that comprises a shift correcting section which, in a case that said rack displacement is beyond a predetermined first target value and approaches said rack end, corrects said rack displacement based on a change amount which is a difference between said rack displacement and said first target value and outputs a corrected rack displacement, and generates a second rack axial force or a second column shaft torque including a viscoelastic model as a reference model based on said first rack axial force or said first column shaft torque, said rack displacement, said corrected rack displacement and said switching signal;
a control amount limiting section that limits said second rack axial force or said second column torque by using an upper-limit value and a lower-limit value which are set to said second rack axial force or said second column shaft torque based on at least steering velocity; and
a second converting section that converts said limited second rack axial force or said limited second column shaft torque to a second current command value,
wherein a parameter of said reference model is changed by said rack displacement in a case that said rack displacement is equal to or less than a predetermined second target value, and is constant in a case that said rack displacement is more than said second target value, and
wherein rack end hitting is suppressed by adding said second current command value to said first current command value, and performing said assist-control.

**13.** The control unit for the electric power steering apparatus according to Claim 12, wherein said viscoelastic model following control section comprises:

a feed-forward control section that outputs a third rack axial force or a third column shaft torque by performing a feed-forward control based on said rack displacement;

a feed-back control section that outputs a fourth rack axial force or a fourth column shaft torque by performing a feed-back control based on said corrected rack displacement and said first rack axial force or said first column shaft torque;

a first switching section that turns-on or turns-off an output of said third rack axial force or said third column shaft torque by said switching signal;

a second switching section that turns-on or turns-off an output of said fourth rack axial force or said fourth column shaft torque by said switching signal; and

an adding section that adds an output of said second switching section to an output of said first switching section and outputs said second rack axial force or said second column shaft torque.

**14.** The control unit for the electric power steering apparatus according to Claim 12, wherein said viscoelastic model following control section comprises:

a feed-forward control section that outputs a third rack axial force or a third column shaft torque by performing a feed-forward control based on said first rack axial force or said first column shaft torque;

a feed-back control section that outputs a fourth rack axial force or a fourth column shaft torque by performing a feed-back control based on said corrected rack displacement and said first rack axial force or said first column shaft torque;

a first switching section that turns-on or turns-off an output of said third rack axial force or said third column shaft torque by said switching signal;

a second switching section that turns-on or turns-off an output of said fourth rack axial force or said fourth column shaft torque by said switching signal; and

an adding section that adds an output of said second switching section to an output of said first switching section and outputs said second rack axial force or said second column shaft torque.

**15.** The control unit for the electric power steering apparatus according to Claim 13 or 14, wherein a control parameter of said feed-back control section is changed by said rack displacement in a case that said rack displacement is equal to or less than a predetermined third target value, and is constant in a case that said rack displacement is more than said third target value.

**16.** The control unit for the electric power steering apparatus according to any one of Claims 5 to 15, wherein, in a case that said change amount is equal to or more than a predetermined critical value, said shift correcting section calculates a modification amount, which is a difference between said change amount and said critical value; and
wherein said rack end approach judging section modifies said rack displacement by using said modification amount.

**17.** The control unit for the electric power steering apparatus according to any one of Claims 5 to 16, wherein said control amount limiting section gradually changes said upper-limit value and said lower-limit value in conjunction with change of said steering velocity.

**18.** The control unit for the electric power steering apparatus according to any one of Claims 5 to 17, wherein said upper-limit value and said lower-limit value are set depending on a steering direction.

**19.** The control unit for the electric power steering apparatus according to any one of Claims 5 to 18, wherein said upper-limit value and said lower-limit value are set based on said first rack axial force or said first column shaft torque.

FIG.1

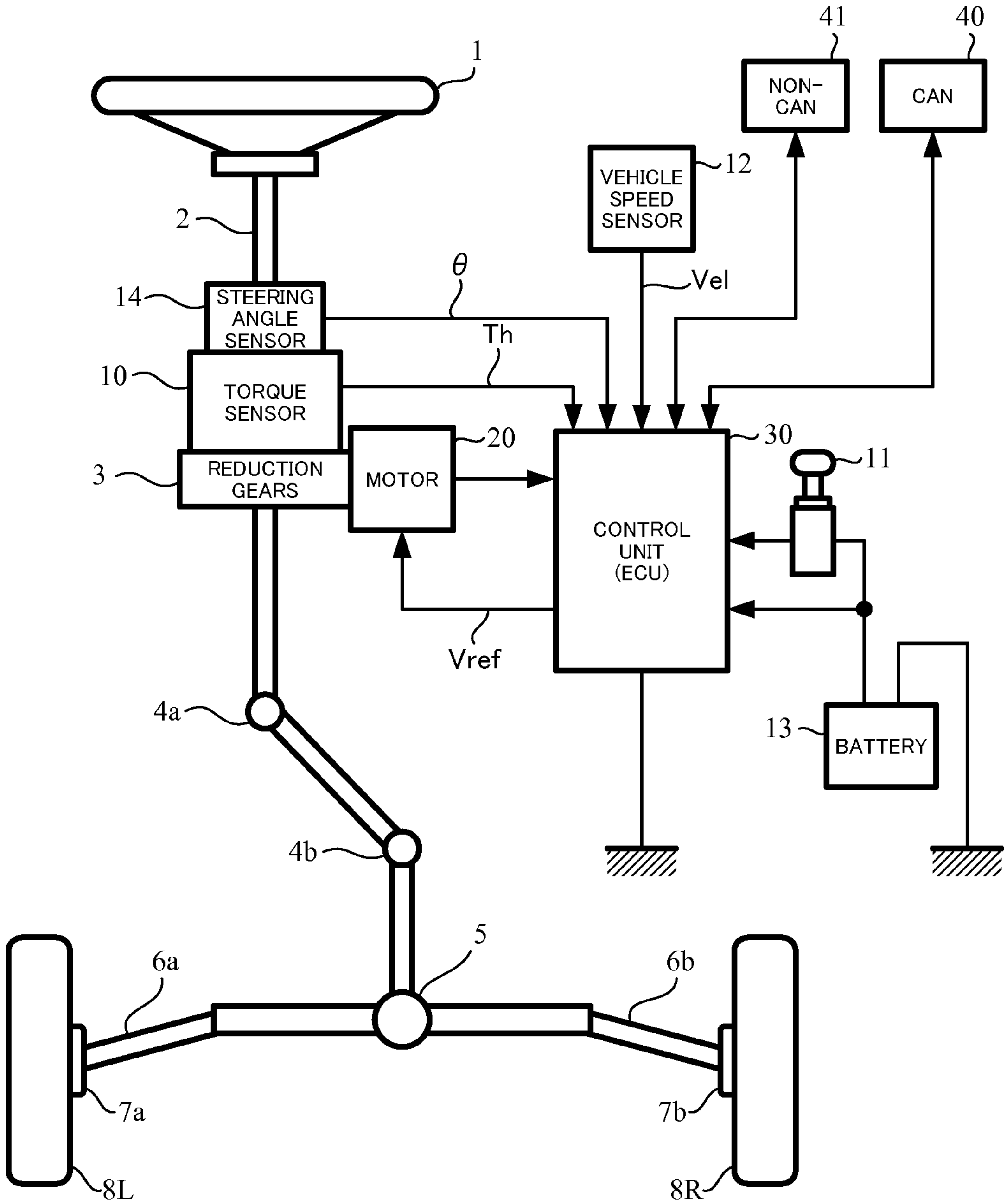


PRIOR ART

FIG.2

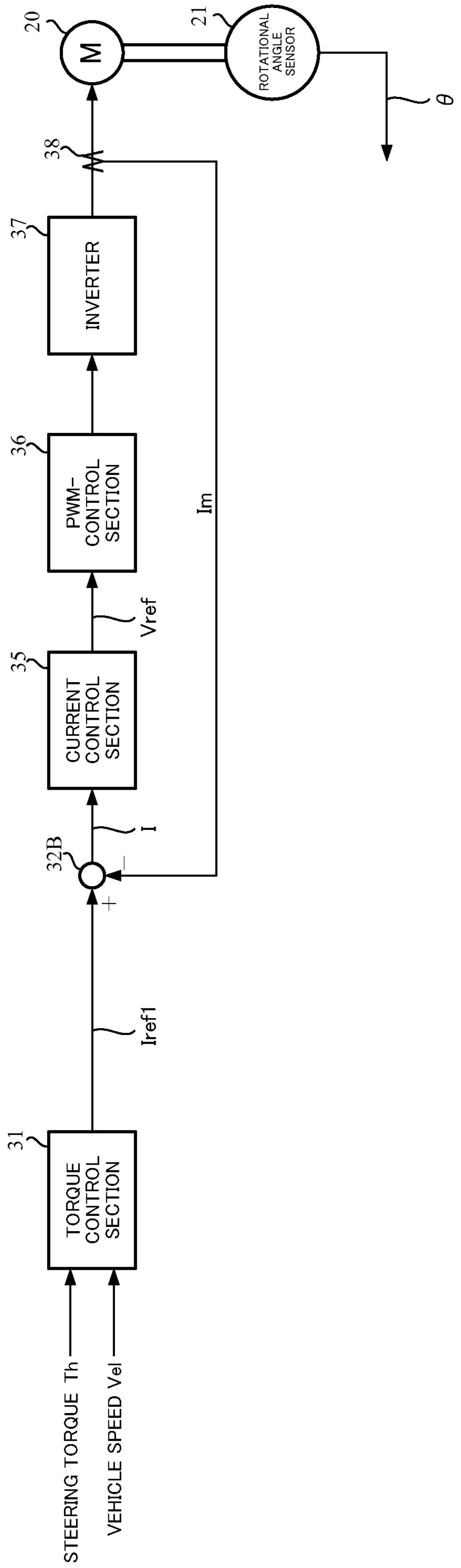


PRIOR ART

FIG.3

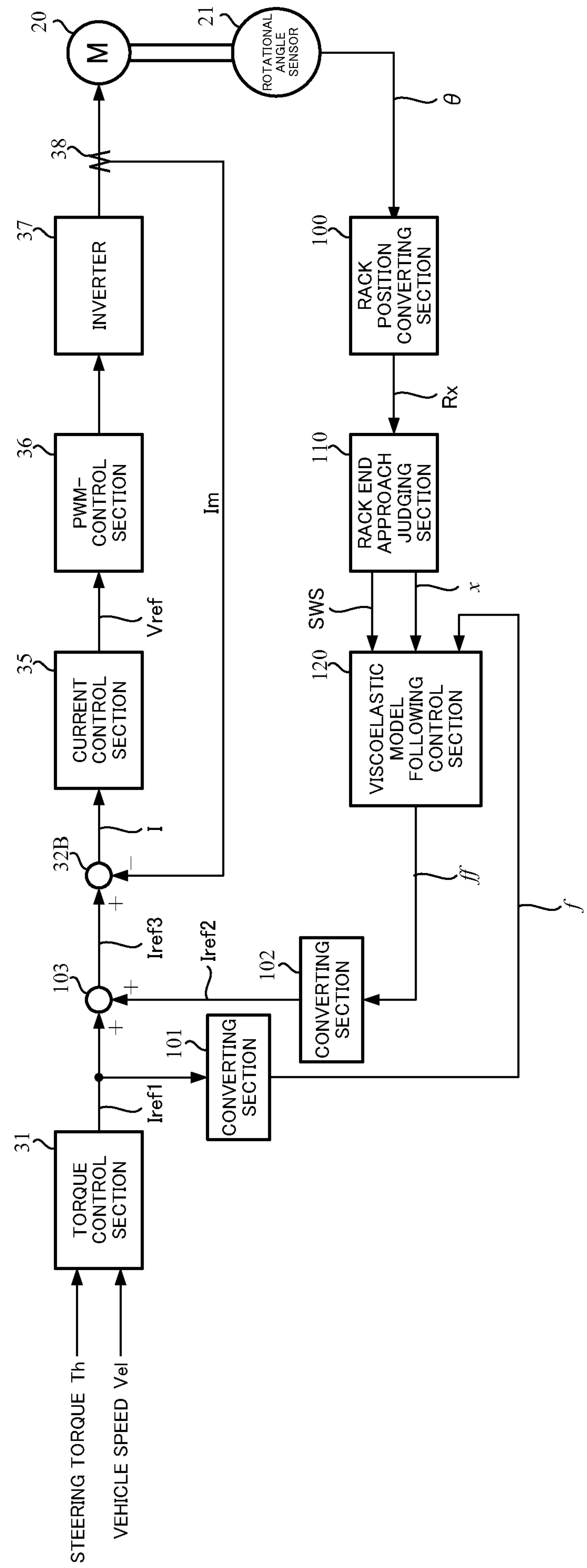
STEERING TORQUE Th
VEHICLE SPEED Vel
31
TORQUE CONTROL SECTION
Iref1
101
CONVERTING SECTION
103
Iref2
102
CONVERTING SECTION
Iref3
32B
I
35
CURRENT CONTROL SECTION
Vref
36
PWM-CONTROL SECTION
37
INVERTER
38
Im
20
M
21
ROTATIONAL ANGLE SENSOR
θ
100
RACK POSITION CONVERTING SECTION
Rx
110
RACK END APPROACH JUDGING SECTION
SWS
x
120
VISCOELASTIC MODEL FOLLOWING CONTROL SECTION
ff
f

FIG.4

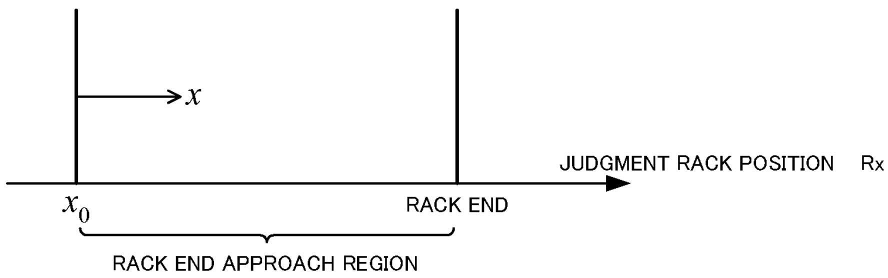


FIG.5

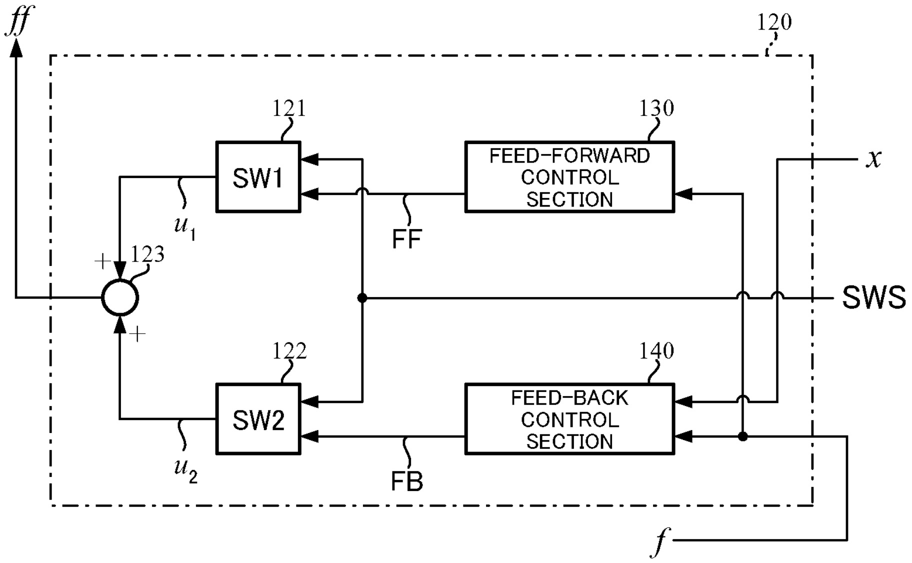


FIG.6

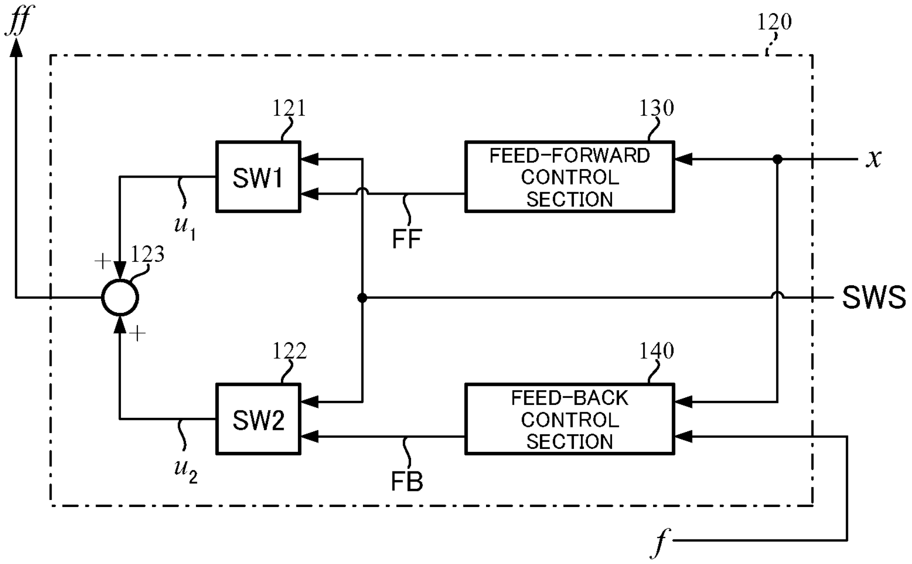

FIG.7

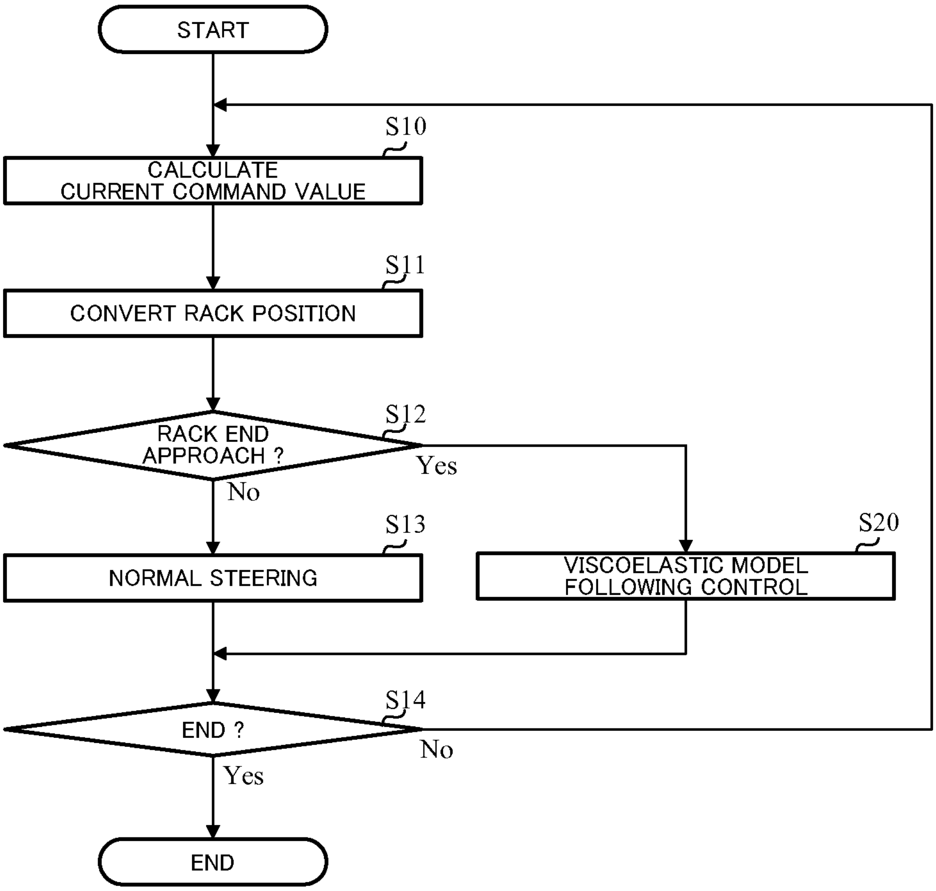
START
S10
CALCULATE CURRENT COMMAND VALUE
S11
CONVERT RACK POSITION
S12
RACK END APPROACH ?
Yes
No
S13
NORMAL STEERING
S20
VISCOELASTIC MODEL FOLLOWING CONTROL
S14
END ?
No
Yes
END

FIG.8

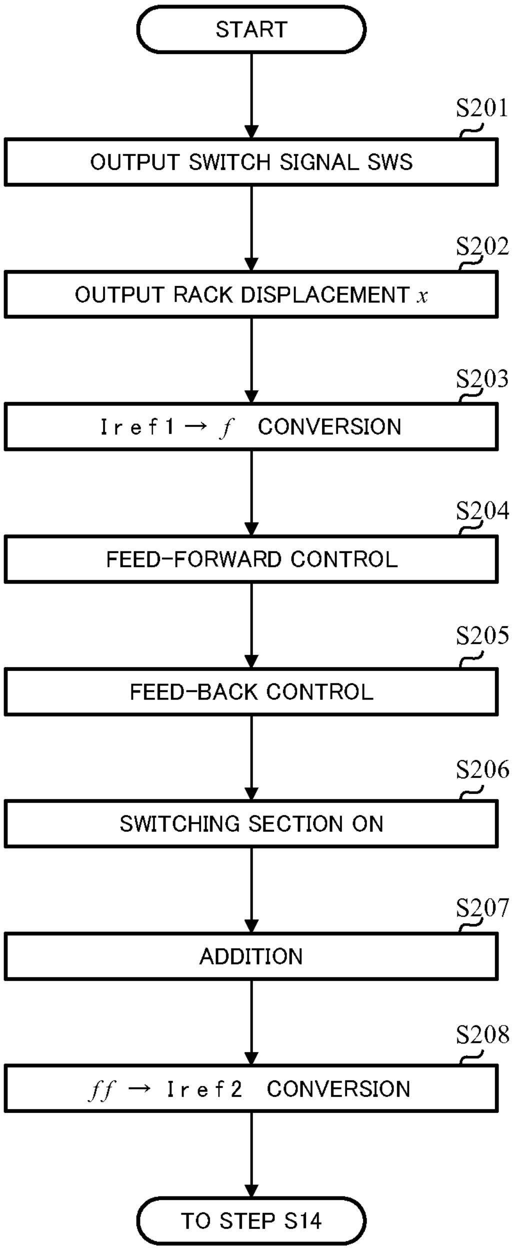
START
S201
OUTPUT SWITCH SIGNAL SWS
S202
OUTPUT RACK DISPLACEMENT x
S203
Iref1 → f CONVERSION
S204
FEED-FORWARD CONTROL
S205
FEED-BACK CONTROL
S206
SWITCHING SECTION ON
S207
ADDITION
S208
ff → Iref2 CONVERSION
TO STEP S14

FIG.9

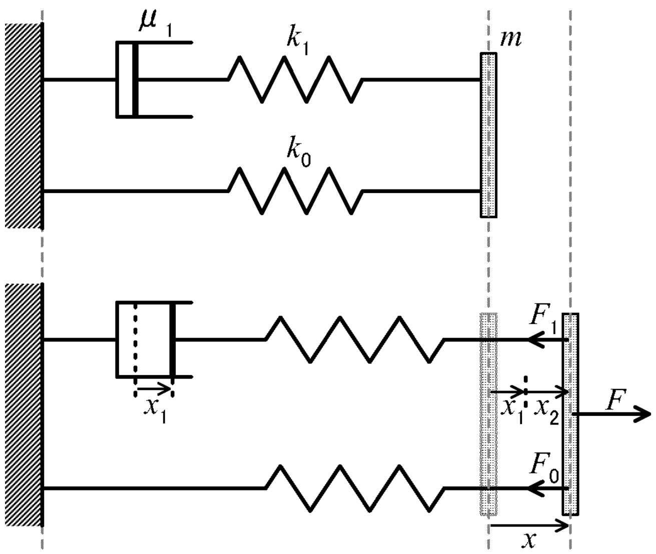
μ 1
k1
m
k0
F1
x1
x1
x2
F
F0
x

FIG.10

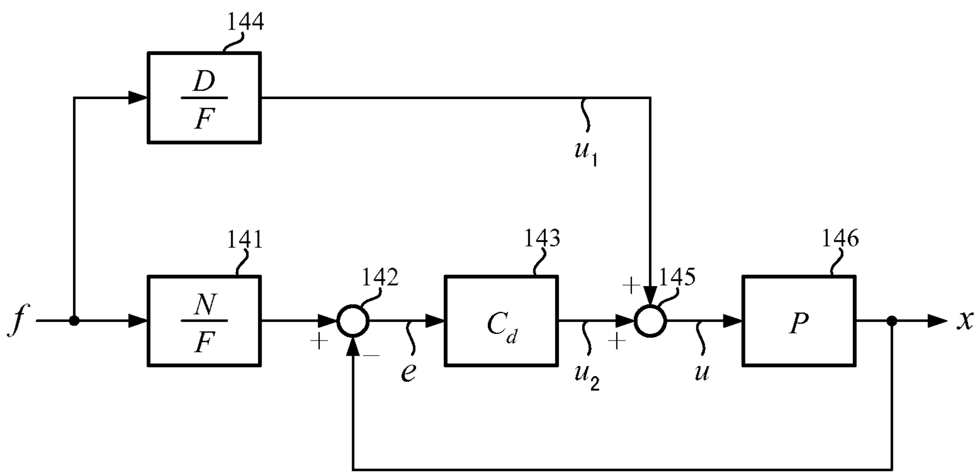
144
D
F
u1
141
143
146
N
F
142
145
f
Cd
P
x
+
+
+
−
e
u2
u

FIG.11A

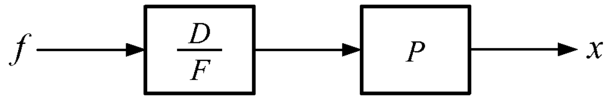


FIG.11B

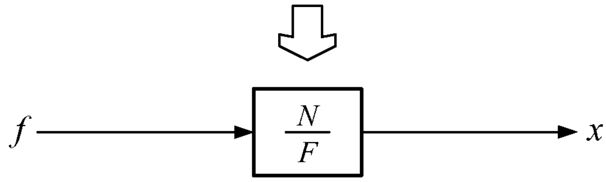


FIG.11C

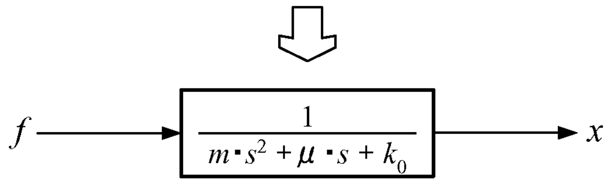


FIG.12

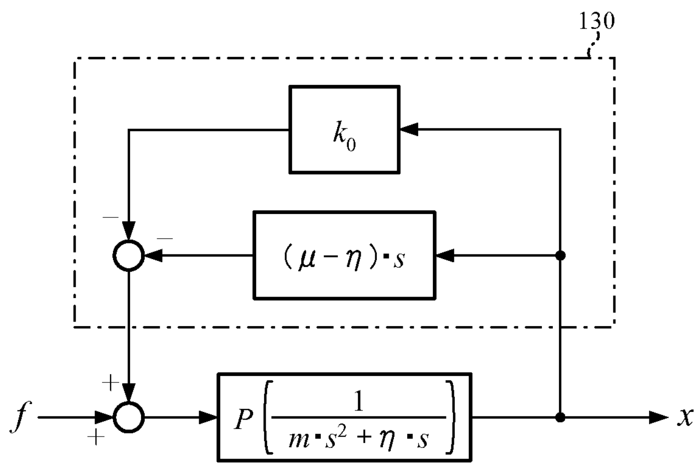


FIG.13

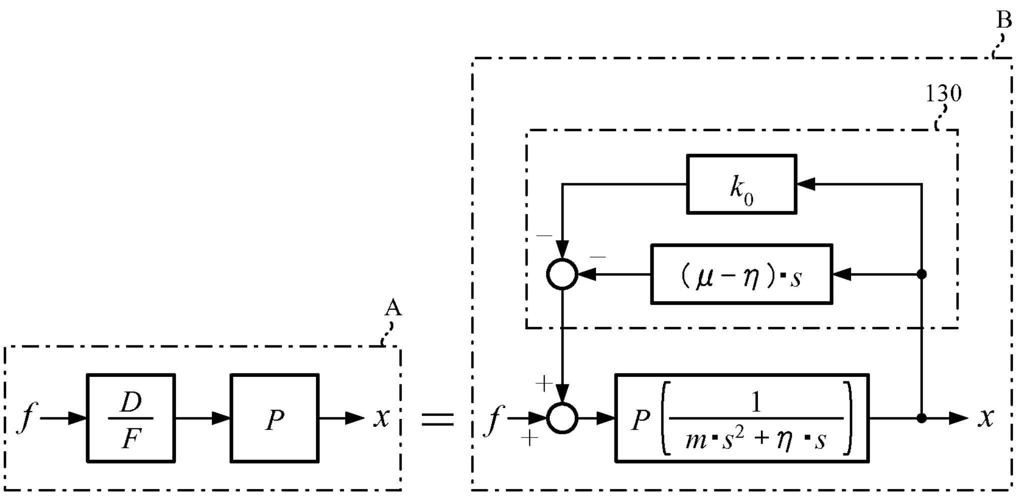

FIG.14

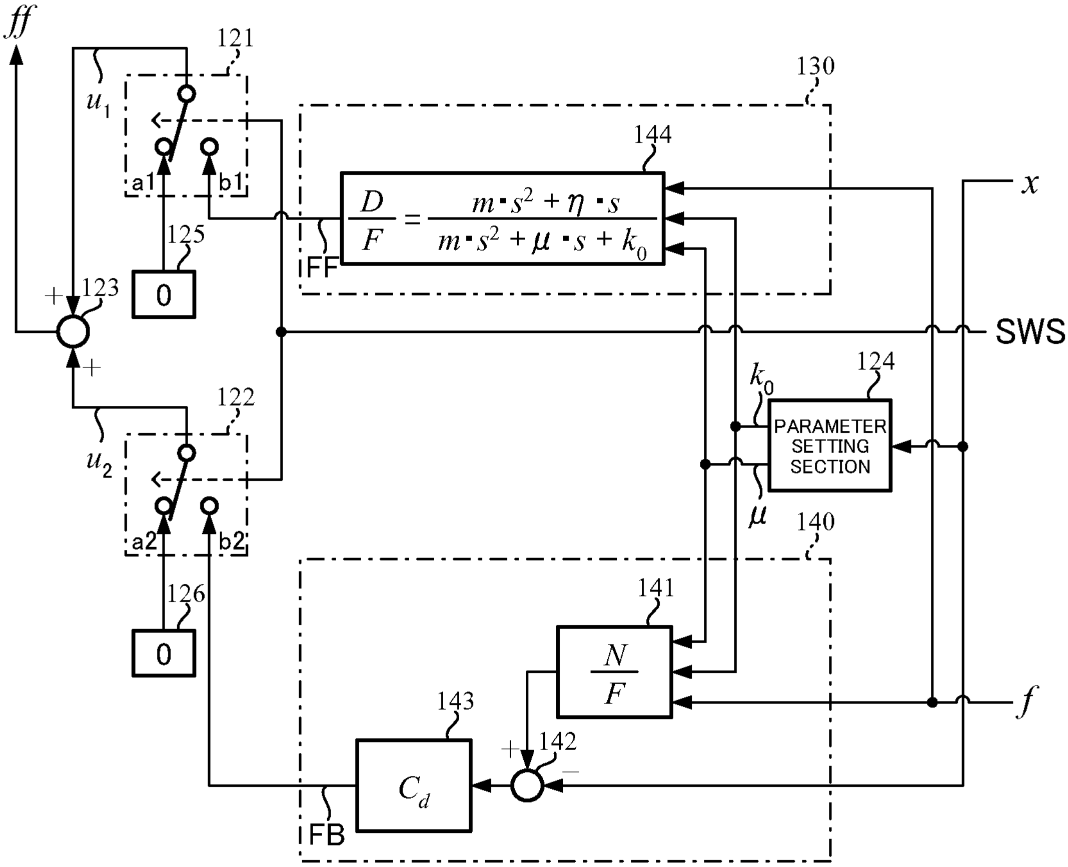
ff
121
$u_1$
a1
b1
125
0
123
+
+
122
$u_2$
a2
b2
126
0
130
144
$\frac{D}{F} = \frac{m \cdot s^2 + \eta \cdot s}{m \cdot s^2 + \mu \cdot s + k_0}$
FF
x
SWS
$k_0$
124
PARAMETER SETTING SECTION
$\mu$
140
141
$\frac{N}{F}$
f
143
142
+
−
$C_d$
FB

FIG.15

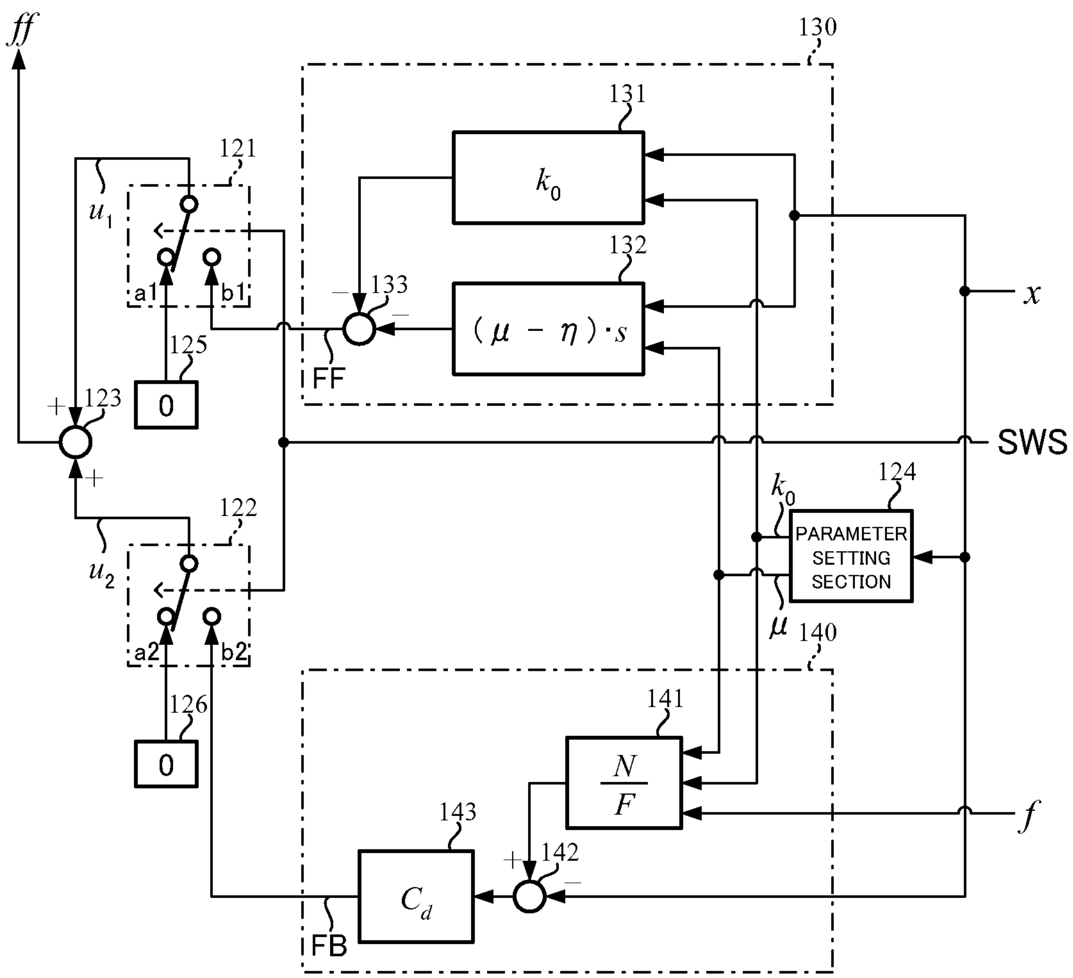
ff
130
131
$k_0$
121
$u_1$
132
a1
b1
133
$(\mu - \eta)\cdot s$
x
125
FF
0
123
SWS
$k_0$
124
122
PARAMETER
SETTING
SECTION
$u_2$
a2
b2
$\mu$
140
126
141
0
$\frac{N}{F}$
f
143
142
$C_d$
FB

FIG.16

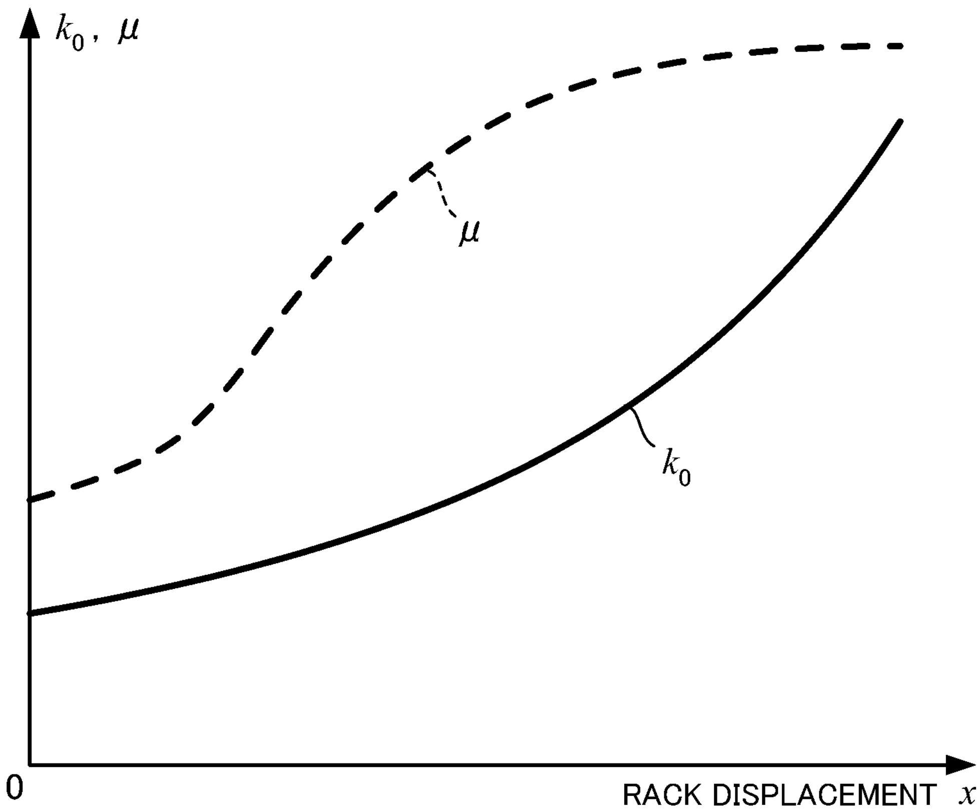

FIG.17

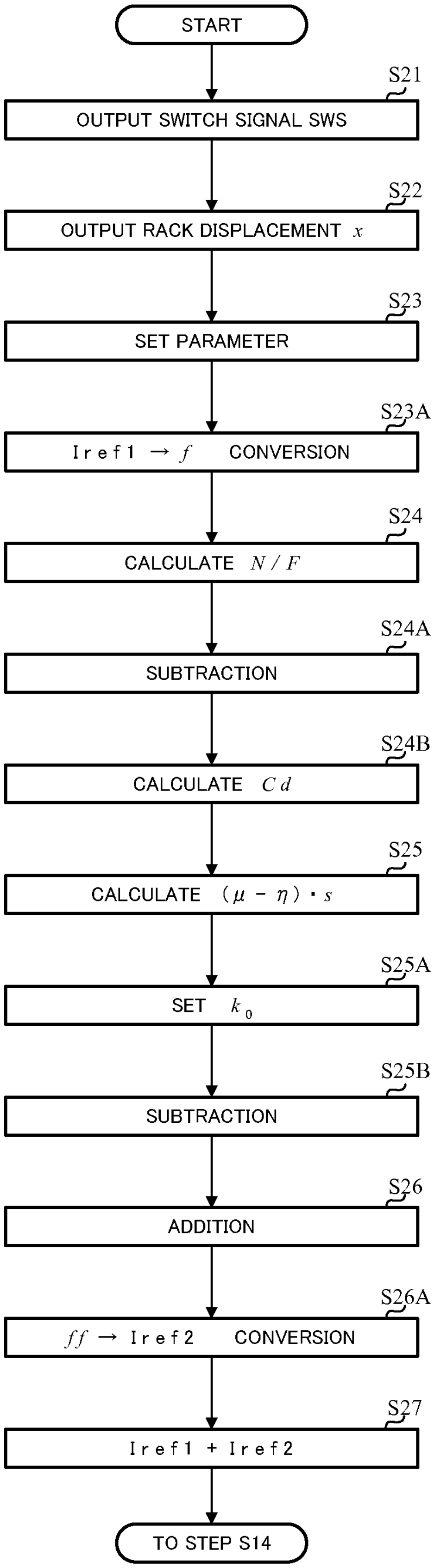
START
S21
OUTPUT SWITCH SIGNAL SWS
S22
OUTPUT RACK DISPLACEMENT $x$
S23
SET PARAMETER
S23A
Iref1 → $f$ CONVERSION
S24
CALCULATE $N/F$
S24A
SUBTRACTION
S24B
CALCULATE $Cd$
S25
CALCULATE $(\mu - \eta) \cdot s$
S25A
SET $k_0$
S25B
SUBTRACTION
S26
ADDITION
S26A
$ff$ → Iref2 CONVERSION
S27
Iref1 + Iref2
TO STEP S14

FIG.18

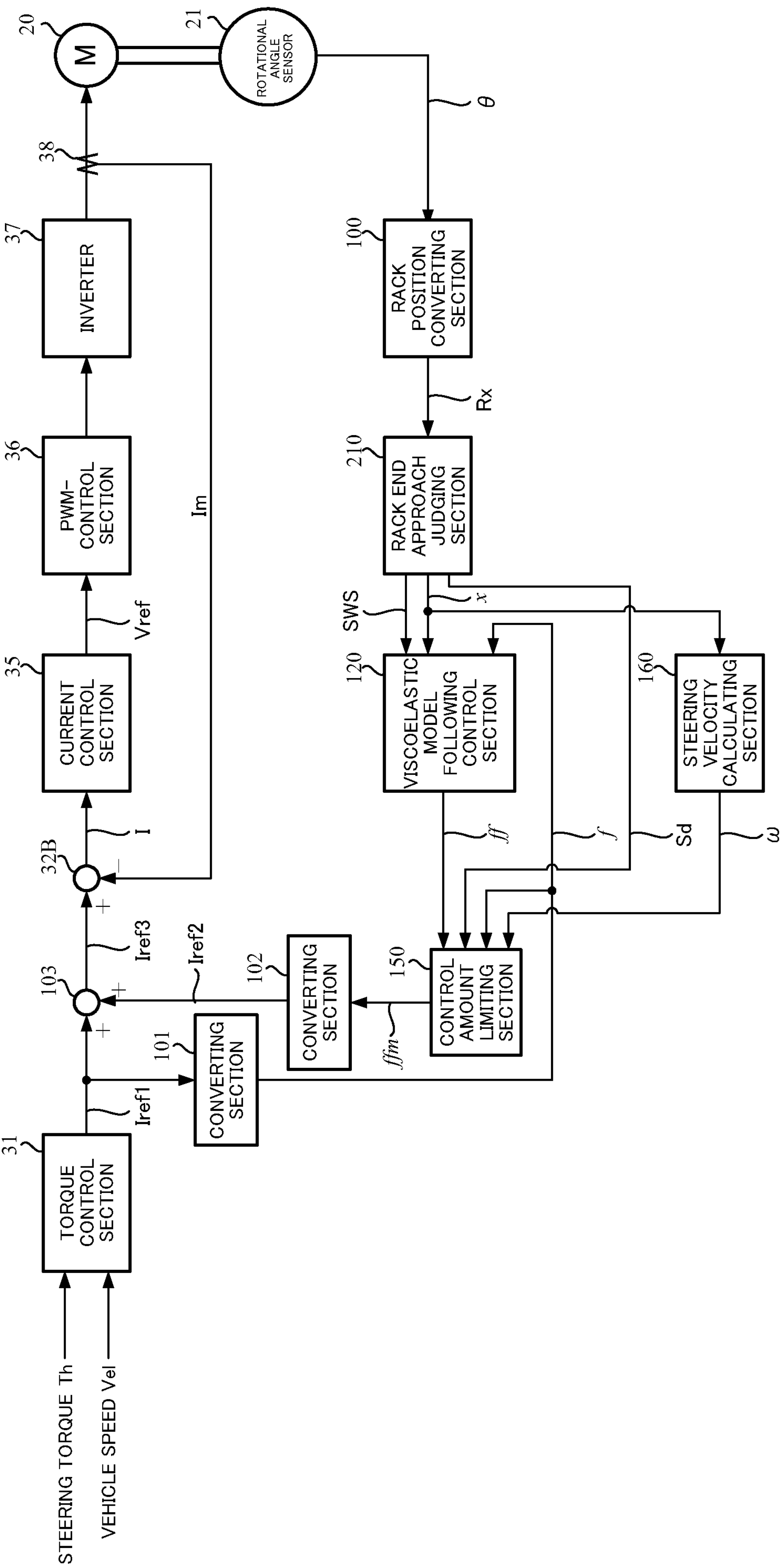

STEERING TORQUE Th
VEHICLE SPEED Vel
31
TORQUE CONTROL SECTION
Iref1
101
CONVERTING SECTION
103
Iref2
102
CONVERTING SECTION
Iref3
32B
I
35
CURRENT CONTROL SECTION
Vref
36
PWM-CONTROL SECTION
37
INVERTER
38
Im
20
M
21
ROTATIONAL ANGLE SENSOR
θ
100
RACK POSITION CONVERTING SECTION
Rx
210
RACK END APPROACH JUDGING SECTION
SWS
x
120
VISCOELASTIC MODEL FOLLOWING CONTROL SECTION
160
STEERING VELOCITY CALCULATING SECTION
ff
f
Sd
ω
150
CONTROL AMOUNT LIMITING SECTION
ffm

FIG.19

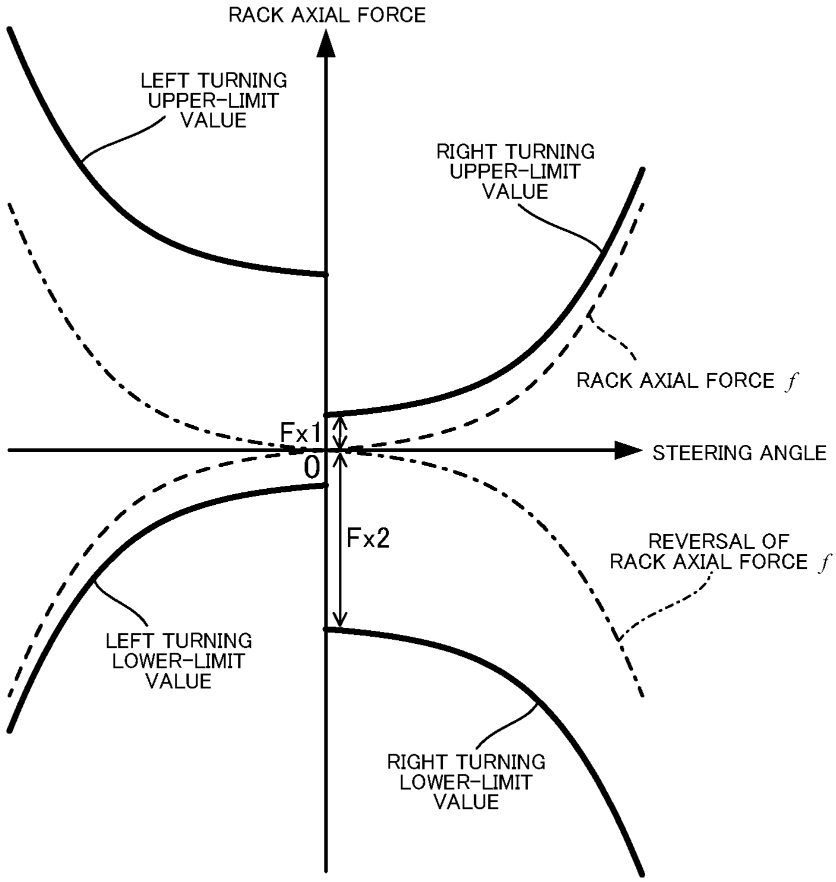
RACK AXIAL FORCE
LEFT TURNING UPPER-LIMIT VALUE
RIGHT TURNING UPPER-LIMIT VALUE
RACK AXIAL FORCE f
Fx1
0
STEERING ANGLE
Fx2
REVERSAL OF RACK AXIAL FORCE f
LEFT TURNING LOWER-LIMIT VALUE
RIGHT TURNING LOWER-LIMIT VALUE

FIG.20

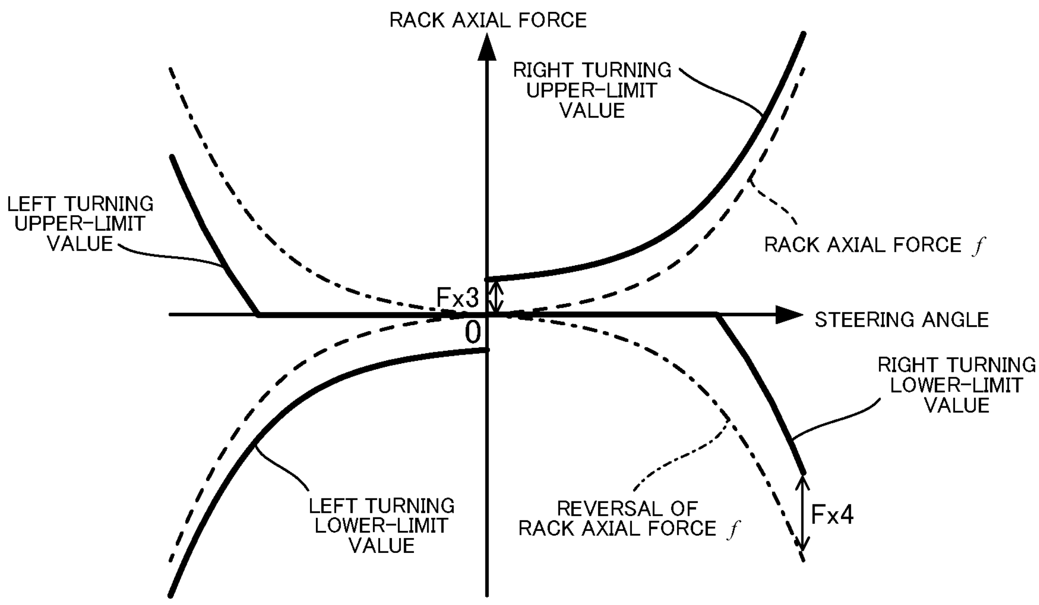
RACK AXIAL FORCE
RIGHT TURNING UPPER-LIMIT VALUE
LEFT TURNING UPPER-LIMIT VALUE
RACK AXIAL FORCE f
Fx3
0
STEERING ANGLE
RIGHT TURNING LOWER-LIMIT VALUE
LEFT TURNING LOWER-LIMIT VALUE
REVERSAL OF RACK AXIAL FORCE f
Fx4

FIG.21

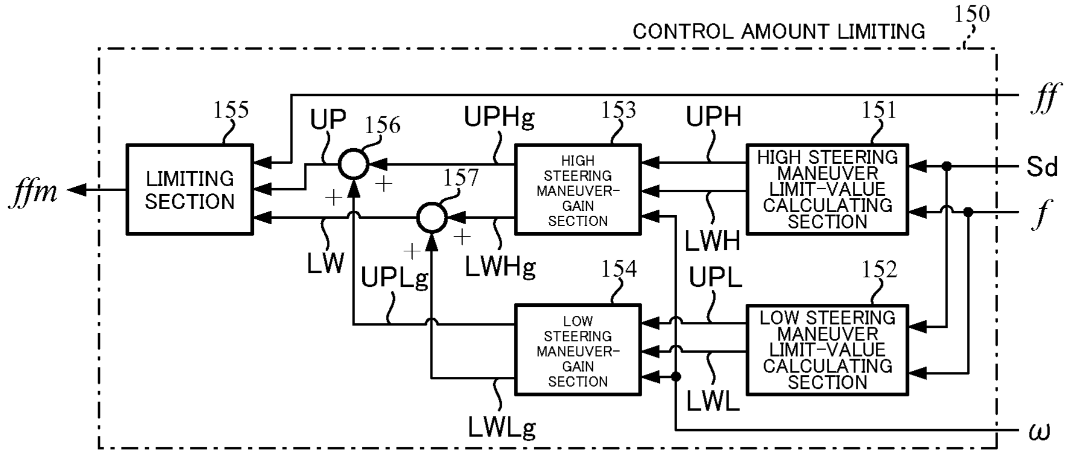


FIG.22

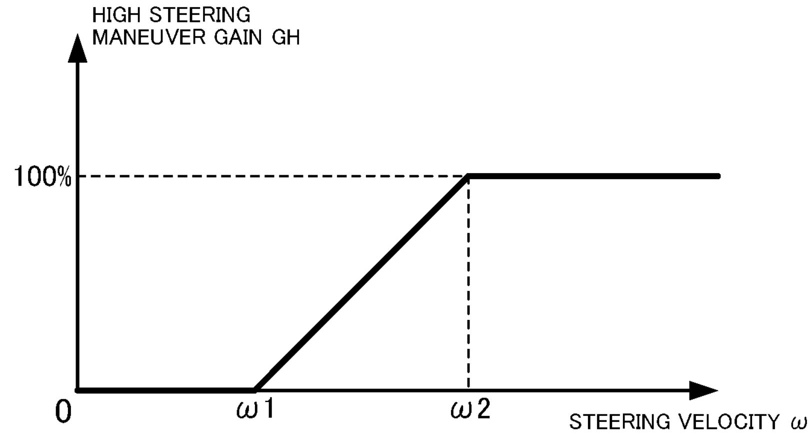


FIG.23

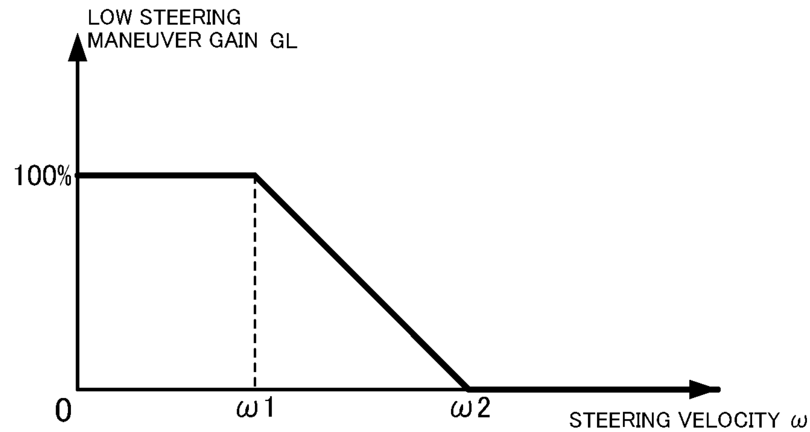

FIG.24

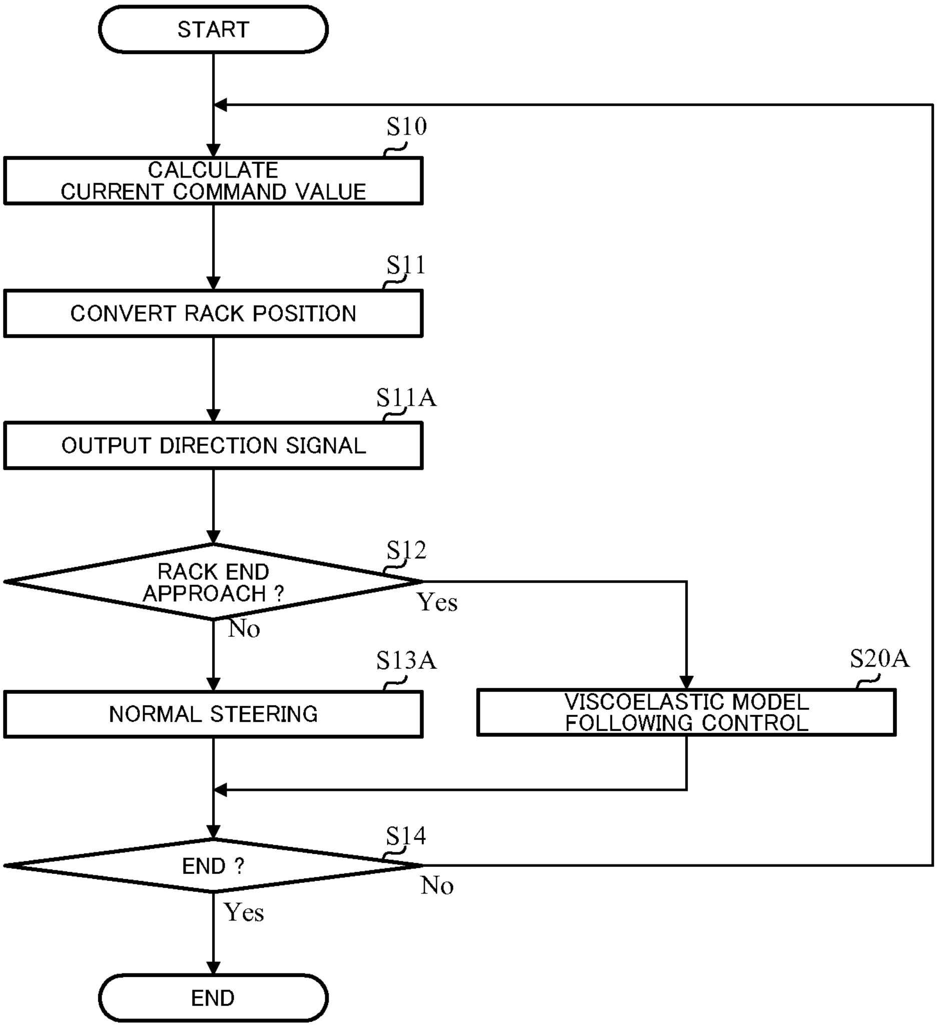
START
S10
CALCULATE CURRENT COMMAND VALUE
S11
CONVERT RACK POSITION
S11A
OUTPUT DIRECTION SIGNAL
S12
RACK END APPROACH ?
Yes
No
S13A
NORMAL STEERING
S20A
VISCOELASTIC MODEL FOLLOWING CONTROL
S14
END ?
No
Yes
END

FIG.25

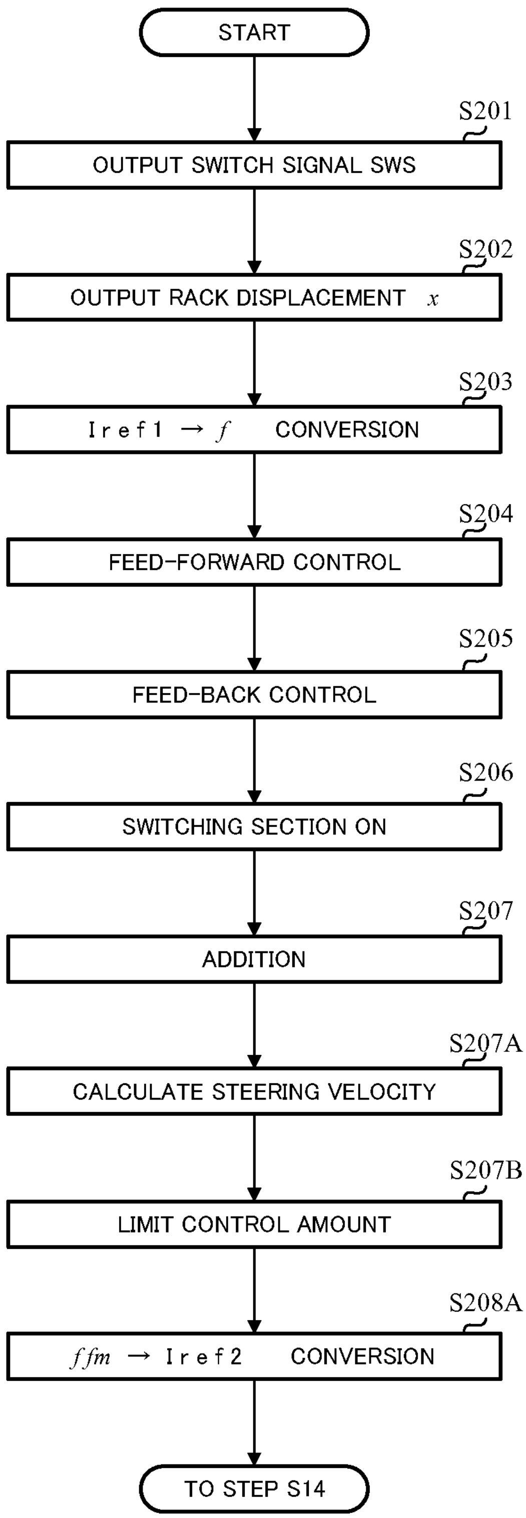
START
S201
OUTPUT SWITCH SIGNAL SWS
S202
OUTPUT RACK DISPLACEMENT x
S203
Iref1 → f CONVERSION
S204
FEED-FORWARD CONTROL
S205
FEED-BACK CONTROL
S206
SWITCHING SECTION ON
S207
ADDITION
S207A
CALCULATE STEERING VELOCITY
S207B
LIMIT CONTROL AMOUNT
S208A
ffm → Iref2 CONVERSION
TO STEP S14

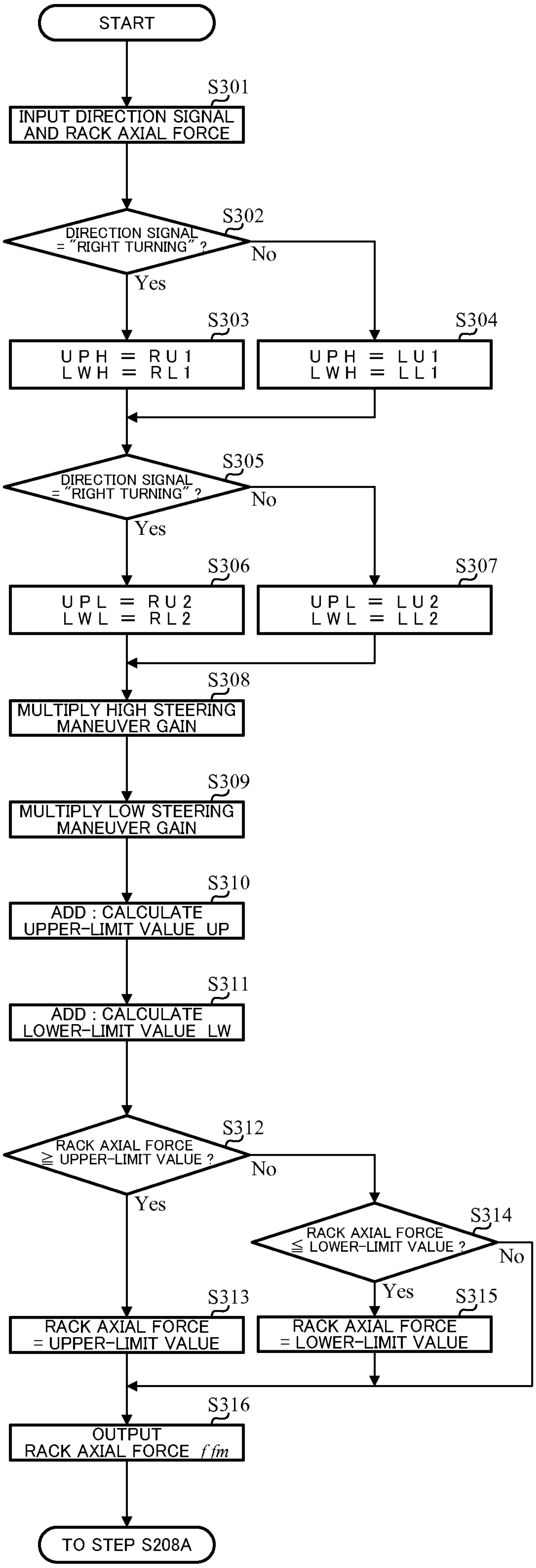
START
S301
INPUT DIRECTION SIGNAL AND RACK AXIAL FORCE
S302
DIRECTION SIGNAL = "RIGHT TURNING" ?
Yes
No
S303
UPH = RU1
LWH = RL1
S304
UPH = LU1
LWH = LL1
S305
DIRECTION SIGNAL = "RIGHT TURNING" ?
Yes
No
S306
UPL = RU2
LWL = RL2
S307
UPL = LU2
LWL = LL2
S308
MULTIPLY HIGH STEERING MANEUVER GAIN
S309
MULTIPLY LOW STEERING MANEUVER GAIN
S310
ADD : CALCULATE UPPER-LIMIT VALUE UP
S311
ADD : CALCULATE LOWER-LIMIT VALUE LW
S312
RACK AXIAL FORCE ≧ UPPER-LIMIT VALUE ?
Yes
No
S314
RACK AXIAL FORCE ≦ LOWER-LIMIT VALUE ?
Yes
No
S313
RACK AXIAL FORCE = UPPER-LIMIT VALUE
S315
RACK AXIAL FORCE = LOWER-LIMIT VALUE
S316
OUTPUT RACK AXIAL FORCE ffm
TO STEP S208A

FIG.27

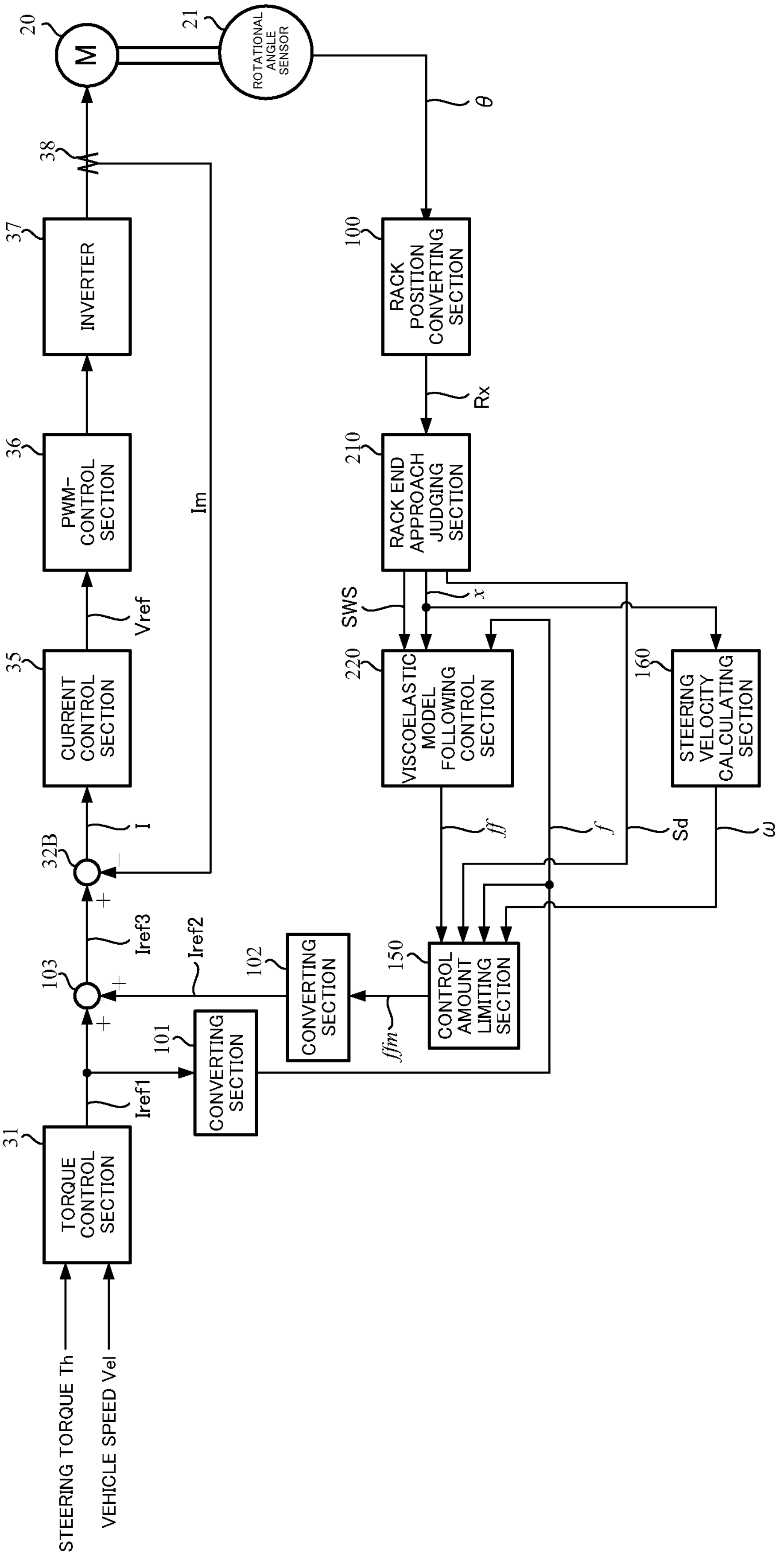
STEERING TORQUE Th
VEHICLE SPEED Vel
31
TORQUE CONTROL SECTION
Iref1
101
CONVERTING SECTION
103
Iref2
102
CONVERTING SECTION
ffm
150
CONTROL AMOUNT LIMITING SECTION
Iref3
32B
I
Im
35
CURRENT CONTROL SECTION
Vref
36
PWM-CONTROL SECTION
37
INVERTER
38
20
M
21
ROTATIONAL ANGLE SENSOR
θ
100
RACK POSITION CONVERTING SECTION
Rx
210
RACK END APPROACH JUDGING SECTION
SWS
x
220
VISCOELASTIC MODEL FOLLOWING CONTROL SECTION
ff
f
Sd
160
STEERING VELOCITY CALCULATING SECTION
ω

FIG.28

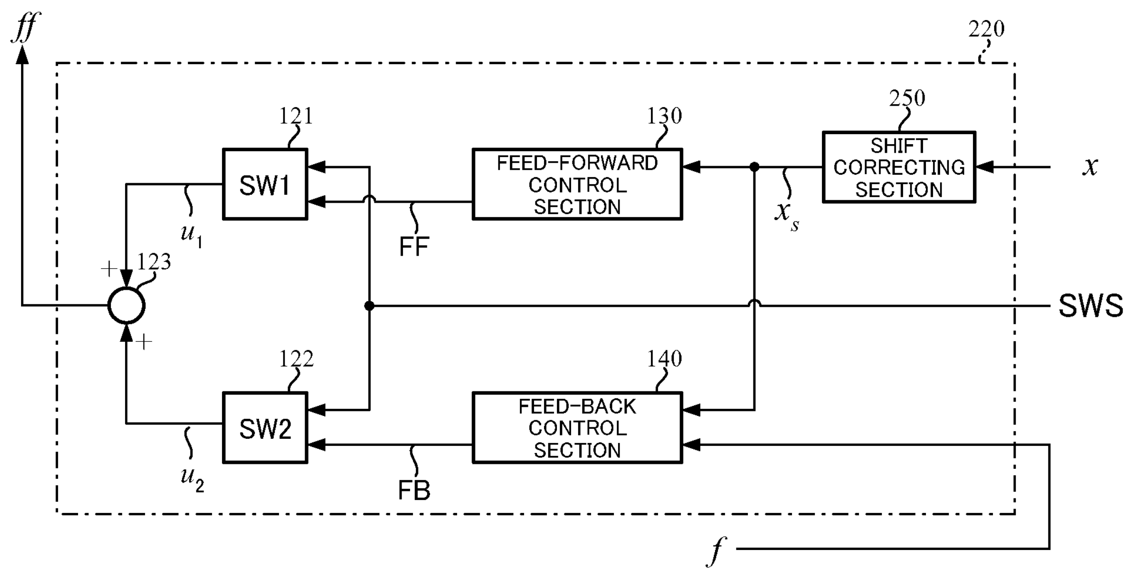
ff
220
250
121
130
SW1
FEED-FORWARD CONTROL SECTION
SHIFT CORRECTING SECTION
x
u1
FF
xs
123
SWS
122
140
SW2
FEED-BACK CONTROL SECTION
u2
FB
f

FIG.29

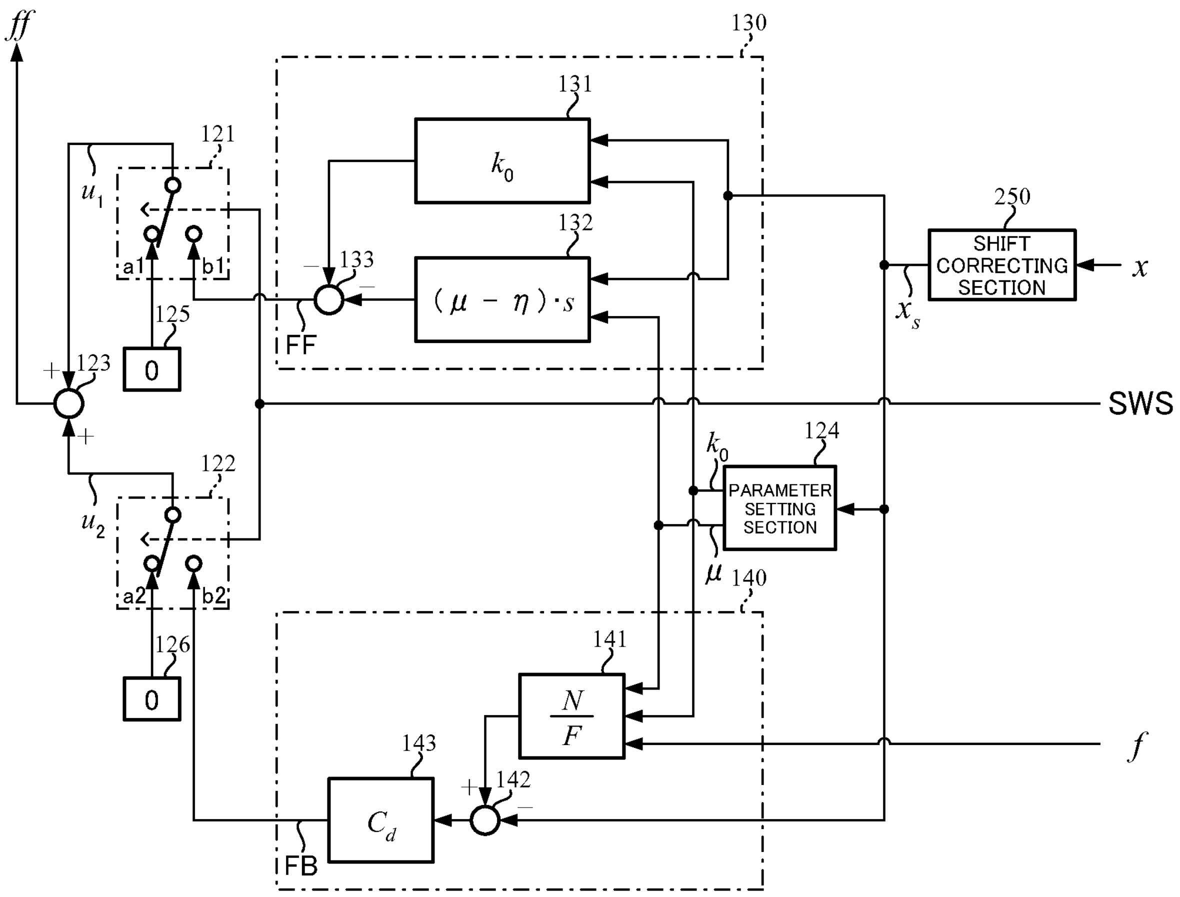
ff
130
131
121
k0
u1
a1
b1
132
133
(μ − η)·s
250
SHIFT CORRECTING SECTION
x
xs
FF
125
0
123
SWS
k0
124
122
PARAMETER SETTING SECTION
u2
μ
140
a2
b2
126
0
141
N/F
f
143
142
Cd
FB

FIG.30

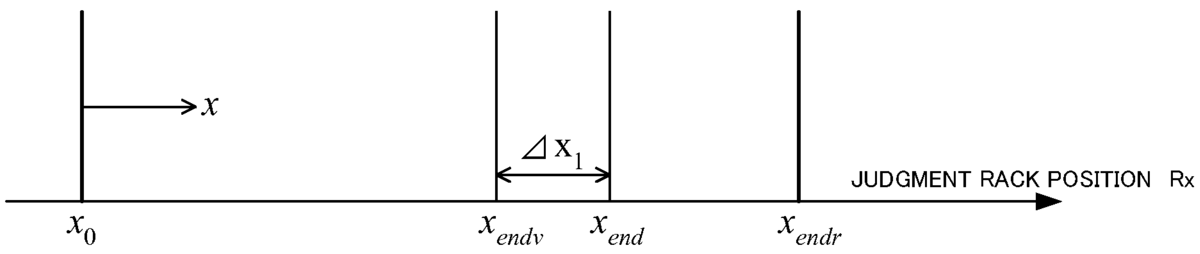

FIG.31

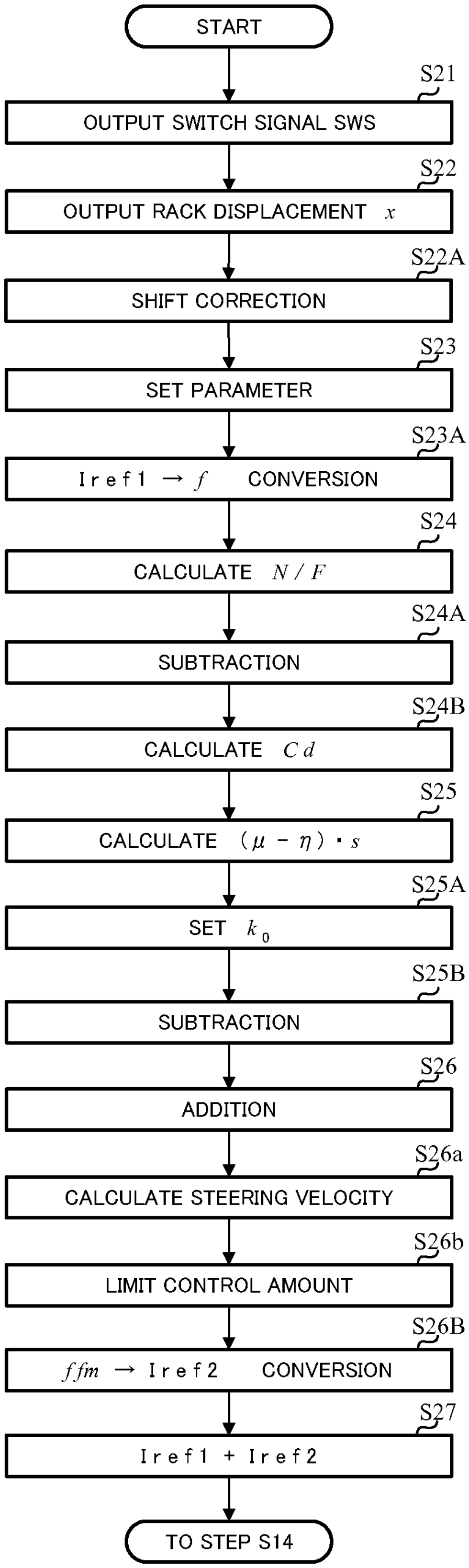
START
S21
OUTPUT SWITCH SIGNAL SWS
S22
OUTPUT RACK DISPLACEMENT x
S22A
SHIFT CORRECTION
S23
SET PARAMETER
S23A
Iref1 → f CONVERSION
S24
CALCULATE N / F
S24A
SUBTRACTION
S24B
CALCULATE Cd
S25
CALCULATE (μ − η)・s
S25A
SET k0
S25B
SUBTRACTION
S26
ADDITION
S26a
CALCULATE STEERING VELOCITY
S26b
LIMIT CONTROL AMOUNT
S26B
ffm → Iref2 CONVERSION
S27
Iref1 + Iref2
TO STEP S14

FIG.32

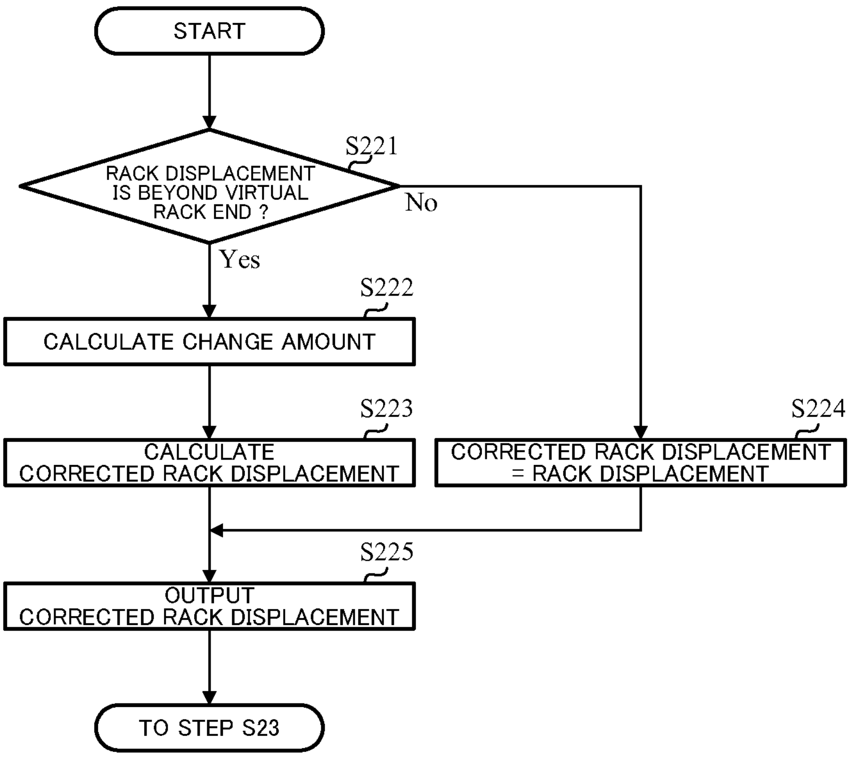
START
RACK DISPLACEMENT IS BEYOND VIRTUAL RACK END ?
S221
No
Yes
S222
CALCULATE CHANGE AMOUNT
S223
CALCULATE CORRECTED RACK DISPLACEMENT
S224
CORRECTED RACK DISPLACEMENT = RACK DISPLACEMENT
S225
OUTPUT CORRECTED RACK DISPLACEMENT
TO STEP S23

**FIG.33**

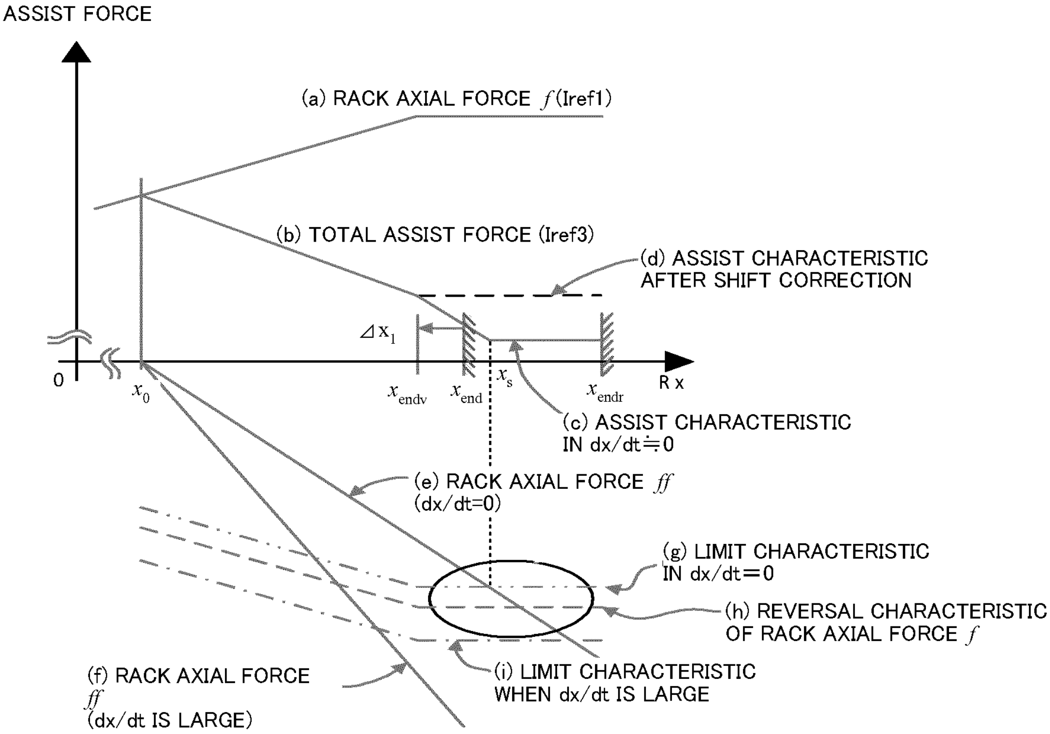
ASSIST FORCE
(a) RACK AXIAL FORCE f (Iref1)
(b) TOTAL ASSIST FORCE (Iref3)
(d) ASSIST CHARACTERISTIC AFTER SHIFT CORRECTION
⊿x1
0
x0
xendv
xend
xs
xendr
R x
(c) ASSIST CHARACTERISTIC IN dx/dt≒0
(e) RACK AXIAL FORCE ff (dx/dt=0)
(g) LIMIT CHARACTERISTIC IN dx/dt=0
(h) REVERSAL CHARACTERISTIC OF RACK AXIAL FORCE f
(i) LIMIT CHARACTERISTIC WHEN dx/dt IS LARGE
(f) RACK AXIAL FORCE ff (dx/dt IS LARGE)

**FIG.34**

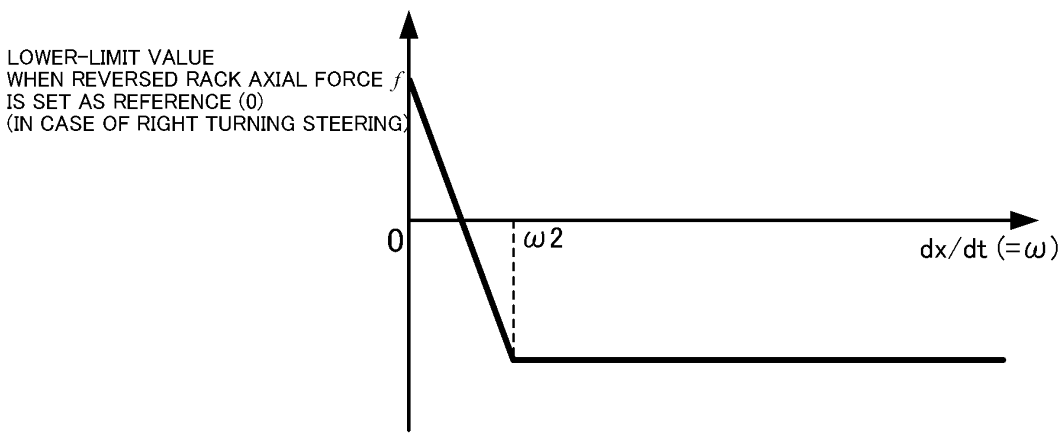
LOWER-LIMIT VALUE
WHEN REVERSED RACK AXIAL FORCE f
IS SET AS REFERENCE (0)
(IN CASE OF RIGHT TURNING STEERING)
0
ω2
dx/dt (=ω)

**FIG.35**

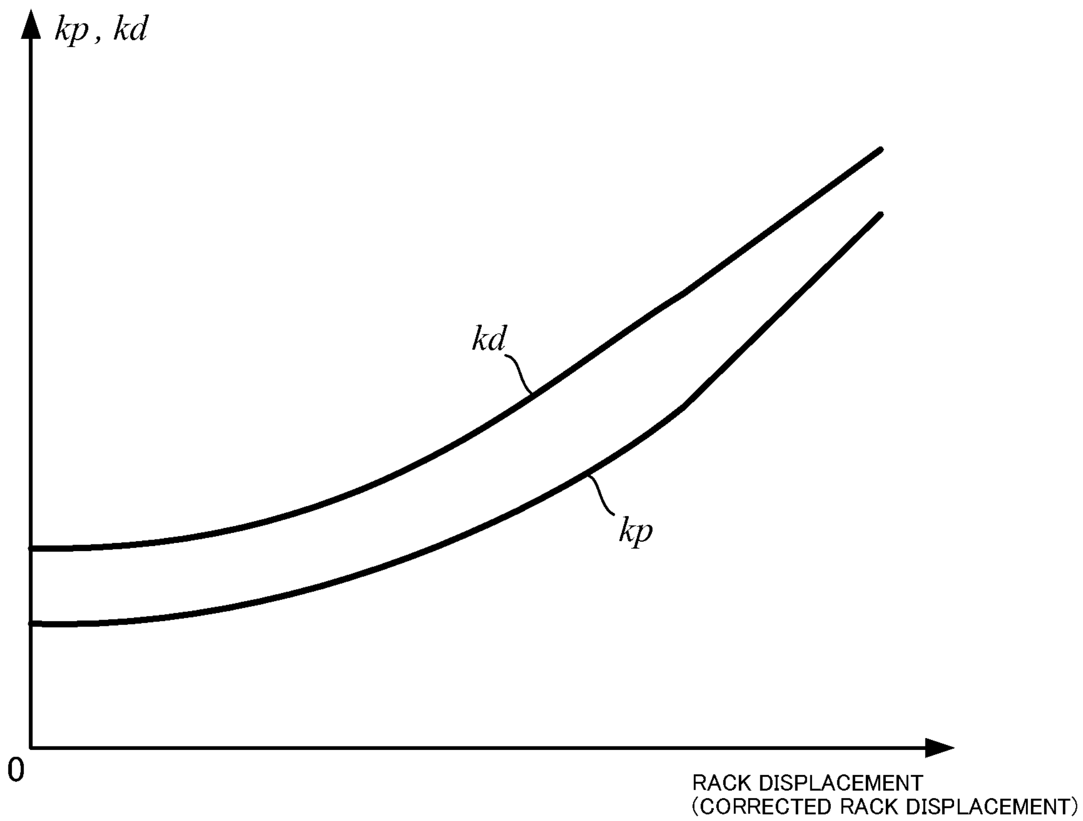
kp , kd
kd
kp
0
RACK DISPLACEMENT
(CORRECTED RACK DISPLACEMENT)

FIG.36

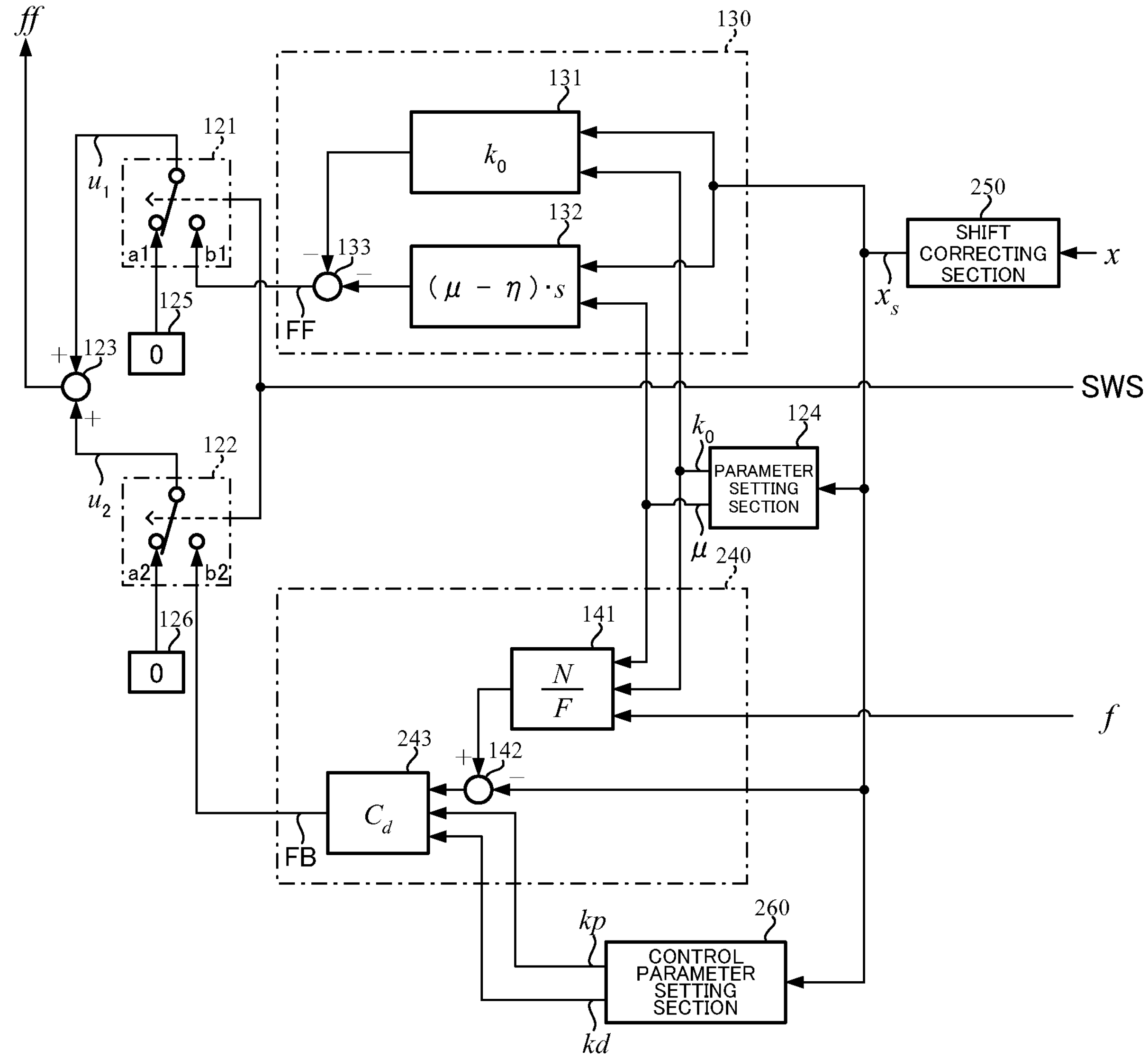

ff
130
131
$k_0$
121
$u_1$
250
SHIFT CORRECTING SECTION
x
a1
b1
132
133
$(\mu - \eta)\cdot s$
$x_s$
125
FF
0
123
SWS
124
$k_0$
122
PARAMETER SETTING SECTION
$u_2$
a2
b2
$\mu$
240
126
141
0
$\frac{N}{F}$
f
243
142
$C_d$
FB
260
kp
CONTROL PARAMETER SETTING SECTION
kd

FIG.37

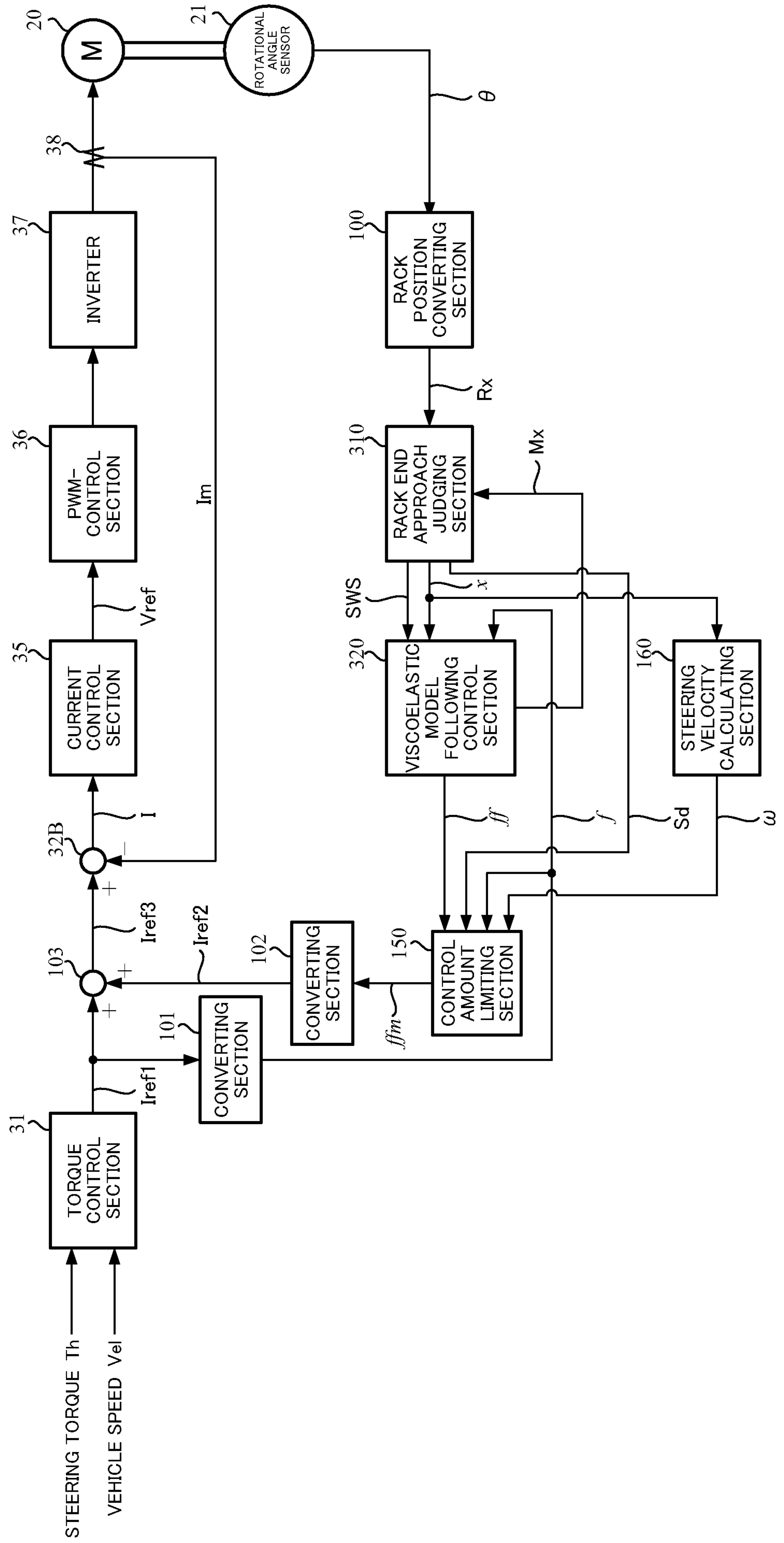
STEERING TORQUE Th
VEHICLE SPEED Vel
31
TORQUE CONTROL SECTION
Iref1
101
CONVERTING SECTION
103
Iref2
102
CONVERTING SECTION
Iref3
32B
I
Im
35
CURRENT CONTROL SECTION
Vref
36
PWM-CONTROL SECTION
37
INVERTER
38
20
M
21
ROTATIONAL ANGLE SENSOR
θ
100
RACK POSITION CONVERTING SECTION
Rx
310
RACK END APPROACH JUDGING SECTION
Mx
SWS
x
320
VISCOELASTIC MODEL FOLLOWING CONTROL SECTION
160
STEERING VELOCITY CALCULATING SECTION
ff
f
Sd
ω
150
CONTROL AMOUNT LIMITING SECTION
ffm

FIG.38

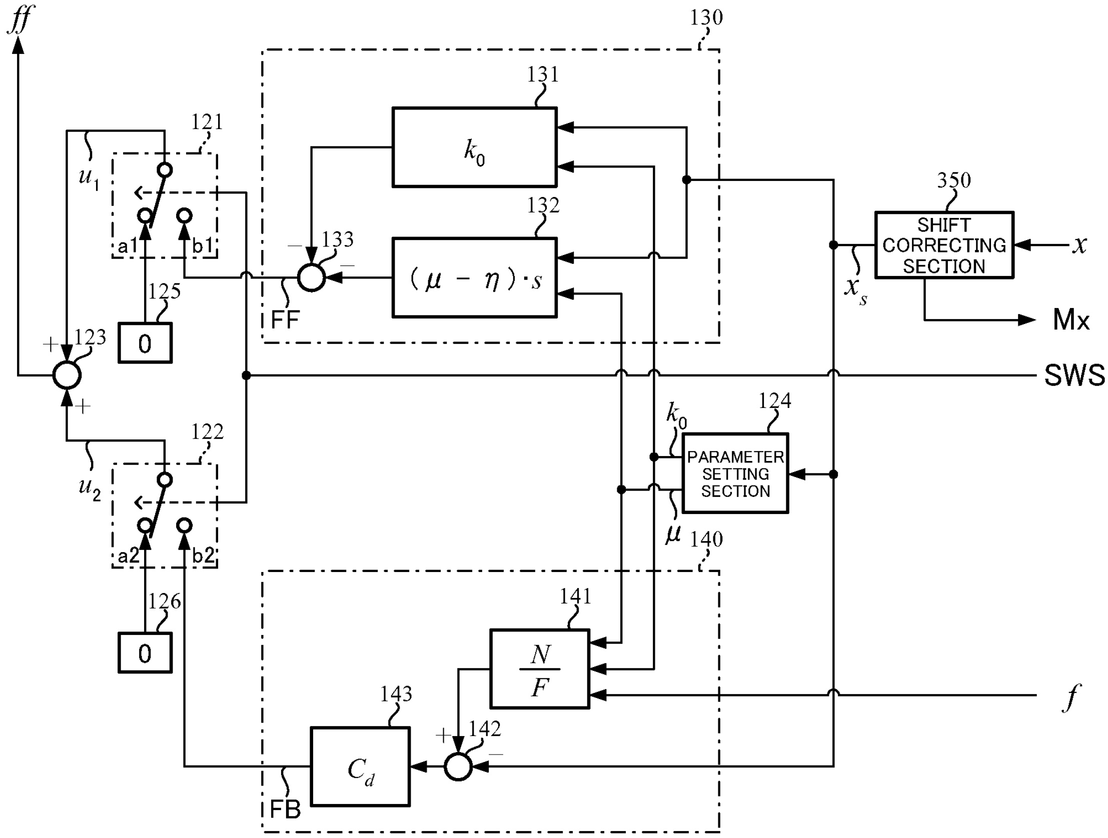
ff
130
131
$k_0$
121
$u_1$
a1
b1
132
133
$(\mu - \eta)\cdot s$
FF
125
0
123
350
SHIFT CORRECTING SECTION
x
$x_s$
Mx
SWS
124
$k_0$
PARAMETER SETTING SECTION
$\mu$
122
$u_2$
a2
b2
140
126
0
141
$\frac{N}{F}$
143
142
$C_d$
FB
f

FIG.39

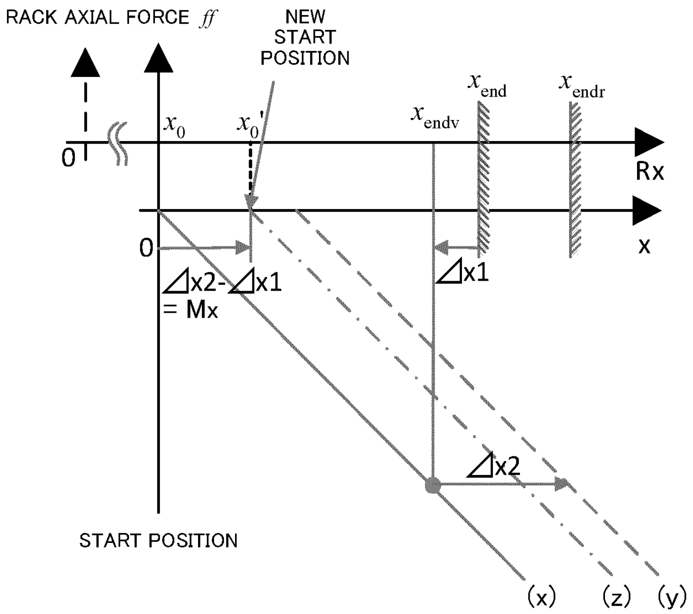
RACK AXIAL FORCE ff
NEW START POSITION
$x_0$
$x_0'$
$x_{endv}$
$x_{end}$
$x_{endr}$
0
Rx
0
x
⊿x2-⊿x1 = Mx
⊿x1
⊿x2
START POSITION
(x)
(z)
(y)

FIG.40

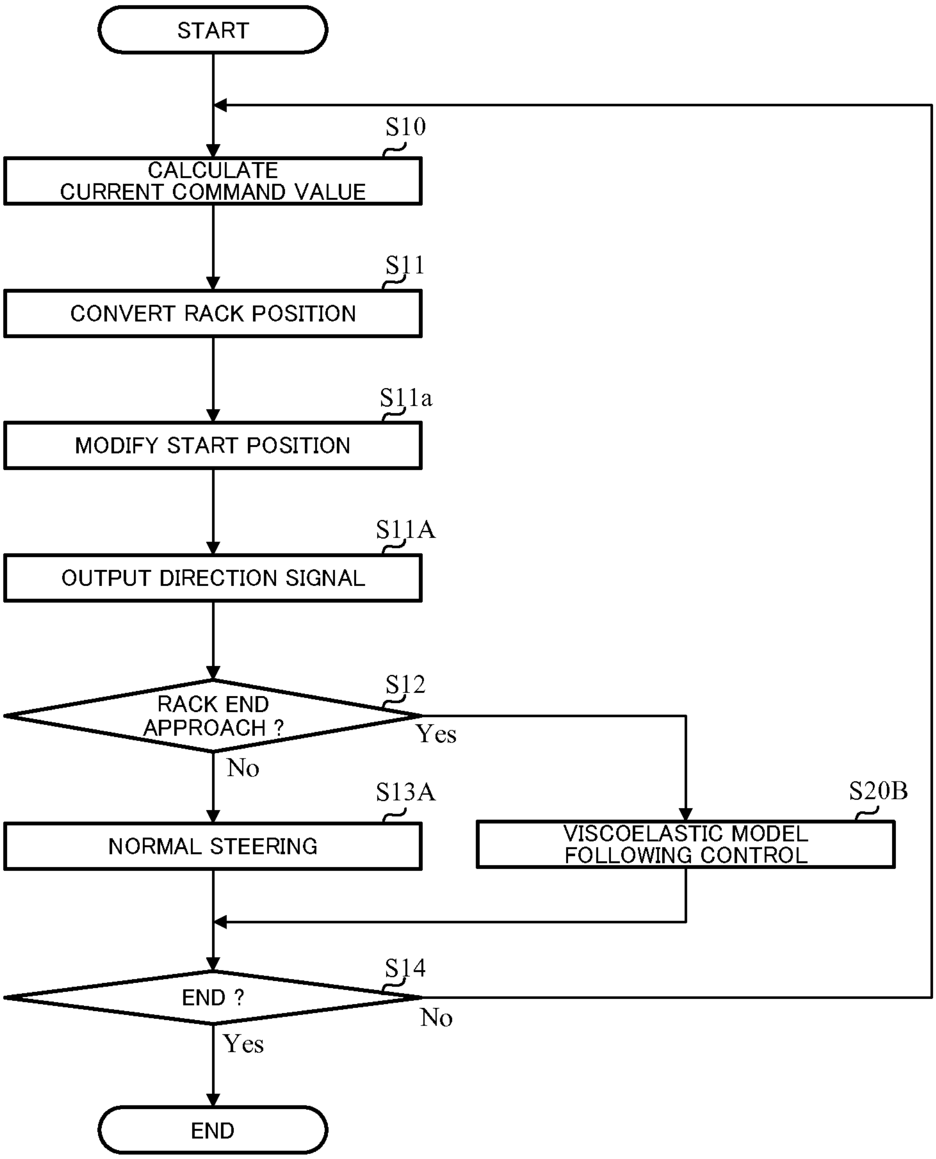
START
S10
CALCULATE CURRENT COMMAND VALUE
S11
CONVERT RACK POSITION
S11a
MODIFY START POSITION
S11A
OUTPUT DIRECTION SIGNAL
S12
RACK END APPROACH ?
Yes
No
S13A
NORMAL STEERING
S20B
VISCOELASTIC MODEL FOLLOWING CONTROL
S14
END ?
No
Yes
END

FIG.41

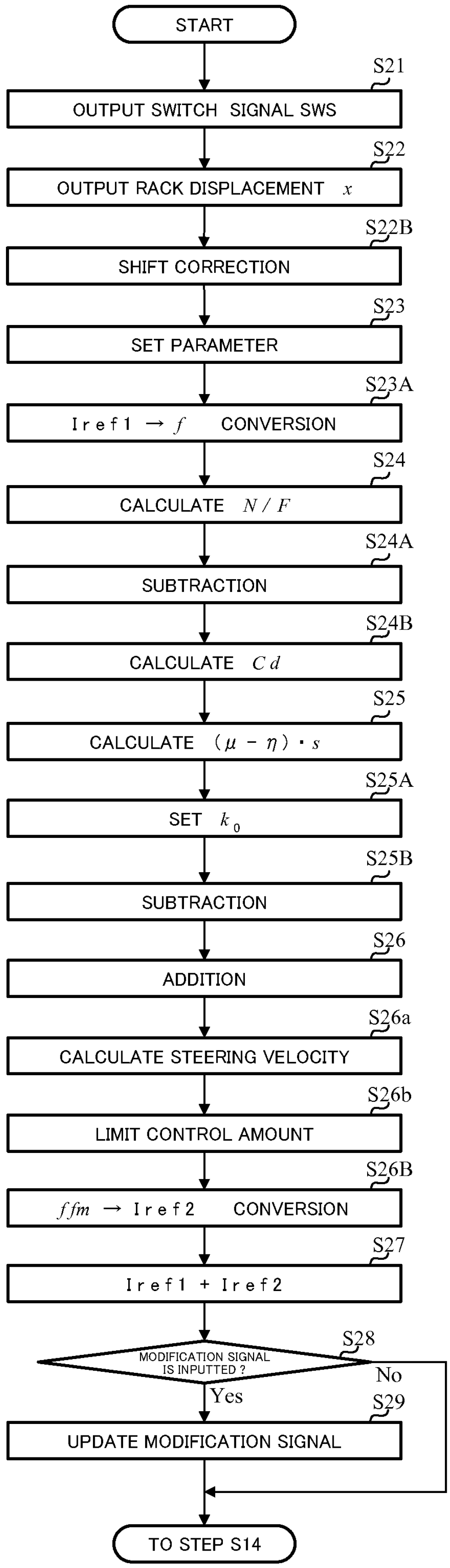
START
S21
OUTPUT SWITCH SIGNAL SWS
S22
OUTPUT RACK DISPLACEMENT x
S22B
SHIFT CORRECTION
S23
SET PARAMETER
S23A
Iref1 → f CONVERSION
S24
CALCULATE N / F
S24A
SUBTRACTION
S24B
CALCULATE Cd
S25
CALCULATE (μ − η) · s
S25A
SET k0
S25B
SUBTRACTION
S26
ADDITION
S26a
CALCULATE STEERING VELOCITY
S26b
LIMIT CONTROL AMOUNT
S26B
ffm → Iref2 CONVERSION
S27
Iref1 + Iref2
S28
MODIFICATION SIGNAL IS INPUTTED ?
No
Yes
S29
UPDATE MODIFICATION SIGNAL
TO STEP S14

FIG.42

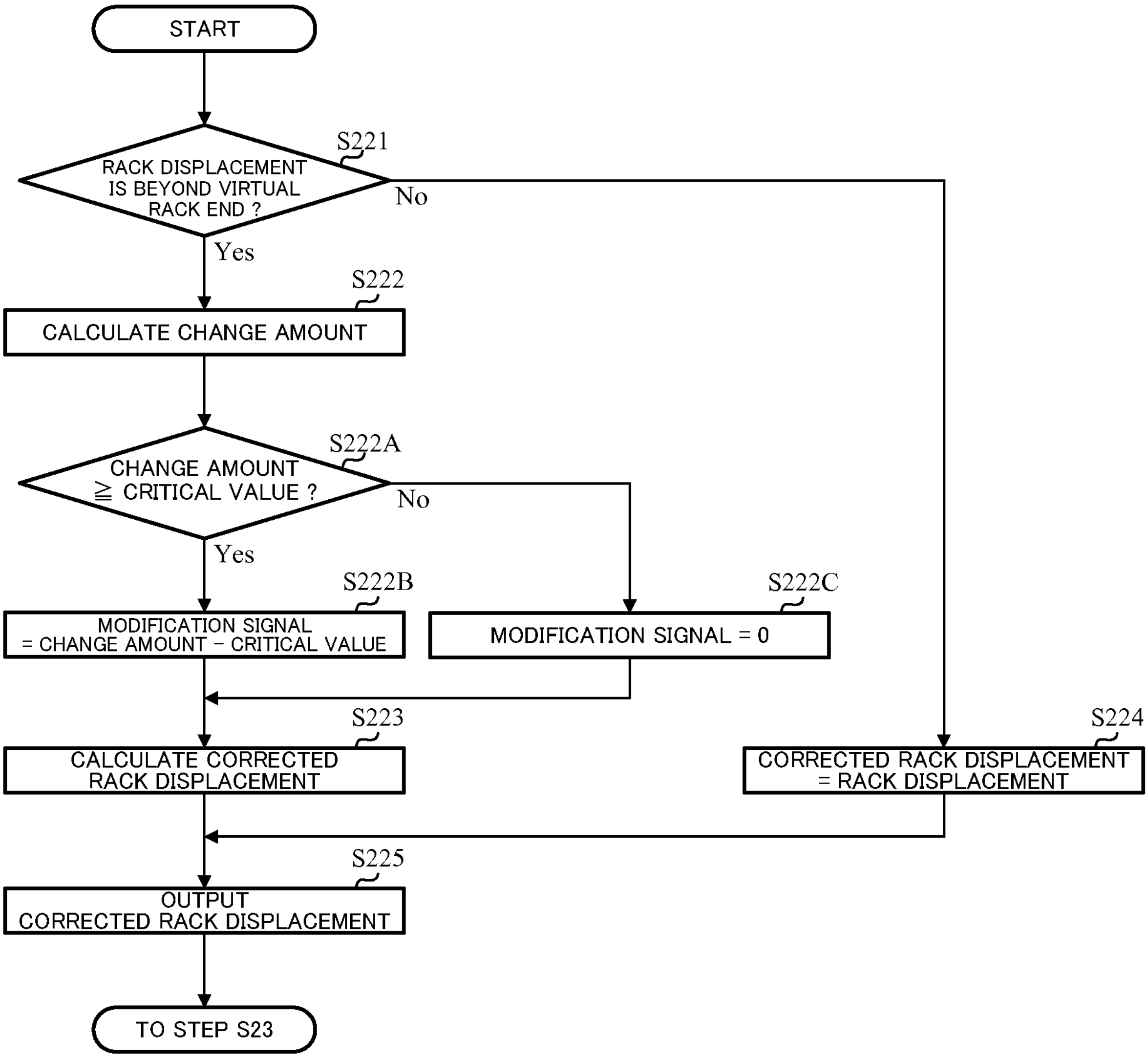
START
RACK DISPLACEMENT IS BEYOND VIRTUAL RACK END ?
S221
No
Yes
S222
CALCULATE CHANGE AMOUNT
CHANGE AMOUNT ≧ CRITICAL VALUE ?
S222A
No
Yes
S222B
MODIFICATION SIGNAL = CHANGE AMOUNT − CRITICAL VALUE
S222C
MODIFICATION SIGNAL = 0
S223
CALCULATE CORRECTED RACK DISPLACEMENT
S224
CORRECTED RACK DISPLACEMENT = RACK DISPLACEMENT
S225
OUTPUT CORRECTED RACK DISPLACEMENT
TO STEP S23

FIG.43

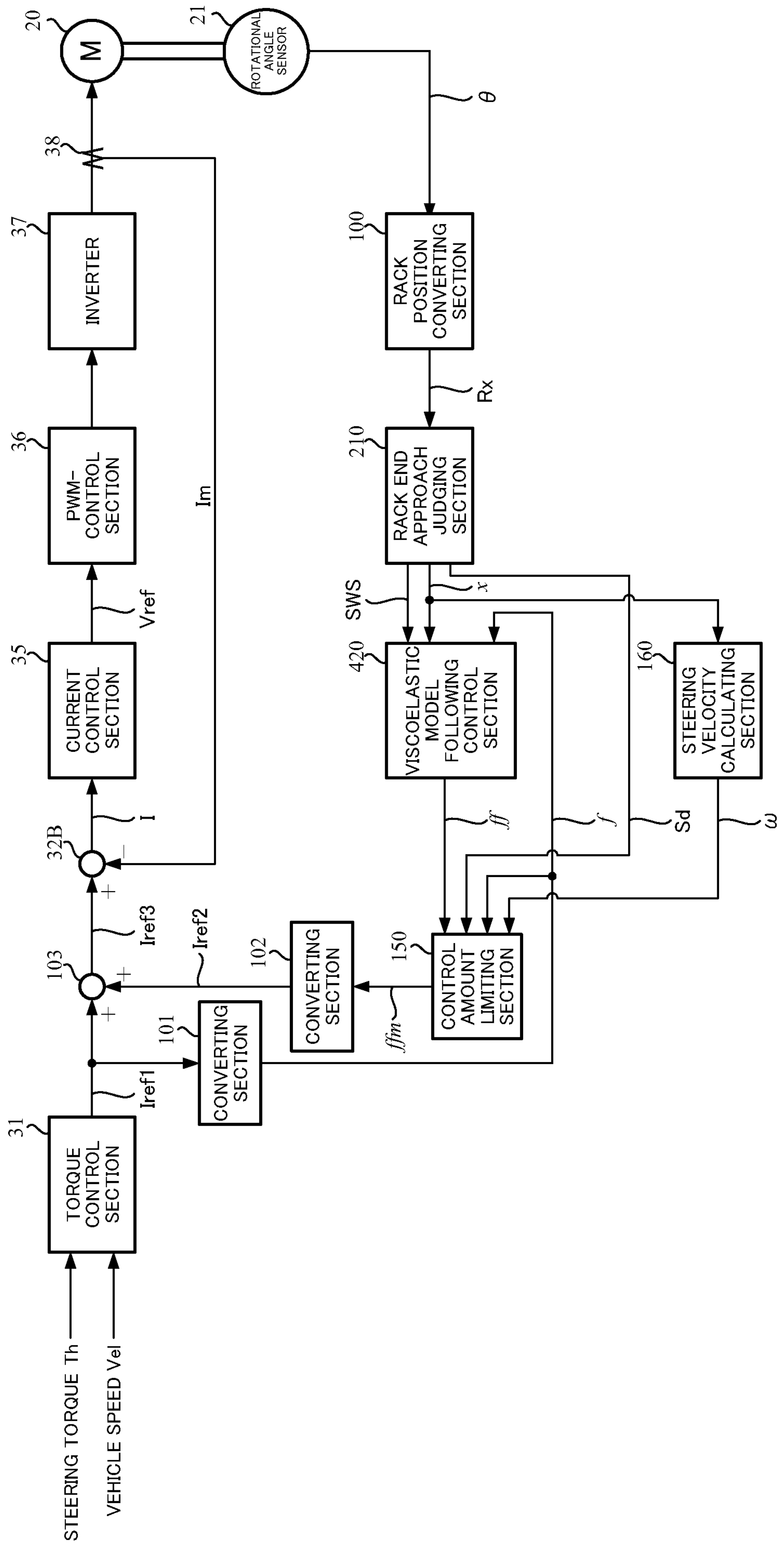
STEERING TORQUE Th
VEHICLE SPEED Vel
31
TORQUE CONTROL SECTION
Iref1
101
CONVERTING SECTION
103
Iref2
Iref3
102
CONVERTING SECTION
ffm
150
CONTROL AMOUNT LIMITING SECTION
32B
I
35
CURRENT CONTROL SECTION
Vref
36
PWM-CONTROL SECTION
37
INVERTER
38
Im
20
M
21
ROTATIONAL ANGLE SENSOR
θ
100
RACK POSITION CONVERTING SECTION
Rx
210
RACK END APPROACH JUDGING SECTION
SWS
x
420
VISCOELASTIC MODEL FOLLOWING CONTROL SECTION
160
STEERING VELOCITY CALCULATING SECTION
ff
f
Sd
ω

FIG.44

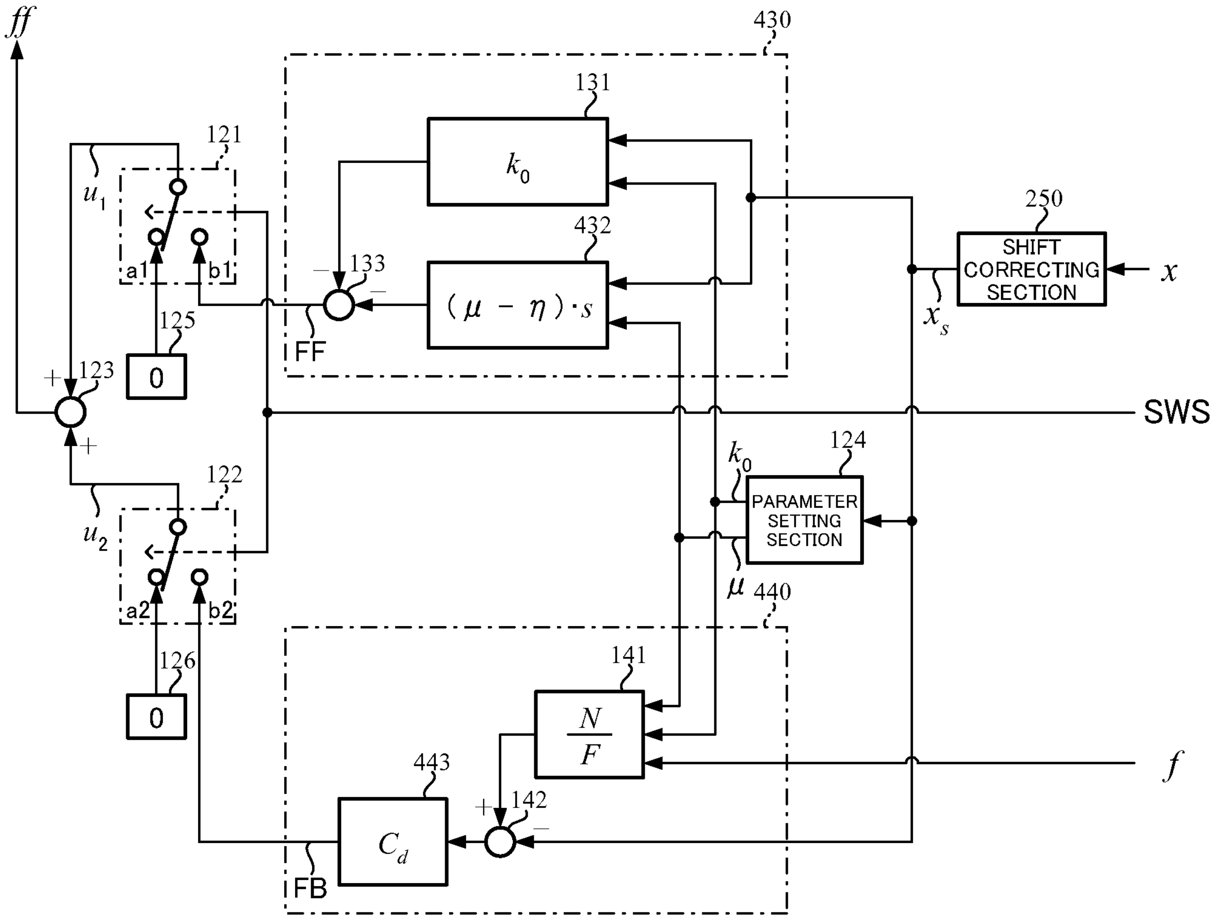

ff
430
131
$k_0$
121
$u_1$
a1
b1
250
SHIFT CORRECTING SECTION
x
432
133
$(\mu - \eta) \cdot s$
$x_s$
125
0
FF
123
SWS
$k_0$
124
122
PARAMETER SETTING SECTION
$u_2$
a2
b2
$\mu$
440
126
0
141
N/F
f
443
142
$C_d$
FB


FIG.45

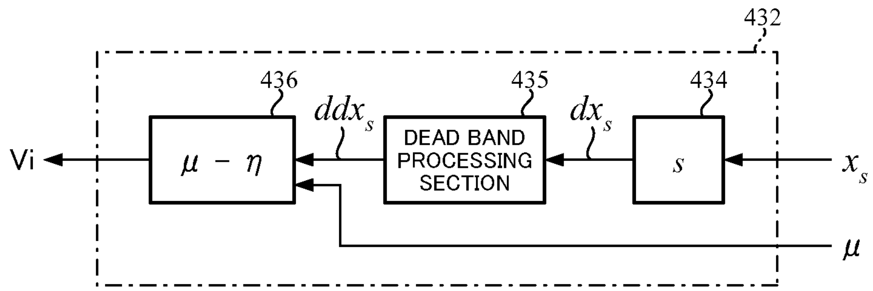

432
436
435
434
$ddx_s$
$dx_s$
Vi
$\mu - \eta$
DEAD BAND PROCESSING SECTION
s
$x_s$
$\mu$

FIG.46

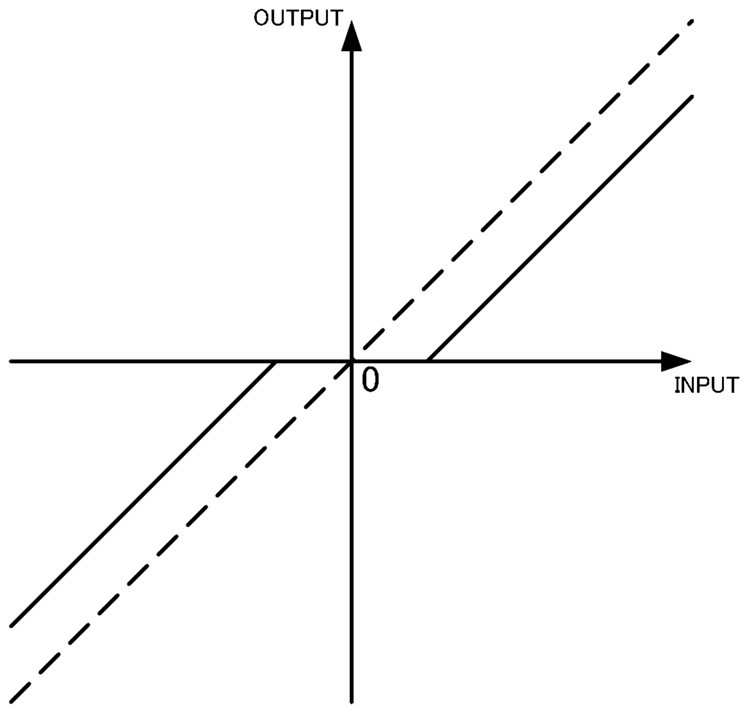
OUTPUT
0
INPUT

FIG.47

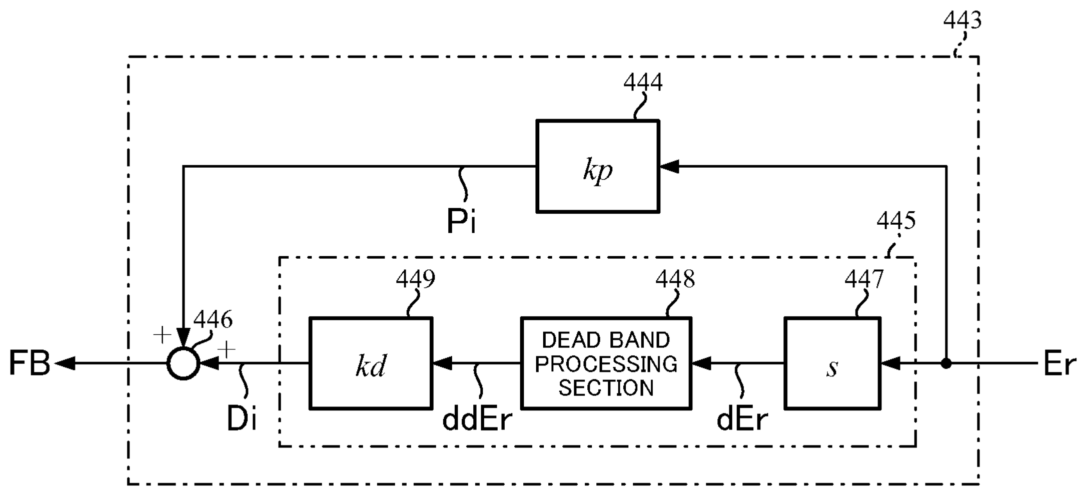
443
444
kp
Pi
445
449
448
447
446
+
+
FB
kd
DEAD BAND PROCESSING SECTION
s
Er
Di
ddEr
dEr

FIG.48

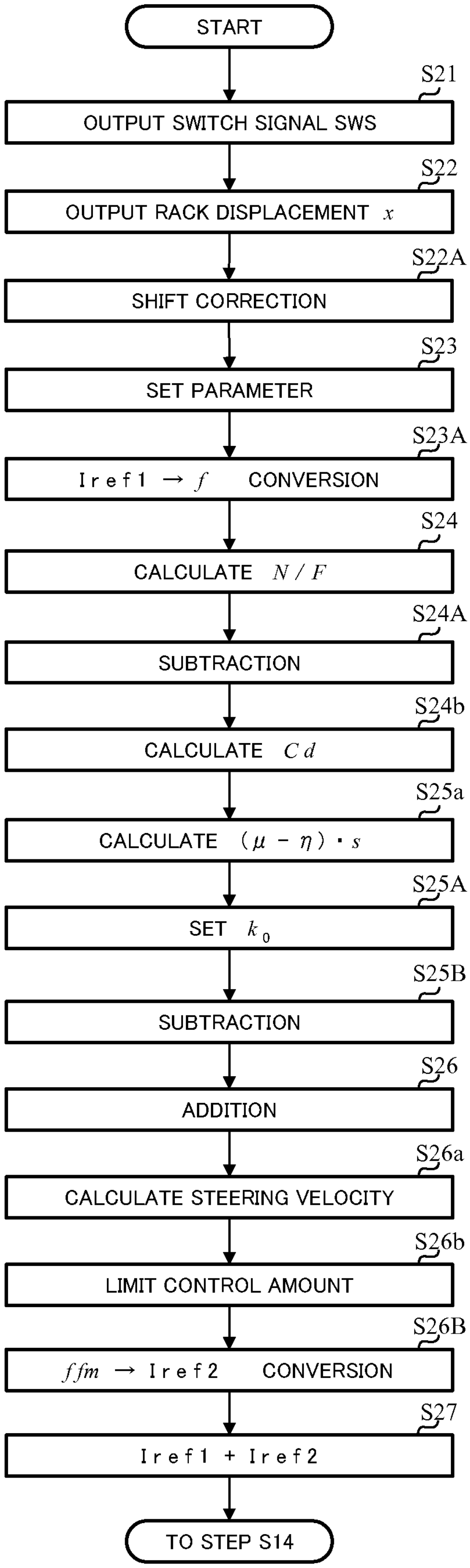
START
S21
OUTPUT SWITCH SIGNAL SWS
S22
OUTPUT RACK DISPLACEMENT x
S22A
SHIFT CORRECTION
S23
SET PARAMETER
S23A
Iref1 → f CONVERSION
S24
CALCULATE N / F
S24A
SUBTRACTION
S24b
CALCULATE Cd
S25a
CALCULATE (μ − η) · s
S25A
SET k0
S25B
SUBTRACTION
S26
ADDITION
S26a
CALCULATE STEERING VELOCITY
S26b
LIMIT CONTROL AMOUNT
S26B
ffm → Iref2 CONVERSION
S27
Iref1 + Iref2
TO STEP S14

FIG.49

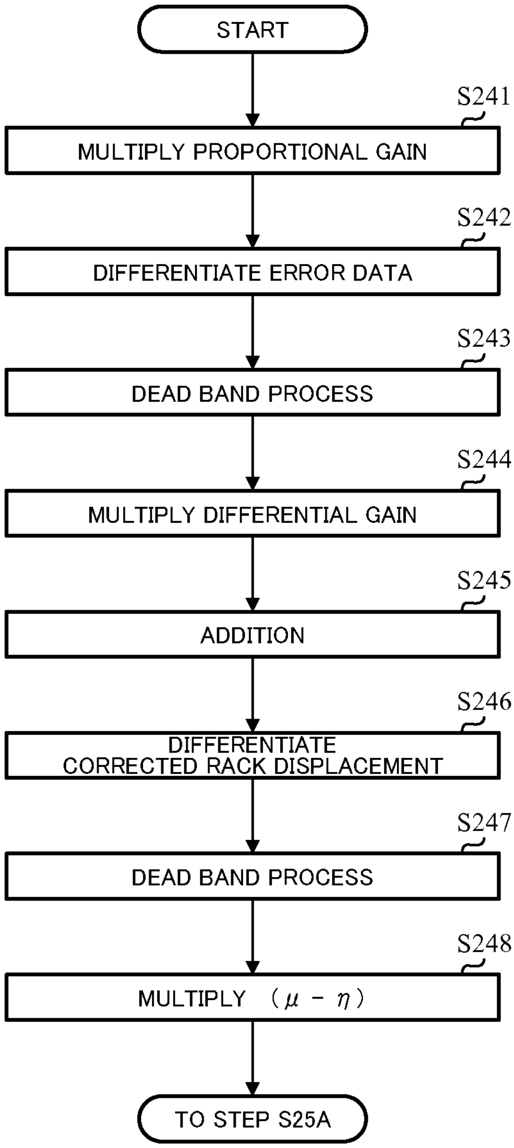
START
S241
MULTIPLY PROPORTIONAL GAIN
S242
DIFFERENTIATE ERROR DATA
S243
DEAD BAND PROCESS
S244
MULTIPLY DIFFERENTIAL GAIN
S245
ADDITION
S246
DIFFERENTIATE CORRECTED RACK DISPLACEMENT
S247
DEAD BAND PROCESS
S248
MULTIPLY (μ − η)
TO STEP S25A

**FIG.50**

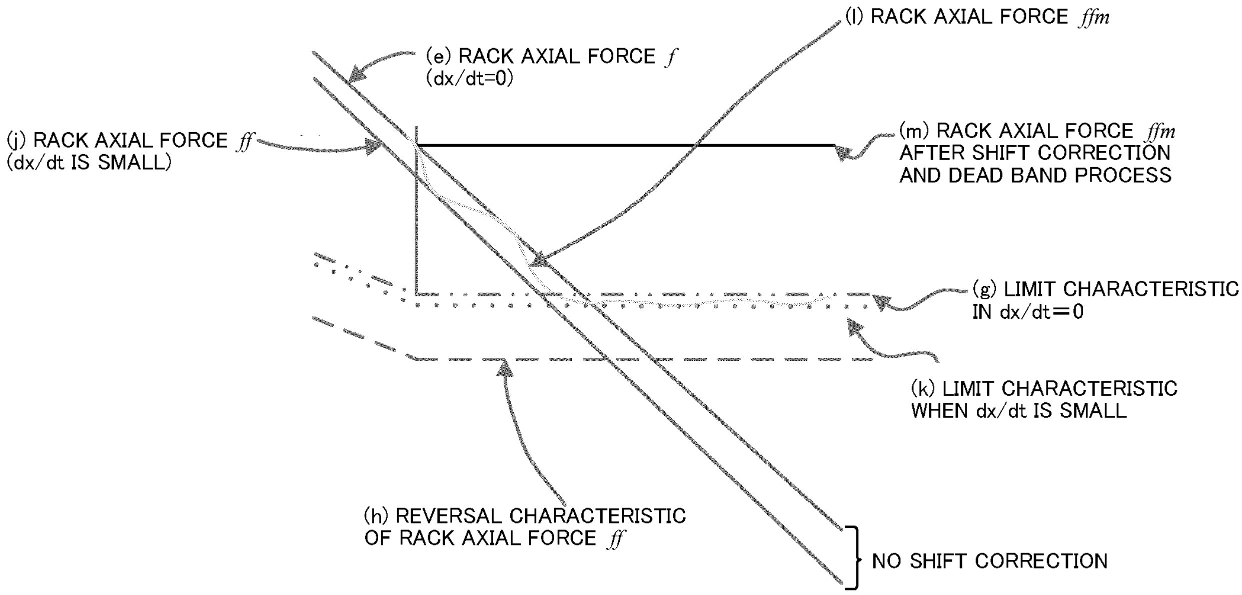
(l) RACK AXIAL FORCE ffm
(e) RACK AXIAL FORCE f
(dx/dt=0)
(j) RACK AXIAL FORCE ff
(dx/dt IS SMALL)
(m) RACK AXIAL FORCE ffm
AFTER SHIFT CORRECTION
AND DEAD BAND PROCESS
(g) LIMIT CHARACTERISTIC
IN dx/dt=0
(k) LIMIT CHARACTERISTIC
WHEN dx/dt IS SMALL
(h) REVERSAL CHARACTERISTIC
OF RACK AXIAL FORCE ff
NO SHIFT CORRECTION

FIG.51

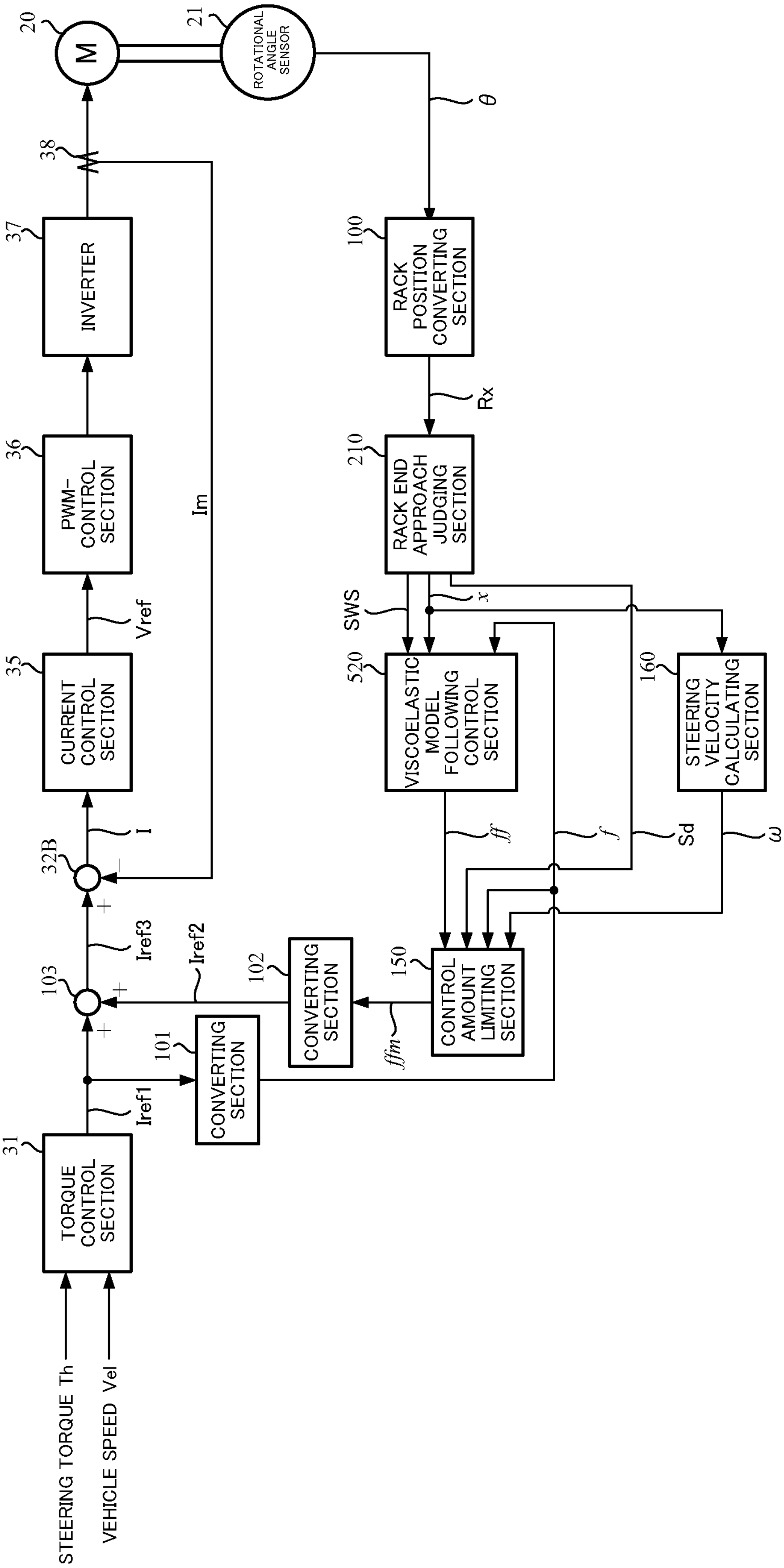
STEERING TORQUE Th
VEHICLE SPEED Vel
TORQUE CONTROL SECTION
31
Iref1
CONVERTING SECTION
101
CONVERTING SECTION
102
Iref2
103
Iref3
32B
I
CURRENT CONTROL SECTION
35
Vref
PWM-CONTROL SECTION
36
INVERTER
37
38
Im
M
20
ROTATIONAL ANGLE SENSOR
21
θ
RACK POSITION CONVERTING SECTION
100
Rx
RACK END APPROACH JUDGING SECTION
210
SWS
x
VISCOELASTIC MODEL FOLLOWING CONTROL SECTION
520
ff
f
Sd
STEERING VELOCITY CALCULATING SECTION
160
ω
CONTROL AMOUNT LIMITING SECTION
150
ffm

FIG.52

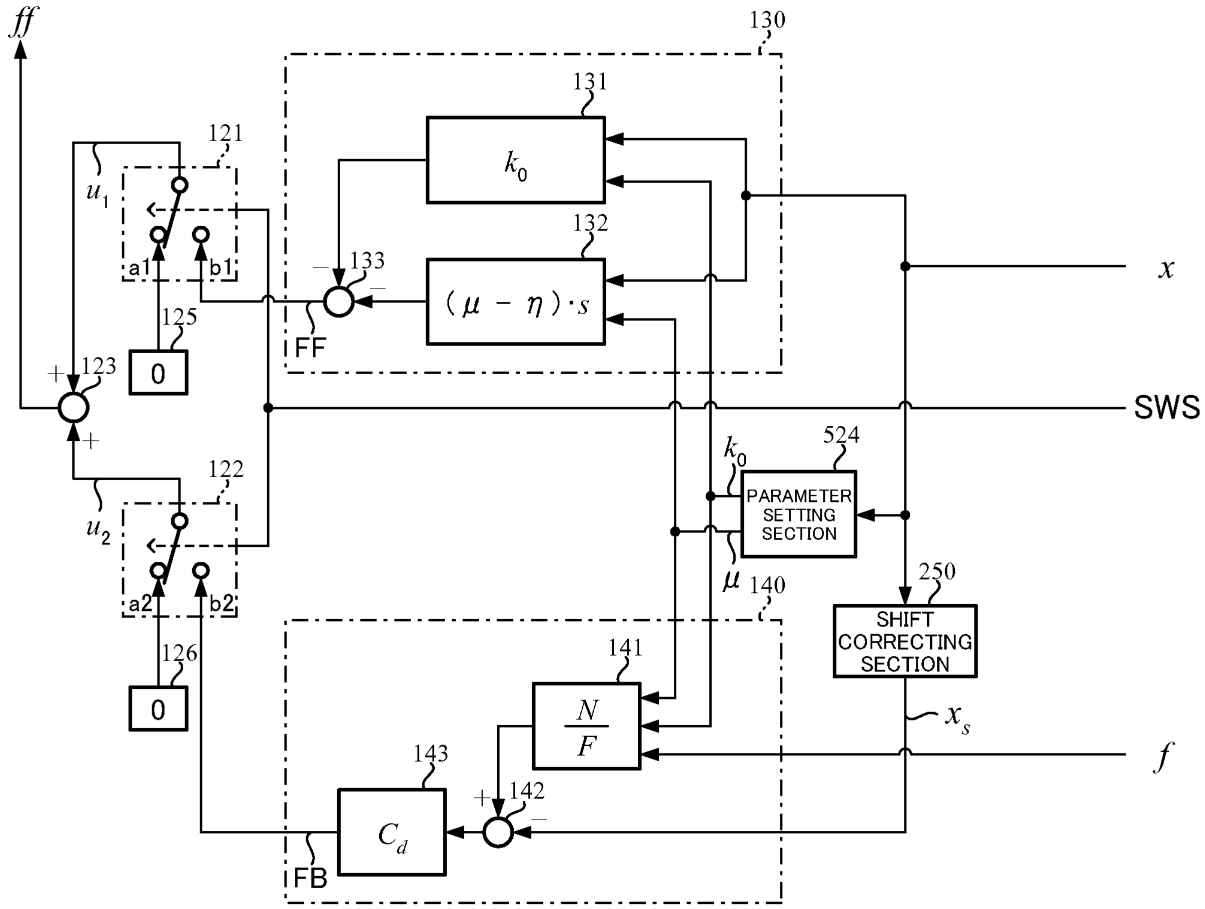
ff
130
131
$k_0$
121
$u_1$
132
133
a1
b1
$(\mu - \eta)\cdot s$
x
125
FF
123
0
SWS
524
$k_0$
122
PARAMETER SETTING SECTION
$u_2$
a2
b2
$\mu$
140
250
SHIFT CORRECTING SECTION
126
141
0
$\frac{N}{F}$
$x_s$
f
143
142
$C_d$
FB

FIG.53

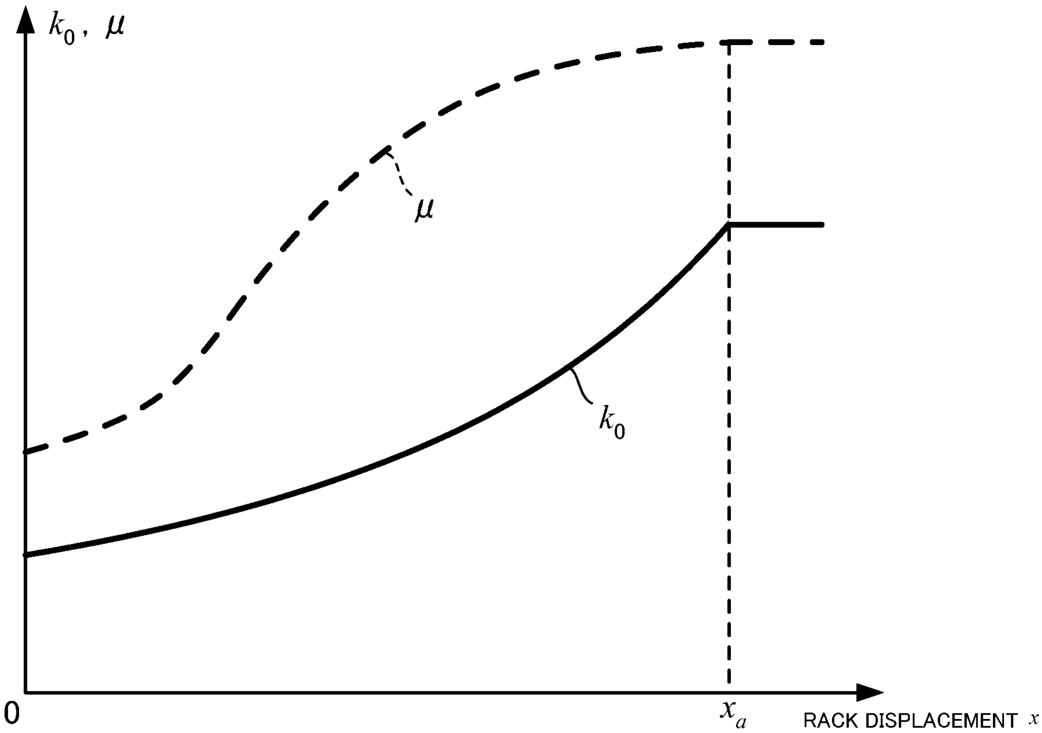
$k_0$, $\mu$
$\mu$
$k_0$
0
$x_a$
RACK DISPLACEMENT $x$

FIG.54

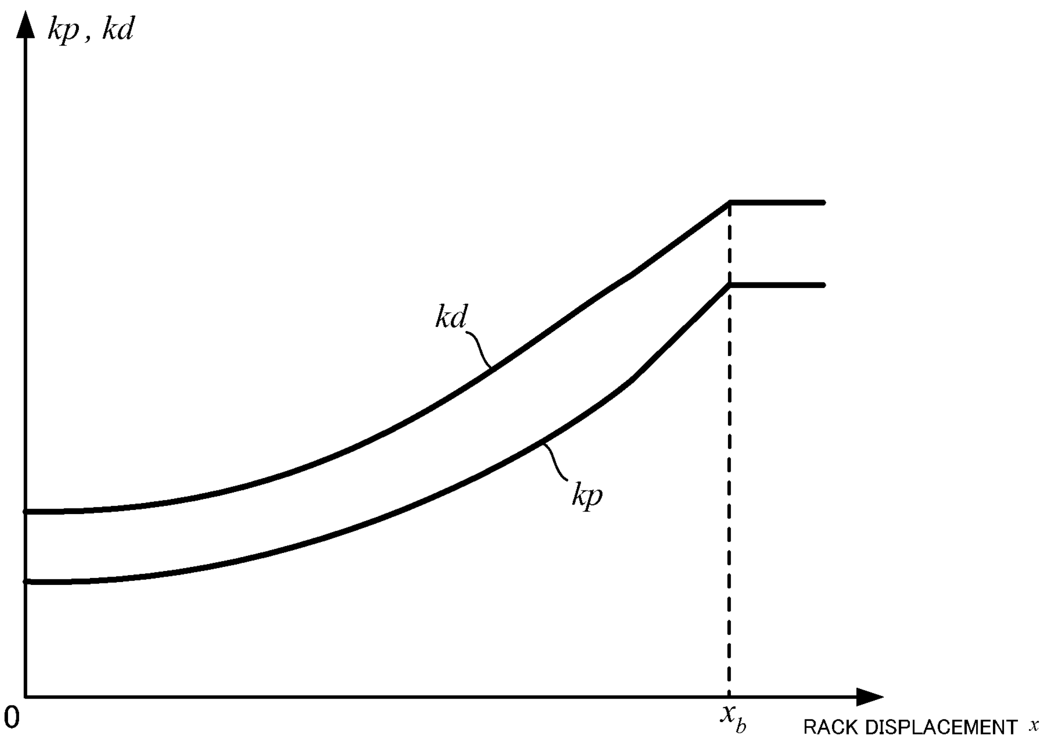
$kp$, $kd$
$kd$
$kp$
0
$x_b$
RACK DISPLACEMENT $x$

## INTERNATIONAL SEARCH REPORT

International application No.
PCT/JP2017/042014

A. CLASSIFICATION OF SUBJECT MATTER
Int. Cl. B62D6/00(2006.01)i, B62D5/04(2006.01)i, B62D101/00(2006.01)n, B62D113/00(2006.01)n, B62D117/00(2006.01)n

According to International Patent Classification (IPC) or to both national classification and IPC

B. FIELDS SEARCHED

Minimum documentation searched (classification system followed by classification symbols)
Int. Cl. B62D6/00, B62D5/04, B62D101/00, B62D113/00, B62D117/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2017-171062 A (NSK LTD.) 28 September 2017, claims 6, 8, fig. 3-37 (Family: none) | 1-19 |
| Y | JP 2017-165306 A (NSK LTD.) 21 September 2017, claim 1, paragraphs [0031], [0032], fig. 3-20 (Family: none) | 1-19 |
| Y | WO 2016/104571 A1 (NSK LTD.) 30 June 2016, claims 5, 6, fig. 3-50 & US 2017/0334481 A1, claims 45, 56, fig. 3-54 & WO 2016/104568 A1 & WO 2016/104569 A1 & WO 2016/104570 A1 & WO 2016/104568 A1 & EP 3222497 A1 | 1-19 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08.02.2018 | 20.02.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2017/042014

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2003-529480 A (DELPHI TECHNOLOGIES, INC.) 07 October 2003, paragraph [0009], fig. 3, 7 & US 6408235 B1, column 3, lines 48-51, column 4, lines 13-17, fig. 3, 7 & WO 2001/020412 A1 | 1-19 |
| A | JP 2008-284889 A (NSK LTD.) 27 November 2008, paragraph [0102], fig. 5 (Family: none) | 1-19 |
| E, X | JP 2017-210216 A (NSK LTD.) 30 November 2017, claims 1-19, fig. 3-54 (Family: none) | 1-19 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H64417 B
- JP 4115156 B


### Non-patent literature cited in the description


- Elementary Mechanics for Elastic Membrane and Viscoelasticity. **KENKICHI OHBA.** Engineering Sciences & Technology. Kansai University, 2010, vol. 17
- **HAJIME MAEDA ; TOSHIHARU SUGIE.** System Control Theory for Advanced Control. Asakura Shoten